(19) 

**Europäisches Patentamt**
**European Patent Office**
**Office européen des brevets**

(11) **EP 4 745 804 A2**

(12) **EUROPEAN PATENT APPLICATION**

(43) Date of publication:
**20.05.2026  Bulletin 2026/21**

(21) Application number: **26159795.9**

(22) Date of filing: **02.04.2025**

(51) International Patent Classification (IPC):
*G06F 17/16* *(2006.01)*

(52) Cooperative Patent Classification (CPC):
**G06F 17/16**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.04.2024  US 202463573148 P**
**12.06.2024  US 202463659047 P**
**25.09.2024  US 202463698670 P**

(62) Document number(s) of the earlier application(s) in accordance with Art. 76 EPC:
**25167926.2 / 4 629 105**

(71) Applicant: **Google LLC**
**Mountain View, CA 94043 (US)**

(72) Inventors:
• **CHAKRABORTY, Indranil**
**Mountain View, California, 94043 (US)**
• **LIU, Ming Gang**
**Mountain View, California, 94043 (US)**
• **SUBRAMANIAN, Suvinay**
**Mountain View, California, 94043 (US)**

• **NAGARAJAN, Rahul**
**Mountain View, California, 94043 (US)**
• **HEDLUND, Matthew Leever**
**Sun Prairie, Wisconsin, 53590 (US)**
• **WILLCOCK, Jeremiah James**
**Mountain View, California, 94043 (US)**
• **HECHTMAN, Blake**
**Mountain View, California, 94043 (US)**
• **MAROLIA, Pratik M.**
**Mountain View, California, 94043 (US)**
• **YAZDANBAKHSH, Amir**
**Mountain View, California, 94043 (US)**
• **MAGYAR, Albert Forte**
**Mountain View, California, 94043 (US)**
• **CLARK, Christopher Aaron**
**Mountain View, California, 94043 (US)**

(74) Representative: **Betten & Resch**
**Patent- und Rechtsanwälte PartGmbB**
**Maximiliansplatz 14**
**80333 München (DE)**

Remarks:
This application was filed on 20-02-2026 as a divisional application to the application mentioned under INID code 62.

(54) **STRUCTURED SPARSE MATRIX ACCELERATION IN SYSTOLIC ARRAYS**

(57)    Methods, systems, and apparatus, including computer-readable storage media for hardware-accelerated fine-grained sparse computation. The accelerator provides for improved performance for structured fine-grained sparse AI workloads, for example by accelerating sparse matrix multiplication required to execute or train AI models. Sparse data is compressed to remove zero-valued elements before being streamed into a matrix multiplication unit (MXU) of the accelerator. The accelerator stores a gains matrix, which can be the matrix for multiplying with the received input matrix. The accelerator uses an index array mapping locations of elements in the compressed matrix with locations of elements in the matrix's precompressed form, to generate a multiplier matrix from the gains matrix. Aspects of the disclosure also provide for accelerated gains matrix loading in a hardware accelerator or other type of processor. The accelerator can load the gains matrix more efficiently in a compressed form, and then un-compress the matrix once loaded.

**EP 4 745 804 A2**

Compiler 185

Processing Array
110

MXU 100

Structured
Sparse Matrices
116

User Computing
Device
120

Vector Processing Unit
195

Dense Matrices
118

Compression Hardware
900

Output
122

Hardware
Accelerator
105

Workload
115

FIG. 1

**Description**

CROSS REFERENCE TO RELATED APPLICATIONS

This application claims the benefit of the filing dates of U.S. Provisional Patent Application No. 63/573,148, entitled "STRUCTURED SPARSE MATRIX ACCELERATION IN SYSTOLIC ARRAYS," filed April 2, 2024, U.S. Provisional Patent Application No. 63/659,047, entitled "BLOCK QUANTIZATION WITH STRUCTURED SPARSITY FOR HARDWARE ACCELERATORS," filed June 12, 2024, and U.S. Provisional Patent Application No. 63/698,670, entitled "HARDWARE ACCELERATION WITH BLOCK QUANTIZED MATRIX MULTIPLICATION SCALING," filed September 25, 2024, all of which are incorporated herein by reference.

BACKGROUND

The computational needs for artificial intelligence (AI) models and applications continue to grow, driven in recent times by the rise of large language models (LLMs) and other generative models. AI workloads may have either dense or sparse data that are processed as part of executing those workloads. The sparsity of data refers to how many zero-valued elements are present in a data structure, such as the number zero or other equivalent representations of zero forming elements of the data structure. Sparsity of data can be represented as a ratio or percentage of zero-valued or non-zero-valued elements in the data, referred to as the sparsity factor of the data. Workloads that are not considered sparse to some proportion or ratio are referred to as dense workloads.

Sparse workloads can be categorized, for example, as exhibiting coarse-grained sparsity, fine-grained sparsity, or structured fine-grained sparsity. Coarse-grained sparsity refers to sparse workloads in which sparsity occurs in contiguous groups or sub-sections of a data structure. Fine-grained sparsity refers to sparse workloads containing individual zero-valued elements throughout a data structure, but not in contiguous groups or sub-sections. Structured fine-grained sparsity refers to fine-grained sparsity in which a data structure contains zero-valued elements of different patterns of sparsity.

The execution of some AI workloads can be accelerated depending on the nature and degree of sparsity in the data of the workload. Sparsity patterns are often dynamic, meaning that the location of zero-valued elements can change. Techniques to accelerate fine-grained and structured fine-grained sparse workloads are often limited to small subsets of sparse workloads with specific sparsity factors and have computational trade-offs in accelerating dense workloads on the same hardware.

A block data type is a lossy and quantized approximation of a wider floating point, such as a 32-bit floating-point (FP32) tensor. Block data type values are approximated using a mantissa (also referred to as a significand) plus a shared scaling factor across a block of values. To obtain the original values, blocks of mantissas can be multiplied by the shared scaling factor. Data in the block data type can be referred to as block-scaled data.

SIMD (single instruction, multiple data) is a data processing paradigm in which a processing device performs the same operation on multiple data inputs, in parallel. Devices configured for SIMD processing can transfer data between components of the devices through processing lanes. Each processing lane can include a number of sub-lanes. A SIMD-configured device can be represented in two dimensions, e.g., by the number of implemented sub-lanes in each processing lane, times the number of processing lanes in the device. The width of the device can be measured as the number of implemented processing lanes implemented on the device. Example numbers of processing lanes can be 64, 128, 256, and so on. Operations performed on data along the same processing lane can be done more efficiently, e.g., with fewer reads and writes, than operations performed on data across different processing lanes of a SIMD-configured device.

Block quantization is a technique for representing data as blocks of data elements sharing a scaling factor. The block-scaled elements are generally in a lower precision data format relative to the format of the data before block quantization. For example, rather than individually representing floating-point values each with a respective exponent and mantissa or significand, the numbers can be represented by a scaling factor and a block of data elements, which when scaled by the scaling factor returns the original floating-point values. The block size of a block refers to the number of values or elements in the block. An example block size can be 8 or 16 elements. Data that is block quantized can be referred to as block-scaled data, for example because data is scaled by a scaling factor as part of performing block quantization.

SUMMARY

Aspects of the disclosure are directed to hardware acceleration of both dense and structured fine-grained sparse workloads using a hardware accelerator. In some examples, the workloads are also block-scaled, as described in more detail herein. The accelerator provides for improved performance for structured fine-grained sparse AI workloads, for example by accelerating sparse matrix multiplication required to execute or train AI models. Matrix multiplication or other computations with sparse data inputs can be accelerated in hardware, while allowing for the multiplication of dense inputs to be performed on the same data path and hardware.

Sparse data is compressed to remove some or all zero-valued elements before being streamed into a matrix multiplication unit (MXU) of the accelerator. Sparse data is compressed depending on, for example, at least the sparsity structure of the data and different hardware implementations. The input matrices can be further provided in a block data type format, in which blocks of mantissas are represented with a single shared scaling factor.

The accelerator stores a gains matrix, which can be the matrix for multiplying with the received input matrix, e.g., the gains matrix and the input matrix are operands for a matrix multiplication. The accelerator uses an index array (also sometimes referred to as a bitmask) that maps locations of elements in the compressed matrix with locations of elements in the matrix's pre-compressed form, to generate a multiplier matrix from the gains matrix. The hardware accelerator implements a number of multiplexor circuits to generate the multiplier matrix with elements that are multiplied with corresponding elements in the input matrix, when the input matrix and the gains matrix are multiplied together.

The multiplier matrix, when multiplied with the compressed matrix, generates the same result as if the uncompressed input matrix were multiplied with the gains matrix. The sparsity factor of the input matrix is used to generate the index array, for example using top-k compression hardware to identify the largest $k$ values in segments of the input matrix. The resulting multiplication maintains accuracy while allowing for less data to be streamed into the accelerator, which reduces the time needed to perform the multiplication. The same result is generated at least because the uncompressed input matrix contains zero-valued elements that do not affect the value of the output product matrix, and which are removed by the compression hardware during processing. After multiplication, elements of the product matrix generated from the multiplication can be shifted or casted to their non-block-scaled version, in accordance with a common scaling factor.

Aspects of the disclosure provide for accelerated gains matrix loading in a hardware accelerator or other type of processor. The hardware accelerator can receive a compressed gains matrix and an index array mapping values between the compressed gains matrix and locations of the elements in the compressed gains matrix. The gains matrix may also be block-scaled, in some examples. The accelerator can load the gains matrix more efficiently in a compressed form, and then uncompress the matrix using the index array once loaded. The accelerator implements a number of multiplexor circuits configured to receive the index array and expand an input matrix based on locations mapped with the index array. The amount of data loaded into the accelerator is reduced overall, while allowing for the accelerator's access to an entire gains matrix for use during matrix multiplication with inputs that are streamed into the accelerator.

Aspects of the disclosure are directed to processing block-scaled data on processing devices, where the block size of the data is smaller than the number of implemented processing lanes on the devices. An example process performed by the devices is matrix multiplication. The processing device is configured to load pre-computed scaling factors for static data, and to generate scaling factors for dynamic data as part of the matrix multiplication pipeline for the device. The processing device is configured to cause scaling factors of different blocks of either operand matrix being multiplied to be applied to corresponding blocks during multiplication. The processing device can generate correct matrix multiplication products of block-scaled input, even when the block size is more granular or smaller than the number of processing lanes.

Aspects of the disclosure relate to generating scaling factors for input matrices received by a SIMD-configured processing device. While static data, e.g., trained weights, can be block-scaled according to an offline process, dynamic data, e.g., data that changes from operation to operation, such as output activations of a neural network layer, require corresponding scaling factors to be computed before the processing device can block-scale the data. Other implementations of these and other aspects include corresponding computer systems, apparatus, and computer program products recorded on one or more computer storage devices, each configured to perform the actions of the methods.

Acceleration of matrix multiplication and gains matrix loading can improve the throughput of weight-stationary systolic array-based hardware accelerators, at least because the amount of data needed to stream or load into the accelerator is reduced, without substantially affecting the accuracy of the resulting multiplication. A hardware accelerator can implement both sparse matrix multiplication and gains matrix loading as described herein at the same time, decreasing processing time for a workload not only when input is multiplied with a loaded gains matrix, but also decreasing processing time to swap out the gains matrix loaded in the hardware accelerator between computations.

Aspects of the disclosed technology may take the form of a device, method, non-transitory media or system. For example, an aspect of the disclosed technology may take the form of a processing device for accelerating matrix multiplication comprising: a processing cell configured to: receive a compressed input matrix, wherein the compressed input matrix is compressed from a sparse input matrix in accordance with a sparsity factor of non-zero-valued to zero-valued elements in the sparse input matrix; store a gains matrix; generate, from the gains matrix, a multiplier matrix, wherein the multiplier matrix comprises first elements from the gains matrix that are multiplied with second elements in the sparse input matrix, when the sparse input matrix is multiplied with the gains matrix; and generate, from the multiplier matrix and the compressed input matrix, a result matrix based on or equal to a product of the sparse input matrix and the gains matrix.

In accordance with this aspect of the disclosed technology, to generate the multiplier matrix, the processing cell is configured to: receive an index matrix comprising third elements corresponding to locations of elements of the compressed input matrix in the sparse input matrix; and generate the multiplier matrix using one or more multiplexors configured to select one or more first elements from the gains matrix as elements of the multiplier matrix in accordance with one or more third elements in the index matrix. Further in accordance with this aspect of the disclosed technology, the sparsity factor is 1:k, at least one of the one or more multiplexors is a $k$:1 multiplexor configured to multiplex sets of $k$ inputs in accordance with values of the index matrix, and $k$ is an integer greater than one. Furthermore, the sparsity factor is 1 : ($s \times s$), where s is a positive integer greater than one. Further still, the sparsity factor may be $k$: m, where $k$ and m are positive integers and m is greater than $k,$ and in receiving the compressed input matrix, the processing cell is configured to perform top-k comparisons in segments of an uncompressed input matrix of length m to generate the compressed input matrix. Additionally, the processing cell is one of a plurality of processing cells and each processing cell is configured to: receive a respective compressed input matrix that is a portion of an aggregate input matrix; store a respective gains matrix that is a portion of an aggregate gains matrix; and generate a respective result matrix that is a portion of an aggregate result matrix, the aggregate result matrix the product of multiplying the aggregate input matrix and the aggregate gains matrix.

Further in accordance with this aspect of the disclosed technology, for a plurality of processing cycles, the respective gains matrix stored in each processing cell is stationary and is multiplied with a plurality of input matrices that are respectively streamed into each processing cell. Further still, in storing the gains matrix, the processing cell is configured to: receive a compressed gains matrix; receive an index array comprising third elements corresponding to locations of elements of the compressed gains matrix in the gains matrix; generate, using a multiplexor, the gains matrix from the compressed gains matrix, the multiplexor configured to match elements from the compressed gains matrix to corresponding locations in the gains matrix in accordance with the index array; and store the gains matrix in one or more registers of the processing cell. Additionally, the processing cell is one of a plurality of processing cells arranged in a systolic array comprising one or more rows and one or more columns, and each of the processing cells is configured to receive a respective portion of an aggregate gains matrix based on the row and column the processing cell is located in the systolic array. Further still, the processing cell is further configured to: perform dense matrix multiplication on a dense input matrix and the gains matrix.

In another aspect, the disclosed technology may take the form of a method comprising receiving, by one or more processors, a compressed input matrix, wherein the compressed input matrix is compressed from a sparse input matrix in accordance with a structured sparsity factor of non-zero-valued to zero-valued elements in the sparse input matrix; storing, by the one or more processors, a gains matrix; generating, by the one or more processors and from the gains matrix, a multiplier matrix comprising elements from the gains matrix that are multiplied with elements in the sparse input matrix, when the sparse input matrix and the gains matrix are multiplied; and generating, by the one or more processors and from the multiplier matrix and the compressed input matrix, a result matrix that is equal to the product of the sparse input matrix and the gains matrix.

In accordance with this aspect of the disclosed technology, generating the multiplier matrix comprises receiving an index matrix comprising elements corresponding to locations of elements of the compressed input matrix in the sparse input matrix; and generating the multiplier matrix using one or more multiplexors configured to select elements from the gains matrix as elements of the multiplier matrix in accordance with elements in the index matrix. Further, the sparsity factor is 1:k, at least one of the one or more multiplexors is a $k$:1 multiplexor configured to multiplex sets of $k$ inputs in accordance with values of the index matrix, and $k$ is an integer greater than one. Further still, the sparsity factor may be 1 : ($s \times s$), where s is a positive integer greater than one. Further still, the sparsity factor may be $k: m,$ where $k$ and m are positive integers and m is greater than $k,$ and receiving the compressed input matrix comprises performing top-k comparisons in segments of an uncompressed input matrix of length m to generate the compressed input matrix. Additionally, the method may comprise receiving, by the one or more processors, a respective compressed input matrix that is a portion of an aggregate input matrix; storing, by the one or more processors, a respective gains matrix that is a portion of an aggregate gains matrix; and generating, by the one or more processors, a respective result matrix that is a portion of an aggregate result matrix, the aggregate result matrix the product of multiplying the aggregate input matrix and the aggregate gains matrix.

Further in accordance with this aspect of the disclosed technology, storing the gains matrix comprises: receiving a compressed gains matrix; receiving an index array comprising elements corresponding to locations of elements of the compressed gains matrix in the gains matrix; generating, using a multiplexor, the gains matrix from the compressed gains matrix, the multiplexor configured to match elements from the compressed gains matrix to corresponding locations in the gains matrix in accordance with the index array; and storing the gains matrix in one or more registers. Further, the method comprises performing, by the one or more processors, dense matrix multiplication on a dense input matrix and the gains matrix.

In another aspect, the disclosed technology may take the form of one or more non-transitory storage media, storing instructions that are operable, when executed by one or more processing cells of a matrix multiplication unit, cause the matrix multiplication unit to perform operations comprising: receiving a compressed input matrix, wherein the compressed input matrix is compressed from a sparse input matrix in accordance with a structured sparsity factor of non-zero-valued to zero-valued elements in the sparse input matrix; storing a gains matrix; generating, from the gains matrix, a multiplier matrix comprising elements from the gains matrix that are multiplied with elements in the sparse input matrix, when the sparse input matrix and the gains matrix are multiplied; and generating, from the multiplier matrix and the compressed input matrix, a result matrix that is equal to the product of the sparse input matrix and the gains matrix. Further in accordance with this aspect of the disclosed technology, the operations further comprise: receiving an index matrix comprising elements corresponding to locations of elements of the compressed input matrix in the sparse input matrix; and generating the multiplier matrix using a multiplexor configured to select elements from the gains matrix as elements of the multiplier matrix in accordance with elements in the index matrix.

In another aspect, the disclosed technology may take the form of a processing device for accelerating matrix multiplication, comprising: a processing cell configured to: receive a compressed and block-scaled input matrix, wherein the input matrix is compressed from a sparse input matrix in accordance with a sparsity factor of non-zero-valued to zero-valued elements in the sparse input matrix and block-scaled in accordance with a shared scaling factor for elements in the input matrix; generate, from a gains matrix, a multiplier matrix, wherein the multiplier matrix comprises elements from the gains matrix that are multiplied with elements from the sparse input matrix; and generate, from the multiplier matrix and the compressed input matrix, a result matrix that is equal to the product of the sparse input matrix and the gains matrix. In accordance with this aspect of the disclosed technology, in generating the multiplier matrix, the processing cell may be configured to: receive a bitmask comprising elements corresponding to locations of elements of the compressed input matrix in the sparse input matrix; and generate the multiplier matrix using one or more multiplexors configured to select elements from the gains matrix as elements of the multiplier matrix in accordance with elements in the bitmask. Further still, the processing cell may further be configured to store the gains matrix; and in generating the multiplier matrix, the processing cell may further be configured select elements from the gains matrix using the bitmask. Further still, in storing the gains matrix, the processing cell is configured to store a shared scaling factor for block-scaled elements of the gains matrix; and in generating the result matrix, the processing cell is configured to scale the selected elements in accordance with the shared scaling factor for block-scaled elements in the gains matrix. In addition, the processing cell may be configured to: receive one or more elements from the input matrix and one or more elements from the gains matrix; perform a dot product operation on the one or more elements from the input matrix and one or more elements from the gains matrix to generate an output matrix; generate a combined scaling factor from the shared scaling factor for elements in the input matrix and the shared scaling factor for elements in the gains matrix; and convert the output value to a scaled output value in accordance with the combined scaling factor. Further still, the combined scaling factor may be represented by a quantity of bits; and in converting the output value to the scaled output value, the processing cell is configured to bit-shift the output value by the quantity of bits in the combined scaling factor. In addition, the combined scaling factor may be represented by a data type; and in converting the output value to the scaled output value, the processing cell is configured to cast the output value to be represented by the data type.

Further in accordance with this aspect of the disclosed technology, the block-scaled and compressed input matrix comprises blocks of elements of data type INT4, each block comprising sixteen non-zero valued elements. Further, the sparsity factor is $k{:}m$, where $k$ and $m$ are positive integers and m is greater than $k$. Further still, the processing cell is one of a plurality of processing cells and each processing cell is configured to: receive a respective compressed and block-scaled input matrix that is a portion of an aggregate input matrix; store a respective gains matrix that is a portion of an aggregate gains matrix; and generate a respective result matrix that is a portion of an aggregate result matrix that is the product of multiplying the aggregate input matrix and the aggregate gains matrix. Further still, for a plurality of processing cycles, the respective gains matrix stored in each processing cell is stationary and is multiplied with a plurality of input matrices that are streamed into the processing cell. In addition, the processing cell is one of a plurality of processing cells arranged in a systolic array comprising one or more rows and one or more columns, and each of the processing cells is configured to receive a respective portion of an aggregate gains matrix based on the row and column where the processing cell is located in the systolic array.

The disclosed technology may also take the form of a system comprising: a processing device comprising a plurality of processing cells, wherein a processing cell of the plurality of processing cells is configured to: receive a compressed and block-scaled input matrix, wherein the input matrix is compressed from a sparse input matrix in accordance with a sparsity factor of non-zero-valued to zero-valued elements in the sparse input matrix and block-scaled in accordance with a shared scaling factor for elements in the input matrix; generate, from a gains matrix, a multiplier matrix, wherein the multiplier matrix comprises elements from the gains matrix that are multiplied with elements from the sparse input matrix; and generate, from the multiplier matrix and the compressed input matrix, a result matrix that is equal to the product of the sparse input matrix and the gains matrix. In accordance with this aspect of the disclosed technology in generating the multiplier matrix, the processing cell is configured to: receive a bitmask comprising elements corresponding to locations of elements of the compressed input matrix in the sparse input matrix; and generate the multiplier matrix using one or more multiplexors configured to select elements from the gains matrix as elements of the multiplier matrix in accordance with elements in the bitmask. Further in accordance with this aspect of the disclosed technology, the processing cell is further configured to store the gains matrix; and in generating the multiplier matrix, the processing cell is configured select elements from the gains matrix using the bitmask. Further still, in storing the gains matrix, the processing cell is configured to store a shared scaling factor for block-scaled elements of the gains matrix; and in generating the result matrix, the processing cell is configured to scale the selected elements in accordance with the shared scaling factor for block-scaled elements in the gains matrix. Further still, the processing cell may be further configured to: receive one or more elements from the input matrix and one or more elements from the gains matrix; perform a dot product operation on the one or more elements from the input matrix and one or more elements from the gains matrix to generate an output value; generate a combined scaling factor from the shared scaling factor for elements in the input matrix and the shared scaling factor for elements in the gains matrix; and convert the output value to a scaled output value in accordance with the combined scaling factor. In addition, the combined scaling factor is represented by a quantity of bits; and in converting the output value to the scaled output value, the processing cell is configured to bit-shift the output value by the quantity of bits in the combined scaling factor. Further still, the combined scaling factor is represented by a data type; and in converting the output matrix to the result matrix, the processing cell is configured to cast the output matrix to be represented by the data type.

The disclosed technology may also take the form of a method comprising: receiving, by one or more processors, a compressed and block-scaled input matrix, wherein the input matrix is compressed from a sparse input matrix in accordance with a sparsity factor of non-zero-valued to zero-valued elements in the sparse input matrix and block-scaled in accordance with a shared scaling factor for elements in the input matrix; generating, by the one or more processors and from a gains matrix, one or more multiplier matrices, wherein the multiplier matrix comprises elements from the gains matrix that are multiplied with elements from the sparse input matrix; and generating, by the one or more processors and from the one or more multiplier matrices and the compressed input matrix, a result matrix that is equal to the product of the sparse input matrix and the gains matrix.

In another aspect, the disclosed technology may take the form of a processing device having a plurality of processing lanes, the number of processing lanes being greater than a block size for an input block of a block-scaled input matrix, the processing device configured to: receive an input block from the plurality of processing lanes; generate one or more input scale factors for the input block; load a gains block of a block-scaled gains matrix and one or more gains scale factors; and generate result data scaled according to at least both the one or more input scale factors and the one or more gains scale factors by multiplying the input block and the gains block.

Further in accordance with this aspect of the disclosed technology, the processing device is further configured to: receive a plurality of input blocks and a plurality of input scale factors; load a plurality of gains blocks and a plurality of gains scale factors; generate a plurality of result data blocks by multiplying respective input blocks of the plurality of input blocks and gains blocks of the plurality of gains blocks; and generate result data from the plurality of result data blocks. Furthermore, the processing device is further configured to generate the one or more input scale factors in a dense format and a replicated format, the dense format comprises a copy of the one or more input scale factors for each B processing lanes of the plurality of processing lanes, where B is equal to the block size of the input block, and the replicated format comprises a copy of the one or more input scale factors for each processing lane of a group of $B$ processing lanes. Further, the processing device is further configured to receive block-scaled data elements of the input block across multiple processing lanes and the scale factor for the input block from one of the multiple processing lanes. Further still, at least one processing lane comprises a plurality of sub-lanes, and in generating the input scale factor, the processing device is configured to: receive an un-scaled input block of un-scaled data elements; and generate the input scale factor by performing a scale factor reduction on the un-scaled input block in a dimension corresponding to the plurality of sub-lanes. In addition, the un-scaled data elements comprise dynamic data and the loaded gains block comprises static data.

Further in accordance with this aspect of the disclosed technology, at least one processing lane comprises a plurality of sub-lanes, and the processing device is further configured to: receive un-scaled data elements; receive a target format for block-scaled data; transpose the un-scaled data elements from a dimension corresponding to the plurality of lanes to a dimension corresponding to the plurality of sub-lanes; determine a maximum-valued or maximum-absolute-valued data element of the un-scaled data elements; and determine a scale factor for the maximum-valued or maximum-absolute-valued data element to divide the un-scaled data elements into a block-scaled element within the target format. Furthermore, the un-scaled data elements are output activations of a neural network layer. In addition, the processing device comprises a matrix-multiply unit (MXU) comprising a weight-stationary systolic array of processing cells, wherein a processing cell of the systolic array comprises a data register for storing the gains block and a scale factor register for storing the gains scale factor.

The disclosed technology may also take the form of a method comprising: receiving, by a processing device, an input block from a plurality of processing lanes of the processing device, the number of processing lanes being greater than a block size for an input block of a block-scaled input matrix; generating, by the processing device, one or more input scale factors for the input block; load a gains block of a block-scaled gains matrix and one or more gains scale factors; and generate result data scaled according to at least both the one or more input scale factors and the one or more gains scale factors by multiplying the input block and the gains block. Further in accordance with this aspect of the disclosed technology, the method comprises: receiving, by the processing device, a plurality of input blocks and a plurality of input scale factors; loading, by the processing device, a plurality of gains blocks and a plurality of gains scale factors; generating, by the processing device, a plurality of result data blocks by multiplying respective input blocks of the plurality of input blocks and gains blocks of the plurality of gains blocks; and generating, by the processing device, result data from the plurality of result data blocks. Further, the method may also comprise: generating, by the processing device, the one or more input scale factors in an dense format and a replicated format, the dense format comprising a copy of the one or more input scale factors for each $B$ processing lanes of the plurality of processing lanes, where $B$ is equal to the block size of the input block, and the replicated format comprising a copy of the one or more input scale factors for each processing lane of a group of $B$ processing lanes. In addition, the method may also comprise receiving, by the processing device, block-scaled data elements of the input block across multiple processing lanes and the scale factor for the input block from one of the multiple processing lanes.

The method may also comprise receiving, by the processing device, an un-scaled input block of un-scaled data elements; and generating, by the processing device, the input scale factor by performing a scale factor reduction on the un-scaled input block in a dimension corresponding to a plurality of sub-lanes at least one processing lane of the plurality of processing lanes. Further, the un-scaled data elements comprise dynamic data and the loaded gains block comprises static data. Further still, the method may also comprise receiving, by the processing device, un-scaled data elements; receiving, by the processing device, a target format for block-scaled data; transposing, by the processing device, the un-scaled data elements from a dimension corresponding to the plurality of lanes to a dimension corresponding to the plurality of sub-lanes; determining, by the processing device, a maximum-valued or maximum-absolute-valued data element of the un-scaled data elements; and determining, by the processing device, a scale factor for the maximum-valued or maximum-absolute-valued data element to divide the un-scaled data elements into a block-scaled element within the target format. Further still, the un-scaled data elements are output activations of a neural network layer.

The disclosed technology may also take the form of a system comprising: one or more processing devices configured to: receive an input block from the plurality of processing lanes; generate one or more input scale factors for the input block; load a gains block of a block-scaled gains matrix and one or more gains scale factors; and generate result data scaled according to at least both the one or more input scale factors and the one or more gains scale factors by multiplying the input block and the gains block. The system may also be configured to: receive a plurality of input blocks and a plurality of input scale factors; load a plurality of gains blocks and a plurality of gains scale factors; generate a plurality of result data blocks by multiplying respective input blocks of the plurality of input blocks and gains blocks of the plurality of gains blocks; and generate result data from the plurality of result data blocks. Further, the system may be configured to generate the one or more input scale factors in an dense format and a replicated format, the dense format comprises a copy of the one or more input scale factors for each B processing lanes of the plurality of processing lanes, where $B$ is equal to the block size of the input block, and the replicated format comprises a copy of the one or more input scale factors for each processing lane of a group of B processing lanes.

BRIEF DESCRIPTION OF THE DRAWINGS

FIG. 1 is a block diagram of an example hardware accelerator configured for structured sparse workload acceleration, according to aspects of the disclosure.

FIG. 2A is a block diagram illustrating an example of matrices P and Q being multiplied to generate matrix R before compression on a matrix multiplication unit (MXU) of a hardware accelerator configured for structured sparse matrix multiplication, according to aspects of the disclosure.

FIG. 2B is a block diagram illustrating an example of the K dimension of the input matrix before and after compression in accordance with the sparsity factor and aspects of the disclosure.

FIG. 3 is a block diagram illustrating an example of the compression and indexing of the input matrix by the MXU, according to aspects of the disclosure.

FIG. 4A is a block diagram of a processing cell configured for structured sparse computation, according to aspects of the disclosure.

FIG. 4B is a block diagram of an example processing cell configured for sparse matrix multiplication, according to aspects of the disclosure.

FIG. 4C is a block diagram of an example processing cell configured for block-scaled sparse matrix multiplication, according to aspects of the disclosure.

FIG. 5 illustrates an example segment and three partially overlapping windows for emulating a target sparsity factor, according to aspects of the disclosure.

FIG. 6 is a block diagram of an example systolic array implementing the example processing cell of FIG. 4A, according to aspects of the disclosure.

FIG. 7 is a block diagram of a processing cell configured for matrix multiplication when matrices have a 1 : ($s$ x $s$) sparsity factor, according to aspects of the disclosure.

FIG. 8 is a block diagram illustrating an example of accelerator gains matrix loading for the MXU, according to aspects of the disclosure.

FIG. 9 is a block diagram of a processing cell of an MXU supporting sparse gains matrix loading, according to aspects of the disclosure.

FIG. 10 is a block diagram of compression hardware for performing top-k compression on the hardware accelerator implementing the MXU, according to aspects of the disclosure.

FIG. 11 is a flow diagram of an example process for matrix multiplication acceleration with structured fine-grained sparsity on a hardware accelerator, according to aspects of the disclosure.

FIG. 12 is a flow diagram of an example process for accelerating gains matrix loading for sparse matrices on a hardware accelerator, according to aspects of the disclosure.

FIG. 13 is a flow diagram of an example process for structured sparse matrix multiplication with sparsity factor emulation, according to aspects of the disclosure.

FIG. 14 is a flow diagram of an example process for block-scaled sparse matrix multiplication, according to aspects of the disclosure.

FIG. 15 is a flow diagram of an example process for generating a scaled value of a result matrix at a processing cell, according to aspects of the disclosure.

FIG. 16A is a block diagram of block-scaled matrix multiplication of input block operands performed with a contraction dimension that is larger than the block size of the input block operands, according to aspects of disclosure.

FIG. 16B is a block diagram of an example circuit for performing block-scaled matrix multiplication with a contraction dimension that is larger than the block size of the input block operands, according to aspects of the disclosure.

FIG. 17 is a block diagram of an example hardware accelerator implementing processing cores for block-scaled matrix multiplication, according to aspects of the disclosure.

FIG. 18 is a block diagram of data flow through processing lanes between a vector processing unit (VPU) and a matrix-multiplication unit (MXU) of a processing core of FIG. 17.

FIG. 19 is a block diagram of the example scaling factor orchestrator of FIG. 17, according to aspects of the disclosure.

FIG. 20 is a block diagram of an example processing cell, according to aspects of the disclosure.

FIG. 21A is a block diagram of an example scaling factor generator, according to aspects of the disclosure.

FIG. 21B is a block diagram of another example scaling factor generator, according to aspects of the disclosure.

FIG. 22 is a flow diagram of an example process for performing block-scaled multiplication with scaling factor orchestration, according to aspects of the disclosure.

FIG. 23 is a flow diagram of an example process for generating block scaling factors for streamed dynamic data, according to aspects of the disclosure.

FIG. 24 is a block diagram illustrating one or more model architectures, such as for deployment in a data center housing a hardware accelerator on which the deployed models will execute with structured sparse matrix multiplication, according to aspects of the disclosure.

FIG. 25 is a block diagram of an example computing environment for implementing a system including a hardware accelerator with the matrix multiplication unit, according to aspects of the disclosure.

DETAILED DESCRIPTION

Overview

Aspects of the disclosure are directed to hardware acceleration of fine-grained sparse workloads using a hardware accelerator. The accelerator provides for improved performance for executing workloads with data exhibiting structured sparsity, by accelerating sparse matrix multiplication for executing those workloads.

The hardware accelerator is configured to receive input matrices in accordance with a structured sparsity factor (also referred to as a sparsity factor). In some examples, the hardware accelerator compresses the input according to the sparsity factor. In other examples, the hardware accelerator receives input matrices that are compressed by a separate device or system. For instance, a separate device may generate weights, compress the weights according to a structured sparsity factor, and provide those weights to one or more hardware accelerators configured according to aspects of the disclosure. The compressed matrices received may be the output of a compression process performed on uncompressed data. In other examples, the compressed input received is generated using a model or other system for generating compressed data directly and without uncompressed data as an input.

The accelerator receives the compressed input and an index array mapping locations of data in the compressed input with locations of the data in the original, uncompressed, input. To compress the matrices, the hardware accelerator can implement hardware for compressing data based on the top value(s) in segments of the matrices of a predetermined length determined by the sparsity factor for the data. A sparsity factor can be expressed as a ratio, for example 1:4. If the ratio is 1:4, the hardware accelerator can generate a sparse matrix by taking the top-valued element in each segment of four elements in the matrix. The sparsity factor can be generated after analyzing or pre-processing the workload, for example by a compiler corresponding to the hardware accelerator. For example, the sparsity factor can be based on an average of zero to non-zero values in a workload. The hardware accelerator can receive the sparsity factor as part of a compiled set of instructions and data corresponding to the matrices to process.

The hardware accelerator can implement a matrix multiply unit (MXU) with multiple processing cells configured to perform matrix multiplication on an input matrix streamed into the MXU. The processing cells can collectively be arranged as a weight-stationary systolic array, in which a gains matrix, such as a matrix of weights or activation values, remains stationary in the array while input matrices are streamed into the array.

Multiplexor circuits ("multiplexors") in each processing cell of the hardware accelerator can be configured to use an index array or bitmask for generating a corresponding multiplier matrix to multiply with the compressed input matrix. The multiplier matrix includes elements of the gains matrix that would be multiplied with non-zero elements of the original input matrix if the gains matrix and the input matrix were multiplied. Rather than multiplying the gains matrix with the input matrix directly, the hardware accelerator is configured to stream in less data with the compressed input matrix, while generating an accurate result matrix representing the product of the matrix multiplication. As a result, the multiplier matrix may be smaller than the gains matrix, at least because only a subset of elements is selected from the gains matrix.

For example, if the input matrix is compressed according to 1:4 factor, the one or more multiplexors of the processing cell can include a 4:1 multiplexor to map elements of the gains matrix and generate a multiplier matrix, using the index array. The processing cell multiplies the compressed portion of the input matrix with the multiplier matrix, to generate a respective result matrix. Because the input and gains matrices are often too large to fit in the memory of the hardware accelerator, the hardware accelerator can multiply portions of the input and gains matrices and aggregate the final result matrix. The input and gains matrices are multiplied over multiple passes performed over one or more processing cycles of the accelerator. At each pass, which may occur over one or more processing cycles, a different portion of the gains matrix may be loaded in memory of the systolic array of processing cells, and portions of the input matrix are streamed into the systolic array for performing matrix multiplication. The result matrices of each pass can be communicated across passes of input through the systolic array to a component of the hardware accelerator configured to aggregate the individual result matrices from each systolic array computation to generate a final result. The final result is a matrix representing the product of multiplying the input matrix with the gains matrix.

Multiple multiplexors can be implemented in each processing cell, for example as an interconnected network, to support a variety of different sparsity factors. The corresponding portion of the gains matrix is the portion of the gains matrix that would have been multiplied with the input matrix if the input matrix and the gains matrix were directly multiplied together.

Aspects of the disclosure provide for accelerated gains matrix loading in processing cells of a hardware accelerator. A compressed gains matrix can be loaded into the hardware accelerator and then returned to its original, uncompressed, form, reducing the overall amount of data and bandwidth needed to load into the hardware accelerator. In some examples, the compressed gains matrix can be block-scaled, as described in more detail below. A processing cell is configured to receive the compressed gains matrix and an index array mapping locations of elements between the compressed gains matrix and its uncompressed original version.

The processing cell expands rows and columns of the compressed gains matrix according to one or more multiplexors or demultiplexors configured to correctly place elements of the gains matrix based on the respective locations of the elements in the compressed gains matrix, and the mapping of the element locations indicated by the index array. A demultiplexor in this context can refer to a multiplexor configured to generate an expanded output from an input, e.g., the reverse operation of a multiplexor. Gains matrix loading can be accelerated by a factor proportional to the sparsity factor for the compressed gains matrices.

Aspects of the disclosure provide for supporting different sparsity factors for hardware compression, by emulating a target sparsity factor using implemented hardware for accelerating matrix multiplication corresponding to a factor different than the target factor. The target sparsity factors that can be emulated depend on the sparsity factor in the currently implemented hardware. For example, the hardware accelerator can be configured to process input according to a 3:6 sparsity factor, using a hardware implementation of matrix multiplication supporting 1:4 sparsity. Emulation of certain other sparsity factors can extend the hardware accelerator's range in supporting different factors, even if a target factor is not natively implemented in the hardware accelerator. The performance gains described herein can then be extended to workload exhibiting these target sparsity factors. The processing cell can store and maintain a scaling factor corresponding to block-scaled elements of the loaded gains matrix.

Aspects of the disclosure are directed to hardware acceleration of structured sparse workloads with block quantization. A hardware accelerator can receive compressed input matrices, for example as part of a workload for training or processing a machine learning model. The input matrices can be further provided in a block data type format, in which blocks of mantissas are represented with a single shared scaling factor. An MXU can multiply the block data, shift or cast the block data according to a shared scaling factor to generate an output product. To that end, block data type matrices exhibiting structured sparsity patterns can be accelerated without affecting the overall accuracy or quality of the output to the workload being processed.

Block data types can specify data formats for the mantissas in the block, the shared scaling factor of the mantissas, and the size or shape of the blocks. Mantissas (also called significands) can be quantized to low precision format, e.g., 4-bit integers or 8-bit floating-point values. Data may also exhibit structured sparsity, in which a segment of M elements in the data can have $N$ non-zero elements. This is represented as $N: M$ structured sparsity. For example, data compressed according to a 2: 4 structured sparsity pattern has at most two non-zero elements in each contiguous segment of four elements. Data that is in block data format and compressed according to a structured sparsity ratio is sometimes referred to as compressed block-scaled data.

Block data types represent blocks of quantized mantissas with a shared scaling factor. A block data type can include the data type of mantissas in the block, the data type of the exponent, and the number of elements or shape of the block covered by the scaling factor. Mantissas may be a narrow precision fixed-point format. Examples of fixed-point formats include four-bit integers, e.g., INT4, and eight-bit integers, e.g., INT8. Other example formats for the mantissas include floating-point formats. Examples of floating-point formats include 8-bit floating point, e.g., FP8, or generally any format with different numbers of bits representing mantissas and exponents of a floating-point number. The latter can be represented, for example, as $eXmY,$ where $X$ is the number of bits representing an exponent and $Y$ is the number of bits representing the mantissa.

Scaling factor data types can vary, as well. For example, the scaling factor can be represented as a floating-point number, for example a 32-bit floating-point number (FP32). The scaling factor may also be a shared exponent that scales mantissas in the block by a power-of-two, e.g., 2, 4, 8, and so on. The block shape and size specify the number of elements and the tensor shape that a single scaling factor covers. For example, the block can be a vector or multi-dimensional matrix, such as a tensor, with a shape defined by the block data type.

For example, a block of 4-bit integers or INT4 mantissas with 32 data elements and 2:4 structured sparsity can be processed through an MXU to perform matrix multiplication at 4x the effective FLOPS of dense multiplication on data with the same number of elements as the uncompressed 8-bit floating-point numbers or FP8 version of the data. This is due to a 2x increase from using blocked-INT4 and a 2x increase from the sparse representation of the input. This approach also provides for a 3-4x savings in memory capacity and bandwidth compared to dense FP8. In addition, operating on block-scaled input consumes less power than their non-scaled counterparts, at least because adder circuits reduce the amount of data needed to store, and process is lower for block-scaled representations of input. The implementation of block data types and structured sparsity stack for multiplicative performance gains, with additive hardware area cost. The combiner circuit combining shared scaling factors, e.g., using addition or multiplication, can be wired for operations that take in more than two operands, as needed. The block data type is a higher fidelity representation of the original values, compared to just non-block scaled INT4 data, allowing for computation at lower precision, e.g., block-scaled INT4 instead of FP8, while maintaining model quality. The hardware accelerator as described herein can be built with lower precision compute FLOPS per chip, compared to alternatives requiring higher precision FLOPS.

Accelerating block data exhibiting structured sparsity can stack the compute and memory benefits of processing block data and sparse data separately, while requiring fewer passes through the hardware accelerator. Moreover, the quality neutral application of these techniques extends to their combination, as well. A technique can be quality neutral if, when applied over various different machine learning workloads, the technique does not impact the quality of the result of executing the workload. For example, if a technique, such as structured sparsity, is quality neutral, then the accuracy of training different models is not impacted because the model architecture changes between the different models.

The hardware accelerator can implement a number of processing cells arranged in a systolic array. A processing cell can implement one or more dot product units for multiplying the blocks of compressed mantissas and shifting or casting the dot product computed by a unit, according to a received shared scaling factor. In some examples, a common register can store a shared scaling factor for a group of processing cells, instead of each processing cell individually receiving a shared scaling factor.

Combining block quantization and fine-grained sparsity can provide performance gains, while balancing gains with reduced hardware implementation complexity. Specifically, combining block data type quantization with structured sparsity has been shown to improve performance across a range of machine learning models, during inference, training, and/or fine-tuning. In other words, the improvement gains have been found to be quality neutral and do not depend on specific model architectures.

Introducing structure and spatial locality into the tensor representation can streamline hardware implementations by reducing wiring and multiplexing cost, while facilitating resource sharing. Both techniques are represented in a tensor as small blocks of values with some metadata, e.g., a bitmask or a scaling factor. Further, the structural similarities between the two formats also creates opportunities for co-optimization in hardware and compiler design. Examples include common handling of metadata in hardware and compiler, matching block sizes, and defining new mantissa data types based on post-sparsification tensor distribution.

The hardware accelerator can include one or more cores. Each core implements a matrix-multiply unit (MXU) and a vector processing unit (VPU). The MXU includes multiple processing units arranged as a systolic array. The VPU includes multiple VPU lanes, with each lane including a memory structure and VPU sub-lanes. A VPU sub-lane can include a register for storing vector elements and one or more arithmetic logic units (ALUs) configured to perform operations on data stored in the register. The MXU can receive serialized data from the VPU sub-lanes, including input matrix values for multiplying with a gains matrix. As the MXU implements a weight-stationary systolic array, the gains matrix is loaded into registers of processing units of the MXU and re-used during multiplication operations, while the MXU receives input matrix values streamed in from the VPU sub-lanes.

Aspects of the disclosure provide technical advantages, including, but not limited to, the following. A hardware accelerator can be configured to accelerate sparse computation over a variety of formats, including block data formats, and/or different sparsity patterns sharing a common sparsity factor. For example, different inputs may have different patterns of sparsity, but may be characterized or estimated by a ratio of zero- to non-zero-valued elements. Hardware acceleration can improve fine-grained sparse computation, where batches of zero-valued elements cannot be efficiently managed in software, as in coarse-grained sparse computation. Further, the hardware accelerator does not require a separate datapath or a dedicated sub-component to separately manage either sparse or dense computation, reducing the cost to build and operate the hardware accelerator while still allowing for the acceleration of both types of operations, which can appear in the same workload. The hardware accelerator supports a range of structured sparsity patterns for acceleration, without negatively affecting dense workload acceleration performance.

Combining block-scaled compressed gains loading with block-scaled compressed sparse matrix multiplication as described compounds the factor by which processing time is reduced on a hardware accelerator or other device. For a weight-stationary systolic array, the combined approach reduces time to stream in input, as well as time lost when the portion of a gains matrix that is loaded into the systolic array is swapped for another portion of the gains matrix.

Weight-stationary systolic arrays can be loaded more efficiently, for example by a factor proportional to the sparsity factor of the received compressed gains matrix. More rapid loading allows for faster overall computations, as the computation bottlenecking is reduced in the loading and unloading of the gains matrix across the systolic array. Because the non-zero elements in each section can vary in location, the processing cell stores the entire portion of the gains matrix and selects from the portion to generate correct multiplier matrices. Faster loading also mitigates the need to implement larger arrays to store the stationary weights or gains matrix in the systolic array. Even if a larger array is implemented, the hardware accelerator may receive even larger inputs, bottlenecking workload processing through relatively slower loading and unloading of stationary portions of the gains matrix between multiplications.

The hardware accelerator can operate across a wide range of operating points, from compute-bound conditions to memory-bound conditions, different input matrix or tensor shapes, and different use cases in AI training and model inference execution. These operating points can include operations on weights, activation values and their associated functions, and gradient computation, for example, as part of backpropagation with gradient descent and model parameter update.

The same accelerator can also accelerate dense workloads, increasing the overall flexibility of the types of workloads a single accelerator can be configured to process. In the dense matrix multiplication, a processing cell of the MXU can multiply its stored portion of the gains matrix and the received input matrix without multiplexing the portion of the gains matrix. The MXU can store the portion of the gains matrix for one or more cycles, or for even longer periods of time. The circuitry configured to perform the multiplication, e.g., one or more multiply accumulate units (MACs), one or more dot product units, etc., remains the same between the sparse mode and dense mode of matrix multiplication.

Aspects of the disclosure are directed to processing block-scaled data on processing devices, where the block size of the data is smaller than the number of implemented processing lanes on the devices. An example process performed by the devices is matrix multiplication. The processing device is configured to load pre-computed scaling factors for static data, and to generate scaling factors for dynamic data as part of the matrix multiplication pipeline for the device. The processing device is configured to cause scaling factors of different blocks of either operand matrix being multiplied to be applied to corresponding blocks during the multiplication. To that end, the processing device can generate correct matrix multiplication products of block-scaled input, even when the block size is more granular or smaller than the number of processing lanes.

The processing device block-scales the products consistent with the scaling factors of the operands and does so without reducing utilization of the processing device. For example, aspects of the disclosure avoid the need for devices with fewer processing lanes to process more granular block sizes and avoids or mitigates resource under-utilization through idle processing lanes.

An example processing device can be a processing core of a hardware accelerator. The hardware accelerator may have multiple processing cores, and each processing core can include one or more matrix-multiply units (MXUs), vector processing units (VPUs), and scalar units for accelerating classes of operations commonly encountered in workloads, such as matrix or vector multiplication in machine learning workloads. The MXU can be arranged as a systolic array of processing cells. Processing cells of the systolic array can be configured to perform a multiplication and accumulation operation to generate a result and pass that result to a neighboring processing cell. The results of each processing cell are accumulated and output by the MXU. In some examples, the MXU can be arranged as a weight-stationary systolic array, in which some input is streamed into the MXU through the processing lanes, while the other input is stored in the systolic array and periodically unloaded and replaced with new data.

The MXU reduces the operand matrices across a contraction dimension. The contraction dimension may be twice or three times as large as the number of processing lanes streaming input into the MXU, in some examples. Given that the operands to the MXU are block-scaled to a block size smaller than the contraction dimension and the number of processing lanes streaming into the MXU, the result of the MXU is also scaled according to the same factor to generate arithmetically correct output. When the block size of the block-scaled input is smaller than the number of lanes streaming into the MXU, the correct scaling factors for operand blocks processed by the MXU are combined and applied to corresponding results of multiplying those operand blocks. In other words, a wide SIMD-configured device may not generate accurate results when processing operands of block sizes smaller than the device's width, without orchestrating the streaming or loading of both blocks and their scaling factors as described herein.

Aspects of the disclosure provide for at least the following technical advantages. To ensure arithmetically accurate block-scaled matrix multiplication, while also allowing for the use of wide SIMD-configured devices and their corresponding computational advantages, aspects of the technology provide for a scaling factor orchestrator to block scale the operands according to a scaling factor, orchestrate the loading of the scaling factors into the MXU, and apply the scaling factors to the results generated by the MXU from processing the block-scaled inputs. Smaller SIMD-configured devices can be used, e.g., with widths as large as the block size of the block operands, but that approach compromises on the improved computational throughput afforded by wider SIMD-configured devices as described herein. Further, under-utilization of the processing lanes by not parallelizing the multiplication of multiple blocks at once in wide SIMD-configured devices results in computational inefficiency.

For example, A block of size $B$ can have its elements streamed in through $B$ processing lanes. Because the elements in the B processing lanes share a scaling factor, the VPU can stream the scaling factor for an entire block from a single one of the B processing lanes. A lane specifier provided to a multiplexer network can determine to which lane the scaling factor is sent. The multiplexer network can include a number of delay elements for timing the streaming of the scaling factor with the data of the corresponding block. To improve utilization of the processing lanes for transmitting scaling factors to the MXU, multiple scaling factors for different matrix multiplication operations can be streamed from the other lanes of the P processing lanes in the same cycle.

For the gains matrix stored in the MXU, each processing cell can implement a register for storing a gains scaling factor corresponding to a respective block of gains matrix elements in the processing cell. Each processing cell can store blocks of gains matrix elements in a separate register. The MXU can be configured to load the gains matrix, e.g., from a data source such as high bandwidth memory or another memory device and use the same configured workflow to also load the gains scaling factors. The gains scaling factors can be loaded faster than the gains matrix, generally, for example because the gains scaling factors are smaller in data size than the gains matrix being loaded.

Aspects of the disclosure relate to generating scaling factors for input matrices received by a SIMD-configured processing device. While static data, e.g., trained weights, can be block-scaled according to an offline process, dynamic data, e.g., data that changes from operation to operation, such as output activations of a neural network layer, require corresponding scaling factors to be computed before the processing device can block-scale the data. For example, the gains matrix may be a pre-computed matrix of weights, e.g., as part of a trained machine learning model being served at least in part by the processing device. Input that is streamed into the MXU is typically dynamic, for example as output of a previous computation. Since the MXU result format and native elementwise types for the processing core can be wider than the block-scaled element types, and since the value of the scaling factors depends on a dynamic range of values within a block of the result matrix, scaling factors are not able to be pre-computed.

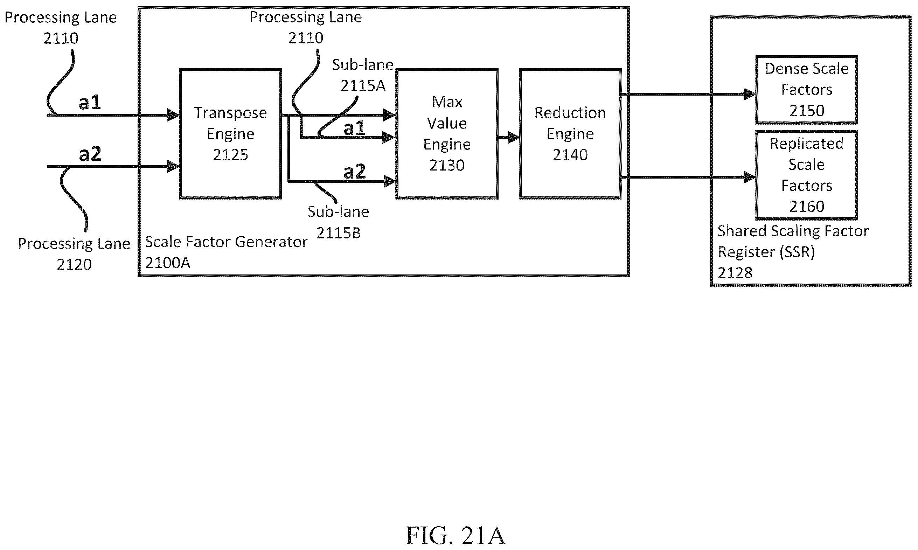

The scaling factor generator can implement any of various different techniques for determining a scaling factor for a given block of data. To reduce the search space of scaling factors, the processing device can be limited to powers-of-two, thereby reducing the time needed to determine a scaling factor. The following is an example process by which a scaling factor is determined, although it is understood that any of a variety of approaches can be implemented. The scaling factor generator can receive a block of data elements and their data format, e.g., eXmY, where X refers to an exponent bit-width and Y represents a mantissa or significand bit-width of a floating-point format. In some examples, the scaling factor can be pre-configured with the data format of the input data elements. For example, the generator can be configured to determine the exponent of the largest number that can be represented by the intended block-scale element type, and subtract that exponent from the base 2 logarithm of the largest valued input element in the block. The difference can be a shared exponent, such that two to the power of the shared exponent is the shared scaling factor for the elements of the block. Example scaling factor generators for implementing these operations include the scaling factor generators 2100A, 2100B of FIGs. 21A-21B.

To compare the elements, e.g., to identify the largest valued element in the block, the generator can transpose the elements along a sub-lane dimension for a processing lane, rather than the lane dimension of the SIMD processing lanes. Along the sub-lane dimension, cross-element operations between values along SIMD processing lanes are avoided, and so these cross-element operations, such as comparing multiple values, are supported by the generator with higher relative efficiency. Operations for transposing values, comparing values, and reducing the values by a common scaling factor can be operations defined in an instruction set architecture for the hardware accelerator or other processing device configured as described herein. The device can be programmed for performing these operations for data streamed into the MXU, during execution of a matrix multiplication.

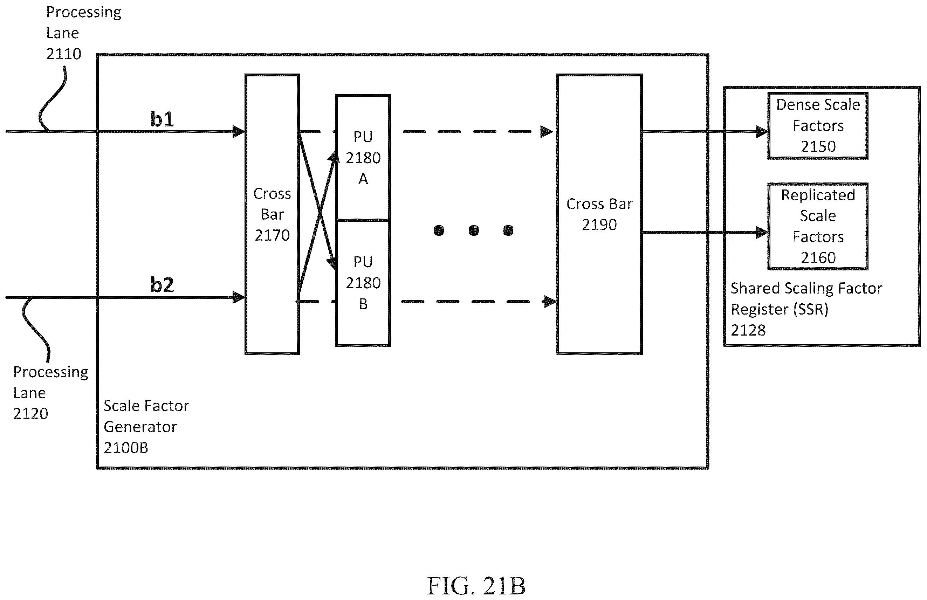

The generator can implement hardware for performing or accelerating the performance of various operations in scaling factor generation techniques. For example, the generator can implement hardware circuits for determining the maximum or absolute value maximum of the elements in a block and/or for computing the exponent of the largest number in the element data format. The scaling factor generator can be, for example, as described in more detail with reference to FIG. 21B, a cross-lane processing unit configured for performing operations on operands across processing lanes, including comparing values across the processing lanes and determining a scaling factor that reduces all of the compared values.

After the scaling factor is generated, e.g., through dedicated hardware for performing maximum-valued determining operations or transpose units, the generator can generate the scaling factors in two formats, a replicated format and a dense format. In the dense format, scaling factors for a given matrix multiplication can be spread out across processing lanes that are B lanes apart, reflecting the block size of the operand matrices, with each scaling factor sent from a processing lane also carrying data elements corresponding to the block for that scaling factor. As operands are fed into the MXU, dense scaling factors are streamed from the VPU according to a lane specifier. The replicated scaling factors are provided to each processing unit or tile for each processing lane. The replicated scaling factors are used to determine the block-scaled value from an input element. The block-scaled element is sent along a respective processing lane, e.g., within one of B lanes corresponding to a given operand block.

Aspects of the disclosure provide for at least the following advantages. A SIMD-configured device can generate arithmetically accurate results of multiplying block-scaled input, while efficiently utilizing all of its available processing lanes. scaling factor orchestration as described herein enables SIMD-configured devices that are wider than the block size of block-scaled input, which are generally more computationally efficient for accelerating matrix multiplication and other operations than narrower SIMD-configured devices, e.g., where the block size is equal to the number of available lanes. Scale-factor generation as described herein allows block quantization to be used for dynamic data, which can be pre-quantized, unlike static data. Further, the generation can be done at the same level of granularity as the orchestration, e.g., with block sizes smaller than the number of processing lanes for the SIMD-configured device. As a result, block-scaled input processing can be enabled on SIMD-configured devices, for example using both dense and replicated formats, without compromising on other computational benefits of the wider SIMD approach.

Example Systems

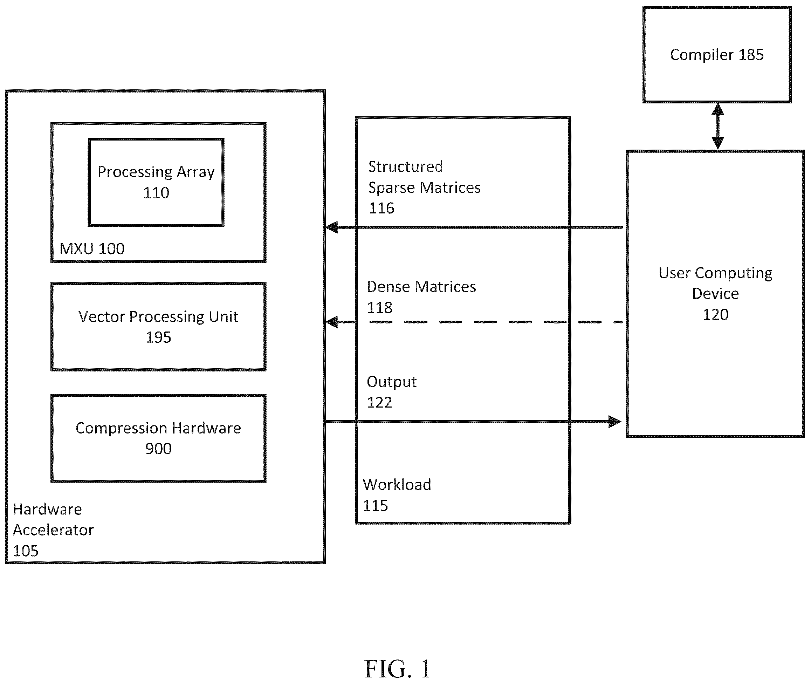

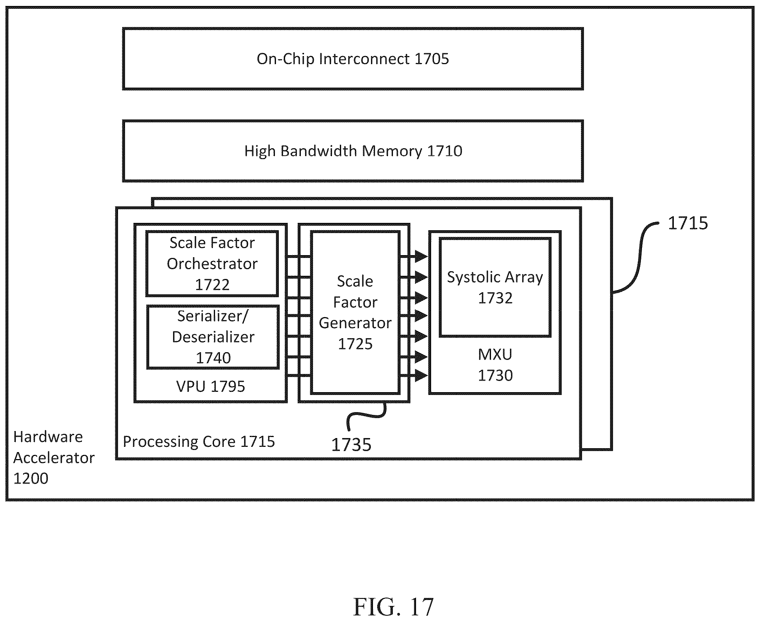

FIG. 1 is a block diagram of an example hardware accelerator 105 configured for structured sparse workload acceleration, according to aspects of the disclosure. In some examples, the workload includes compressed block-scaled input. The hardware accelerator 105 can include a matrix multiplication unit (MXU) 100, which can include a processing array 110 of processing cells. The processing array 110 can be a systolic array of processing cells. The hardware accelerator 105 can be a CPU, GPU, ASIC, such as a Tensor Processing Unit (TPU), FPGA, etc., configured to perform structured sparse matrix multiplication, according to aspects of the disclosure. The hardware accelerator 105 can be, for example, implemented as a standalone device, or as part of a device that may include other hardware accelerators working independently or in parallel. Other example configurations of the hardware accelerator 105 are discussed with respect to FIG. 17.

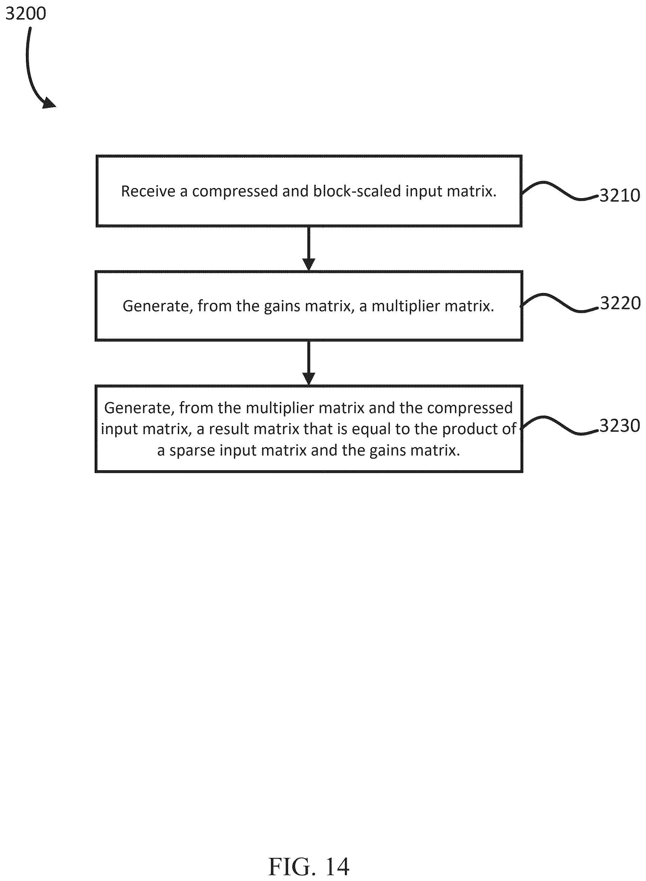

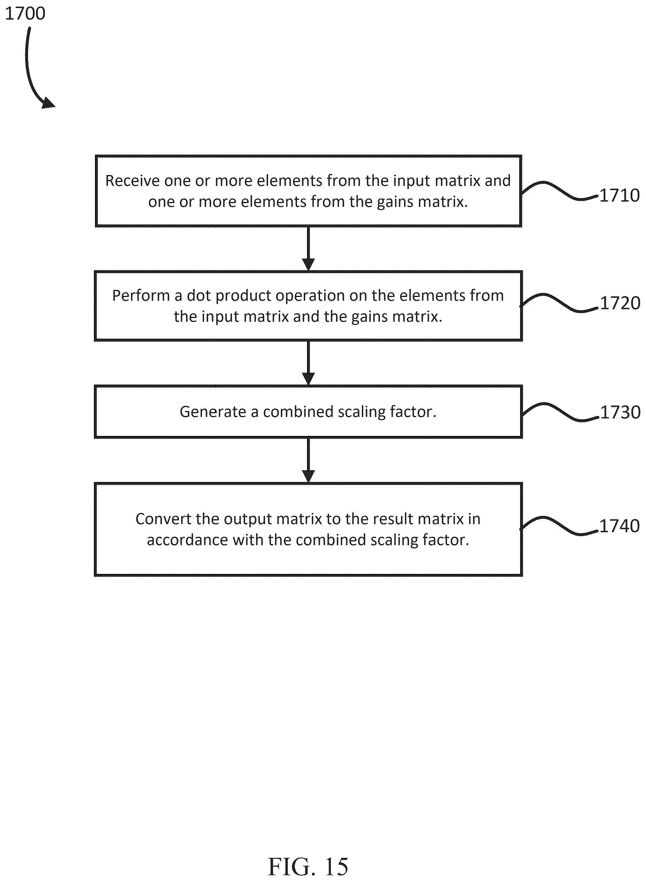

A user computing device 120 can send a workload 115 for at least partial execution of the workload 115 on the hardware accelerator 105. The workload 115 can specify data and instructions for performing any of a variety of different tasks, such as machine learning tasks described in more detail with respect to FIGs. 14 and 15. The workload 115 can include sparse structured matrices 116, which are matrices exhibiting some sparsity pattern that the MXU 100 can use to compress and accelerate matrix multiplication. In some examples, the sparse structured matrices 116 are block-scaled. The workload 115 can also include dense matrices 118. The dashed line in FIG. 1 indicates that the workload 115 may or may not include dense matrices 118. Although matrices are described as the inputs to the MXU 100, it is understood that other types of multiplication may be accelerated, such as vector multiplication or tensor multiplication.

The output to multiplying the matrices and/or performing other operations as part of the workload 115 can include output 122. The output 122 may be sent back to the user computing device 120, for example in response to sending the structured sparse matrices 116 of the workload 115. In some examples, the output 122 may form at least part of an input to a downstream processing pipeline, which may be part of executing the workload 115 or a different workload altogether. The output 122 can be displayed or outputted, after optional additional processing by the user computing device 120.

In some examples, the hardware accelerator 105 may be one of multiple hardware accelerators on a computing platform offering a number of services, such as accelerated execution or training of machine learning models. The user computing device 120 can interact with the platform through an interface, for example to select a service, a model type, and/or data to process. As part of providing a service, the computing platform executes workloads including instructions, configuration options, data, etc., for performing the service and responding to the user computing device 120 with a result. The computing platform can accelerate at least some of the operations, e.g., matrix multiplication, of the workload using the hardware accelerator 105.

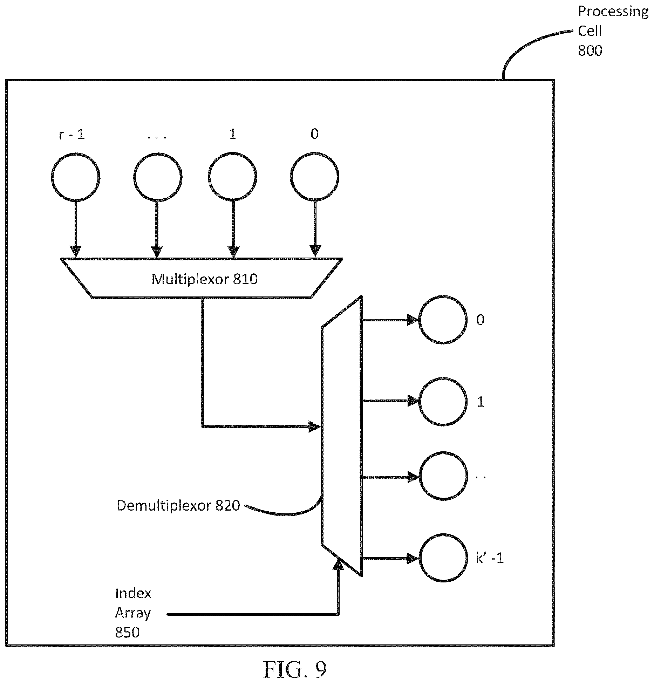

Hardware accelerator 105 can also include compression hardware 900. Compression hardware 900 is configured to compress incoming matrices, for example incoming sparse matrices, e.g., block-scaled matrices or non-block-scaled matrices, that are not compressed already. The compression hardware 900 can receive a sparsity factor, e.g., as part of the workload 115, and compress the matrices in accordance with the sparsity factor. The compression hardware 900 can send compressed matrices and index arrays corresponding to the compressed matrices. FIG. 9 and its related description provides more examples of compression hardware 900.

Vector processing unit (VPU) 195 can be configured to perform arithmetic operations associated with vectorized computations for a multi-dimensional data array, such as a compressed block-scaled matrix that is input to the hardware accelerator 105. The VPU 195 can be segmented into multiple lanes (not shown), in which each lane can include multiple localized and distinct computational resources. For example, within each lane, the VPU 195 can include multiple memory banks, each having multiple memory address locations. The lanes can include multiple processing units, and/or sub-lanes that further partition the VPU 195 with multiple distinct computing resources, such as processors or memory. Each VPU lane can include registers for storing vector elements, and at least one arithmetic logic unit (ALU) configured to perform arithmetic operations on the vector elements accessible from the registers. The VPU 195 can exchange data with other components of the hardware accelerator 105, e.g., the MXU 100, the compression hardware 900, and/or other components on or in communication with the hardware accelerator 105 not shown in FIG. 1. The components may be connected, for example, through interconnects, e.g., wires, or connections on a chip or substrate.

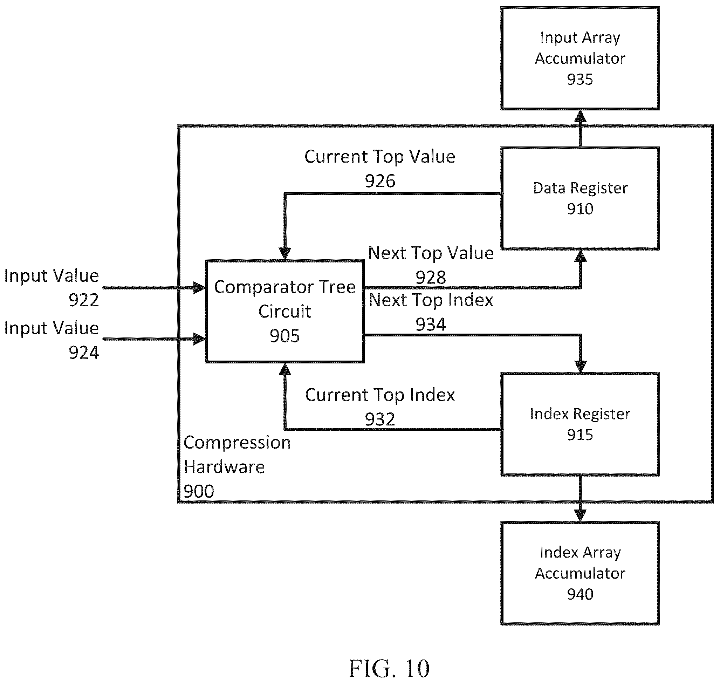

The arithmetic operations performed by the VPU 195 can include operations for compressing and uncompressing data sent to and received from the MXU 100. For example, the VPU 195 in some examples can implement the compression hardware, described in more detail with reference to FIG. 10. In some examples, the VPU 195 can also be configured to apply or un-apply scaling factors and handle their packing when stored in memory. In those examples, the MXU 100 can compute directly on the mantissas, outputting the product of multiplying the input mantissas to the VPU 195 for shifting or casting the product in accordance with a shared scaling factor.

Compiler 185 can be configured to generate instructions for programming operations on the hardware accelerator 105, e.g., according to an instruction set architecture ISA defining various operations for compressing/uncompressing data, applying/un-applying scaling to block data. For example, the ISA can define operations, which when received by the VPU 195, causes the VPU 195 to compress or block-scale data before it is provided as input to the MXU 100, and/or uncompress or un-apply block scaling to data output from the MXU 100. In other examples, the compiler 185 is configured to generate instructions in accordance with an instruction set architecture (ISA) defining operations that are performed by other components of the hardware accelerator 105, e.g., by the compression hardware 900 and/or the MXU 100.

The instructions generated by the compiler 185 and performed by the hardware accelerator 105 can be an extension to existing instructions for performing matrix multiplication and other arithmetic operations on data that may or may not be block-scaled or compressed. For example, dense matrices 118 received as part of a workload 115 may or may not be block-scaled, or in other examples, block-scaled but not compressed.

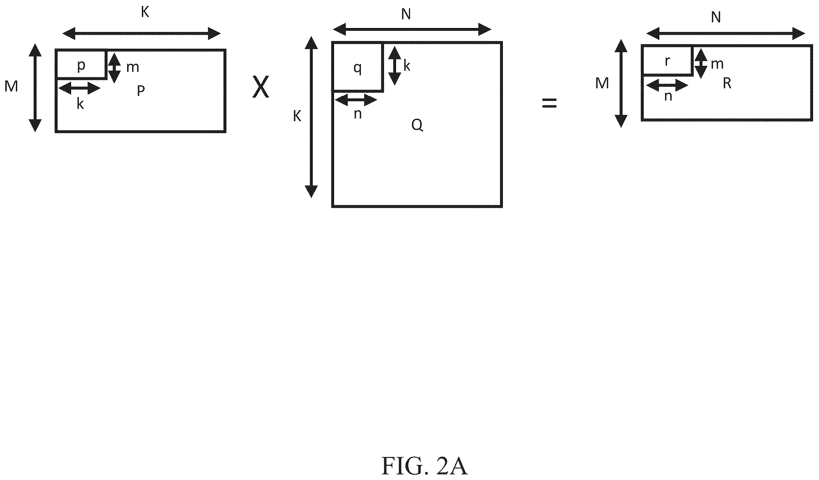

FIG. 2A is a block diagram illustrating an example of matrices P and Q being multiplied to generate matrix R before compression on an MXU 100 of a hardware accelerator configured for structured sparse matrix multiplication, according to aspects of the disclosure. MXU 100 is configured to multiply an atomic multiplicand matrix $p$ of shape m × $k$ and a gains matrix $q$ of shape $k$ × $n$. The matrices $p$ and $q$ can be portions of larger matrices $P$ and $Q$, respectively. A gains matrix can also be referred to as an activation matrix, weight matrix, or by any other name indicating what the elements in the gains matrix represent. The result matrix $R$ is the product of multiplying $P$ and $Q$, and has shape $m$ × $n$. Two portions of the matrices $P$ and $Q$ can be multiplied in one processing cycle of the MXU 100. The MXU 100 performs $m$ × $k$ × $n$ × 2 operations per cycle, which includes the individual multiplication of the various elements in matrices p and q, plus addition. The multiplication of the matrices $p$ and $q$ may be treated as an atomic operation, by the hardware accelerator 105.

The MXU 100 can perform multiplication between operand matrices of different shapes. For example, the MXU 100 can multiply an atomic multiplicand matrix of shape 2 × 256 and gains matrix 256 × 256 to produce an atomic result matrix of 2 × 256. The specific dimensions of the result matrix can vary, for example, based on a precision mode in which the MXU may be operating. Further, the MXU 100 can follow a weight-stationary systolic array dataflow, in which, each cycle, a new matrix $p$ of shape $m$ × $k$ is streamed in, and a result matrix $C$ of shape $m$ × $n$ is streamed out. The gains matrix $q$ remains stationary in the MXU 100.

Through multiple iterations of these atomic multiplications on portions of the matrices $P$ and $Q$, the MXU 100 can multiply the large matrices $P$ and $Q$. Given a large matrix, e.g., with dimensions larger than m or $k$, the MXU 100 may be tasked to multiply matrix $P$ with shape $M$ × $K$ with matrix $Q$ with shape $K$ × $N$ to produce result matrix $R$ with shape $M$ × $N$, where $M, N,$ and $K$ may be larger than m, $n$, and $k$, respectively. The hardware accelerator 105 is configured to map portions of the large matrix $P$ of shape $m$ × $k$ (the shape of matrix $p$) into the MXU 100 and maps a portion of the matrix $Q$ of shape $k$ ×

*n* (the shape of matrix *q*) to be the stationary gains matrix.

To complete the large matrix multiplication, new gains matrices need to be occasionally loaded into the MXU 100 before matrix multiplication can start or continue. This loading places a constraint on the minimum number of $m \times k$ shaped portions that can be streamed into the MXU 100 based on how long it takes for the MXU 100 to have the gains matrix loaded. For example, if it takes *p* cycles to load the $k \times n$ gains matrix, then the minimum shape of the matrix A that can be streamed into the MXU 100 to perform a matrix multiplication is $((p * m) \times k))$. For input matrices with a smaller *M* dimension, loading the gains matrix can take more cycles than performing the actual matrix multiplication versus input matrices with a larger *M* dimension.

If the matrices *P* and *Q* exhibit structured fine-grained sparsity, e.g., block-scaled sparse input or non-block-scaled sparse input, multiplication and/or gains matrix loading can be accelerated. When the matrices are dense, the MXU 100 and/or the hardware accelerator 105 can perform any of a variety of techniques for accelerating dense workloads, the performance of which may share the same datapath as aspects of the disclosure for sparse matrix multiplication acceleration.

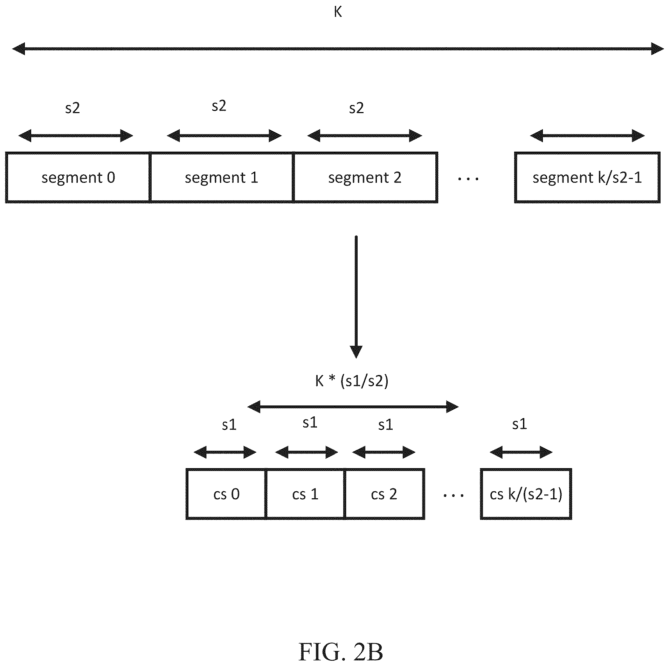

FIG. 2B is a block diagram illustrating the *K* dimension of the input matrix before and after compression in accordance with the sparsity factor. As described herein and with reference to FIG. 9, the hardware accelerator 105 can implement compression hardware for compressing input matrices. The sparsity factor may be determined, for example, by a software compiler compiling instructions for executing a workload by the hardware accelerator 105. The process of determining the sparsity factor can include analyzing the workload or group of workloads to identify or estimate the sparsity pattern. In some examples, the compiler or other program may count the number of zero and non-zero values and take an average over a number of other similar workloads to determine the sparsity factor. In some examples, the sparsity factor may be predetermined, for example, based on the nature of what the input matrix represents. The sparsity factor may be based on an approximated sparsity pattern. For example, a workload may not exhibit 1:4 sparsity across all segments, for example, because some segments may include more or fewer zero or non-zero elements than what is represented by the sparsity factor.

Sparse acceleration in the MXU 100 can be based on the sparsity factor of matrix *P* along dimension *K* shared by matrices *P* and *Q*. Mathematically correct matrix multiplication requires that the operand matrices share one common dimension length, indicated in FIG. 2B as the common dimension *K*. The compression can be based on a sparsity factor *s*1: *s*2, such that the shape of the compressed matrix *a'* is $\left( M \times \left( K \times \left( \frac{s1}{s2} \right) \right) \right)$. *s*1 can indicate the number of non-zero elements in segments of the input matrix, while s2 can indicate the length of each segment in the matrix. The hardware accelerator 105 compresses the input matrix such that for every segment of the matrix of size s2, the hardware accelerator 105 selects the top *s*1 elements to create the compressed matrix. FIG. 9 shows an example of compression hardware that can be implemented by the hardware accelerator 105 for compressing input matrices.

FIG. 2B illustrates the dimension of length *K* of the matrix P divided into segments, including segment 0, segment 1, segment 2, all the way through segment $\frac{k}{s2} - 1$. Each segment is of size s2. The compressed matrix has a dimension of length $K * \left( \frac{s1}{s2} \right)$, with segments of length s1, e.g., compressed segment (cs) 0, cs 1, cs 2, through $\text{CS} \frac{k}{s2-1}$. Each segment of length s1 includes the top elements from a respective segment of length s2. As the compressed matrix dimension is smaller than the original matrix P by the structured sparsity factor $\left( \frac{s1}{s2} \right)$. The MXU 100 can operate over larger portions of the input and gains matrices, while requiring less data to be streamed or loaded into the hardware accelerator 105.

The MXU 100 can support various forms of compression. For example, the MXU 100 can multiply matrices compressed based on a pattern of sparsity along a shared dimension between two matrices being multiplied. The shared dimension *K* may have elements exhibiting a sparsity pattern, e.g., four zero values for every one non-zero value in segments of the input matrix. As another example, the MXU 100 can multiply matrices based on a pattern of sparsity along other dimensions, for example, within a dimension of the result matrix of multiplying the input matrix with the gains matrix.

In some examples, the hardware accelerator 105 can receive input that is sparser than the sparsity factor used to compress incoming data. For example, in the case of 1:4 sparsity, an input matrix may have some segments of four elements that are all zero-valued. In those cases, some of the values of the compressed matrix generated by the hardware accelerator 105 will include zero-valued elements but are treated by the accelerator 105 as non-zero values for purposes of performing the operations described herein.

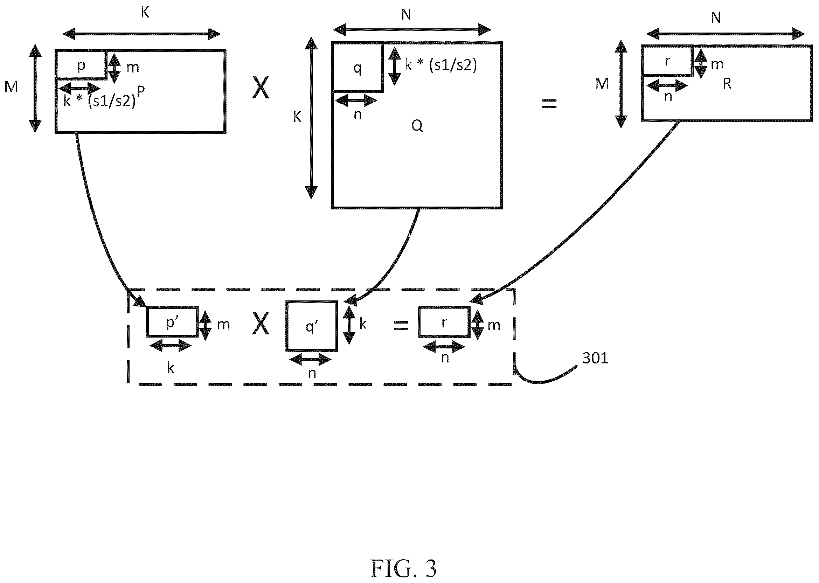

FIG. 3 is a block diagram illustrating an example of the compression and indexing of the input matrix by the MXU 100, according to aspects of the disclosure. In the example shown in FIG. 3, a portion *p* of input matrix *P* of shape

$$\left(m \times \left(k \times \left(\frac{s2}{s1}\right)\right)\right)$$ is compressed to a compressed matrix $p'$ with shape (m $\times$ k). The MXU 100 receives portion $p$

compressed to the compressed matrix $p'$ with a sparsity factor of $\left(\frac{s1}{s2}\right)$. As described herein, the hardware accelerator 105 can receive a compressed matrix in accordance with a given sparsity factor, or generate the compressed matrix using compression hardware, such as the compression hardware 900 described with reference to FIG. 9. The MXU 100 generates or receives an index array corresponding to locations of elements between the original portion p and the compressed matrix portion p'. The MXU 100 uses the index array corresponding to the compressed matrix $p'$ to determine the elements of the portion $q'$ of the gains matrix. The result of multiplying the compressed matrix p' with the portion $q'$ is a ($m \times n$) shaped result matrix $r$, shown in dashed box 301. The compression of the input matrix $a$ allows the MXU 100 to perform more operations per cycle, by a factor of () over dense matrix multiplication of those same matrices. This is because the MXU 100 can now perform $\left(m \times n \times \left(\frac{s2}{s1}\right) \times n \times 2\right)$ operations per cycle, instead of $m \times k \times n \times 2$

operations per cycle as described with respect to FIGs. 2A and 2B.

An example of generating the matrix $p'$, the portion $q'$, and the index array corresponding to the matrix $p'$ is provided. While the following example describes rows of data, it is understood that in practice whole matrices are compressed. Row $p$ is the uncompressed original and row $p'$ is the compressed version of the original. Examples of row $p$ and the compressed row $p'$ can be:

$$[1\,0\,0\,0 \quad 0\,2\,0\,0 \quad 0\,0\,0\,3] - row\ p$$

$$[1\,2\,3] - row\ p'$$

Row p has three sections of four elements each, indicated by spaces between each section. Row p also has a structured fine-grained sparsity factor of 1:4, i.e., for every four elements, one of the elements can be non-zero. The hardware accelerator 105 can be configured to generate the top element for each section of four elements in row $a$, to generate the compressed row p'. Further, the hardware accelerator 105 can generate an index array for the row p'. Row p' is reproduced below with its corresponding index array:

$$[1\,2\,3] - row\ p'$$

$$[0\,1\,3] - row\ p\ index\ array$$

Each element of the index array corresponds to an element in the compressed row $p'$. An element in the index array is the location of the corresponding element in the compressed row $p'$, in the original row $p$. For example, the first element of the index array is 0, and corresponds to the zeroth index location for the value 1 in the original row $p$. The elements of the index array can be represented modulo the number of elements in each segment being compressed. For example, the second element in the index array is one, representing the fifth element location of the input row, modulo four. Similarly, the third element is three, representing the eleventh element location of the input row, modulo four.

Continuing the example, the MXU 100 receives the row $p'$ for multiplying with a portion of the gains matrix. The MXU 100 can store a gains matrix through registers across multiple processing cells. The following is an example of a portion of a gains matrix stored in the processing cell, again shown as a single row for ease of description:

$$[10\,12\,9\,10 \quad 8\,7\,3\,4 \quad 5\,2\,1\,4] - portion\ of\ gains\ matrix$$

The multiplier matrix, e.g., the portion q' of the gains matrix, generated by the processing cell includes the elements for correctly multiplying the portion of the gains matrix with the original row $p$. The MXU 100 receives the portion of the gains matrix and the index array and selects the elements of the portion of the gains matrix corresponding to the indices of the index array. For example, referring back to the row $p'$ index array, the MXU 100 selects values 10, 7, and 4 from the portion of the gains matrix, which are the values at the zeroth, fifth, and eleventh positions, respectively. The multiplier matrix in this example is:

$$[10\,7\,4] - multiplier\ matrix$$

The multiplier matrix uses a subset of elements from the gains matrix, to allow for correct multiplication with the input matrix. Processing cells of the MXU 100 can implement multiplexor circuits ("multiplexors"). The multiplexors can be circuits configured to receive an input matrix and an index array, and output certain elements of the input matrix in accordance with the index array. Elements of an output matrix of the multiplexors that do not correspond to elements of the input matrix whose locations are indicated by the index array may be left as zero values. For a sparsity factor of 1:4, the MXU 100 can effectively perform 4x the number of computations per cycle, over not compressing the input matrix.

In the example of 1: 4 sparsity, the hardware accelerator 105 can compress an m × 1024 sized portion from the input matrix $P$ to generate a $m × 256$ shaped compressed matrix p'. The multiplexor uses the index array to generate a 256 × 256 multiplier matrix q' out of a 1024 × 256 portion of gains matrix $Q$. The MXU 100 multiplies the matrices $P$ and $Q$ to produce an $m × 256$ shaped result matrix $R$ in $\frac{m}{2}$ cycles. Effectively, the MXU 100 performs the equivalent of a dense matrix multiplication of ($m × 1024$) * (1024 × 256) elements with a four time increase to compute throughput.

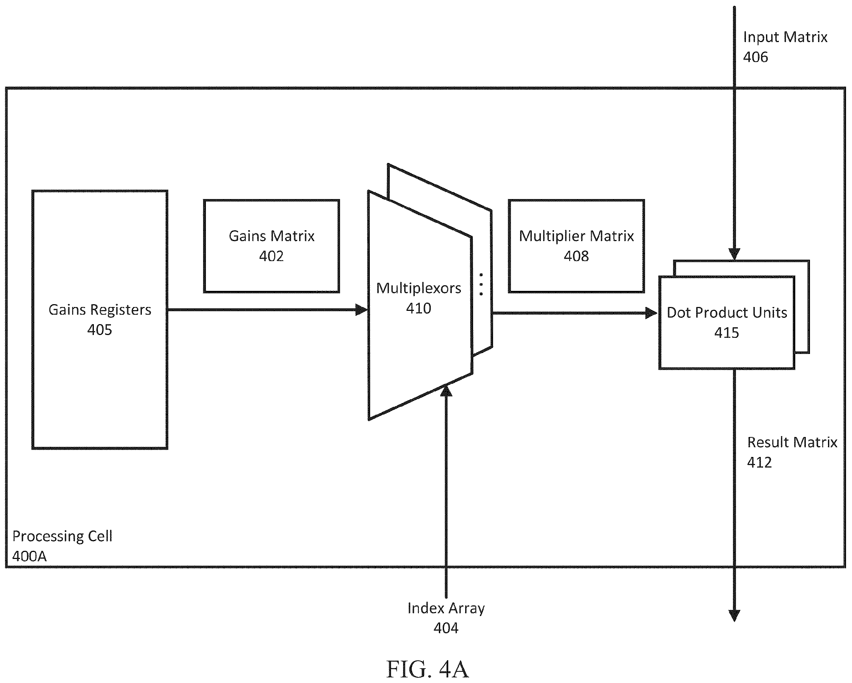

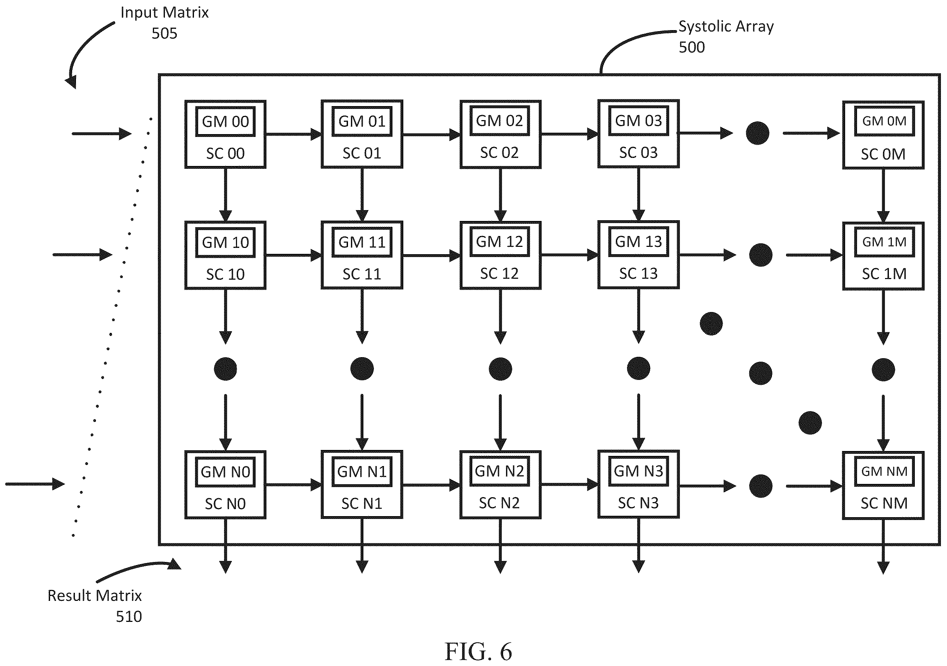

FIG. 4A is a block diagram of a processing cell 400A configured for structured sparse computation, according to aspects of the disclosure. The MXU 100 can include multiple processing cells, with each cell configured to receive and multiply a portion of a larger matrix $P$ with another matrix $Q$. In some examples, and as shown and described with reference to FIG. 6, the MXU 100 can include a systolic array of processing cells.

The processing cell 400A can include one or more gains registers 405, one or more multiplexors 410, and one or more dot product units 415. The gains register 405 can be any type of register configured to store data and can store a gains matrix 402 loaded into the MXU 100. The gains matrix 402 can be a portion of a larger gains matrix loaded into the MXU 100.

The multiplexors 410 can receive index array 404 corresponding to input matrix 406, as well as receive the gains matrix 402. Based on the sparsity factor of the input matrix 406, one or more multiplexors of the multiplexors 410 can be used to generate multiplier matrix 408. For example, if the sparsity factor is 1:4, one or more 4:1 multiplexors receive the index array 404 and generate the multiplier matrix 408 with elements whose locations are mapped in the index array 404.

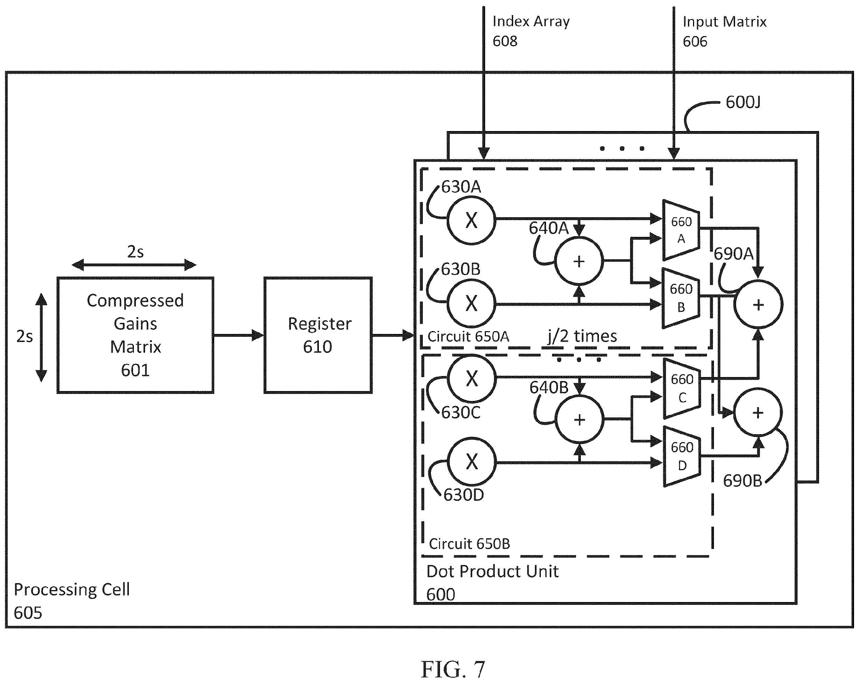

Dot product units 415 are configured to perform dot products on respective rows and columns of the input matrix 406 and the multiplier matrix 408. In some examples, dot product units 415 may instead be any appropriately configured circuit for multiplying elements and adding the sums of the multiplied elements together to generate a result matrix 412, e.g., multiply-and-accumulate units, or matrix multiplication circuits configured to multiply matrices of sizes equal to the portions of the input matrix and gain matrix being multiplied. The result matrix 412 is the product of multiplying the input matrix and the multiplier matrix 408. Different dot product units may be implemented depending on ways the input matrix 406 may be compressed, for example, as described with reference to FIG. 7

The processing cell 400A is also configured to perform dense matrix multiplication with the same datapath as the structured sparse multiplication variant. The dense mode or sparse mode of the cell can be triggered, for example, through one or more control signals sent to the MXU 100 or the processing cell 400A, to cause the cell 400A to operate in the corresponding mode.

To handle operations on dense input, e.g., to operate in a dense mode, in some examples, the processing cell 400A can receive a static index array, for example, based on a programmed instruction received by the processing cell 400A. The programmed instruction can be a series of control signals or instructions executable by the processing cell 400A. The static index array can be the same for each input received while in a dense mode of operation. The multiplexors 410 can be configured to select the same input throughout a given matrix multiplication operation. This can be in contrast to a matrix multiplication on sparse inputs, where indices can be different for every multiplicand element.

In some examples, in the dense mode, the processing cell can bypass the multiplexors 410 to the dot product units 415. The dense matrix may be expanded to be a sparse matrix with the same sparsity factor that the processing cell is configured to process. The dense matrix can be stored in one register per cell, with the index of each element in the matrix set to the value of the element. For example, a 256 × 256 gains matrix can be stored in a 1024 × 256 register by having the processing cell add three zeros after each element. The indices are set to expand the activations in the same way. In this way, the gains matrix is set up to process through the same hardware described herein for sparse matrix multiplication, as if the matrix were already in a sparse format in accordance with the sparsity factor.

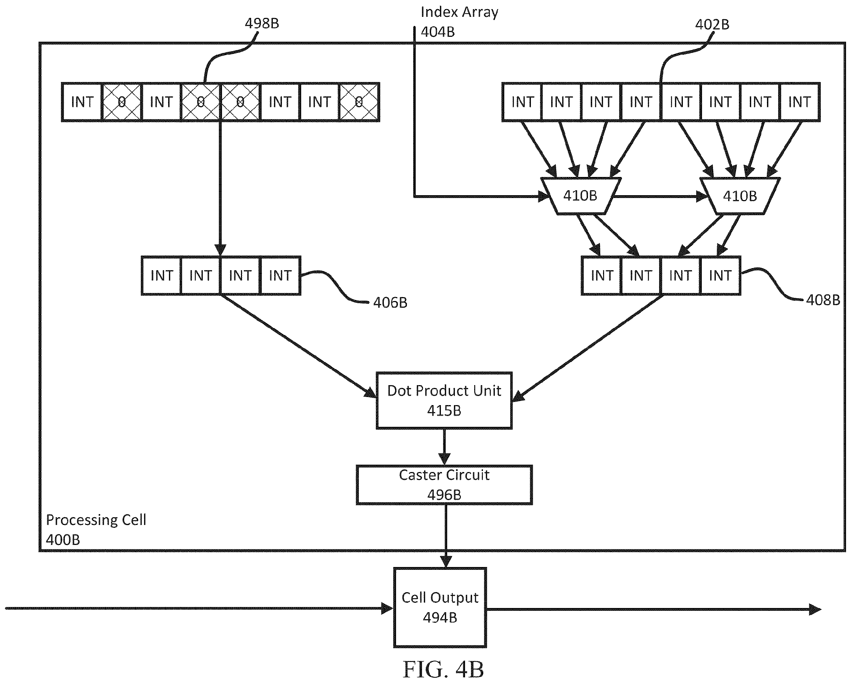

FIG. 4B is a block diagram of an example processing cell 400B configured for sparse matrix multiplication, according to aspects of the disclosure. Input 406B can be a portion of input matrix 406 being multiplied and shown for exemplary purposes in FIG. 4B. The input 406B may be a compressed version of data 498B, which has been compressed prior to receipt by the processing cell 406B. For example, the hardware accelerator 105 may compress the data 498B using compression hardware 900 or compressed in another way by the accelerator 105 or another device.

Input 406B includes four integer elements, indicated as boxes in FIG. 4B marked as "INT." It is understood that the elements may be of varying bit-widths or formats, including floating-point numbers. Data 498B is shown with zero-valued elements, indicated by cross-thatched boxes alongside "INT" boxes. In this example, data 498B exhibits 2:4 structured sparsity, in which there are two non-zero elements for each section of four elements in all. Indices in the index array 404B correspond to the location of the non-zero elements of the input 406B, relative to their positions in the data 498B.

Input 402B can be all or part of a gains matrix, such as the gains matrix 402. Multiplexors 410B may be compared with multiplexors 410 in FIG. 4A, configured to receive input and select elements in accordance with an index array 404B. The multiplexors 410B are 4:2 multiplexors, in which for every four elements of a section, two are selected as output based on the locations indicated in the index array at that section. Although shown as only two multiplexors, the number and configuration of the multiplexors in the processing cells 400A, 400B, and 400C can vary from example-to-example. The processing cell 400B can concatenate the outputs of the multiplexors 410B to generate multiplier input 408B.

Dot product unit 415B can be a circuit configured to compute a dot product between inputs 406B and 408B. The output of the dot product unit 415B can be passed to a caster circuit 496B. The caster circuit 496B can be configured to cast the output of the dot product unit 415B to another data format, if necessary, before leaving the processing cell 400B. For example, the processing cell 400B may be configured to operate on data at a level of precision or data format different from what is output by the processing cell 400B. The processing cell 400B can be adjusted in the precision it operates at, as part of a trade-off balance between precision and computational speed, as lower precision operands are faster to process but result in less accurate output. Depending on the workload being executed, precision or computational speed may be valued higher over the other. In some examples, the processing cell does not include a caster circuit 496B, and output is passed out of the cell 400B from the dot product unit 415B.

Output from the processing cell 400B can be represented as cell output 494B. The cell outputs of different processing cells, e.g., the processing cells of a systolic array of which the processing cell 400B, can be accumulated by the MXU implementing the systolic array as part of generating the result matrix 412.

Aspects of the disclosure provide for supporting different sparsity factors for hardware compression, by emulating a target sparsity factor using implemented hardware for accelerating matrix multiplication corresponding to a factor different than the target factor. The target sparsity factors that can be emulated depend on the sparsity factor in the currently implemented hardware. For example, the MXU 100 can be configured to process input according to a 3:6 sparsity factor, using a hardware implementation of matrix multiplication supporting 1:4 sparsity.

In data following a 3:6 sparsity factor, three non-zero elements may be present in each segment of the data of length six. Each segment can be sorted such that there is a non-zero element in the first four elements of the segment, a non-zero element in the middle four elements, and a third element in the last four elements of the segment. By performing multiple passes on data that is partially or completely overlapping along the common dimension between the matrices being multiplied, the hardware accelerator can reuse a datapath for accelerating matrices multiplied and compressed according to a given sparsity factor, to multiply matrices compressed according to the target sparsity factor.

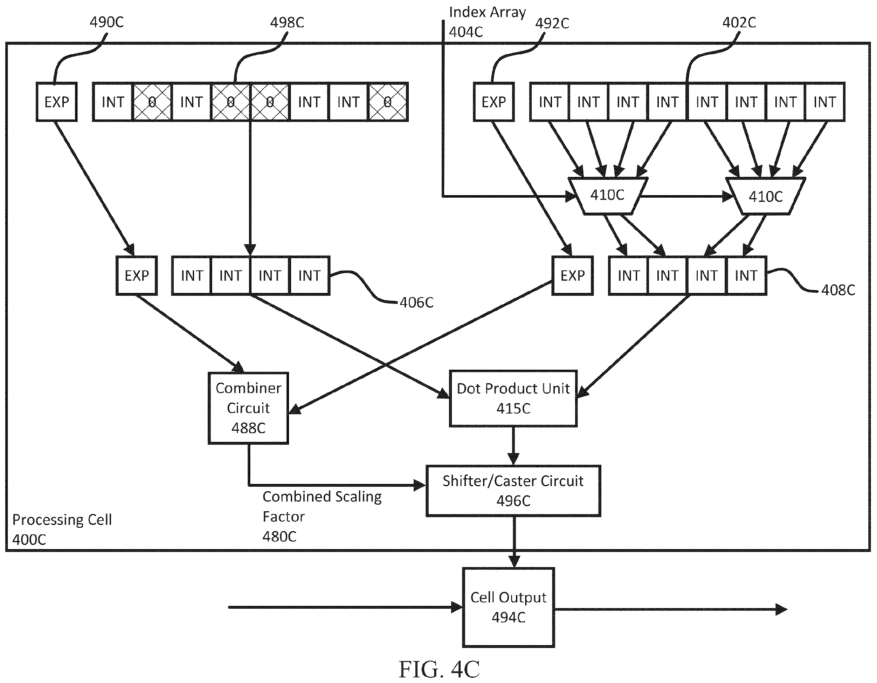

FIG. 4C is a block diagram of an example processing cell 400C configured for block-scaled sparse matrix multiplication, according to aspects of the disclosure. Input 406C can be a portion of input matrix 406 being multiplied and shown for exemplary purposes in FIG. 4C. The input 406C may be a compressed version of data 498C, which has been compressed prior to receipt by the processing cell 406B. For example, the hardware accelerator 105 may compress the data 498C using compression hardware 900 or compressed in another way by the accelerator 105 or another device.

Block input 406C includes four integer elements, indicated as boxes in FIG. 4C marked as "INT." It is understood that the elements may be of varying bit-widths. Data 498C is shown with zero-valued elements, indicated by cross-thatched boxes alongside "INT" boxes. Also in this example, data 498C exhibits 2:4 structured sparsity, in which there are two non-zero elements for each section of four elements in all. Index array 404C corresponds to the location of the non-zero elements of the input 406B, relative to their positions in the data 498C. Input 406C also includes a scaling factor 490C, denoted by a box marked as "EXP." The scaling factor 490C may be represented, for example, as a floating-point value or as a power-of-two.

Gains portion 402C can be all or part of a gains matrix, such as the gains matrix 402. The gains portion 402C may also be block-scaled, with a scaling factor 492C. Multiplexors 410C may be compared with multiplexors 410 in FIG. 4A, configured to receive input of one size and select elements in accordance with an index array 404C. The multiplexors 410C are 4:2 multiplexors, in which for every four elements of a section, two are selected as output based on the locations indicated in the index array at that section. Although shown as only two multiplexors, the number and configuration of the multiplexors in the processing cells 400A, 400B, and 400C can vary from example-to-example. The processing cell 400C can concatenate the outputs of the multiplexors 410B to generate multiplier input 408C.

Combiner circuit 488C is configured to add or multiply input scaling factors together to generate a combined scaling factor 480C. For example, if the scaling factors are a power-of-two, the scaling factors are added by the combiner circuit 488C. Otherwise, the combiner circuit 488C can multiply the input scaling factors to generate combined scaling factor 480C. In some examples, the combiner circuit 488C can receive a signal or determine whether the input scaling factors are power-of-two or not, and perform the corresponding combination operation, e.g., addition or multiplication. The combined scaling factor 480C of the combiner circuit 488C is sent to shifter/caster unit 496C, for shifting or casting the output of the dot product unit 415C, depending on whether the scaling factors are, for example, represented as floating-point values or as powers-of-two. Dot product unit 415B can be a circuit configured to compute a dot product between inputs 406C and 408C. The output of the dot product unit 415C can be passed to a caster/shifter circuit 496C.

The shifter/caster unit 496C is configured to shift or cast the output of the dot product unit 415C to revert the output from the block-scaled format, e.g., to elements each having a respective significand and exponent. If the combined scaling factor 480C from the combiner circuit 488C is a floating-point value, the output from the dot product unit 415C is cast to the format corresponding to the scaling factor sum, e.g., floating point values in the example in which the scaling factors are represented as floating-point values.

If the output of the combiner circuit 488C is a power-of-two, then the shifter/caster unit 496C can bit-shift the elements output from the dot product unit 415C in accordance with the scaling factor sum. For example, if the output of the combiner circuit 488C is $2^4$, the shifter/caster unit 496C can bit shift output elements of the dot product unit 415C by four.

Output from the processing cell 400C can be represented as cell output 494C. The cell outputs of different processing cells, e.g., the processing cells of a systolic array of which the processing cell 400C, can be accumulated by the MXU implementing the systolic array as part of generating a result matrix representing the product of multiplying the two inputs.

In some examples, hierarchies of structured sparsity can be supported by the processing cell 400C. A hierarchy of sparsity can refer to data that exhibits different types of sparsity at different tiers. For example, data input to the processing cell 400C may exhibit 2:4 block sparsity followed by 2:4 element sparsity. In this example, for every four blocks of an input, two blocks may contain non-zero elements while the other two blocks contain only zero elements. The two blocks with non-zero elements may exhibit a sparsity factor of 2:4, in that in segments of four elements of each block, two elements may be non-zero while two elements are zeroes. As another example of hierarchical structured sparsity, the same or different structured sparsity may be applied more than once, for example, 2:4 sparsity on input twice.

In examples in which input is processed exhibiting hierarchies of structured sparsity, the processing cell 400C can be configured to perform one or more passes of generating the input 406C from the portion 402C of the gains matrix. For example, the index array 404C may store additional data for each instance of structured sparsity in a hierarchy of structured sparsity the data 498C is compressed according to. The intermediate results of each pass for applying the sparsity factors in the hierarchy can be stored in the processing cell 400C, e.g., at one or more registers, such as gains registers 405.

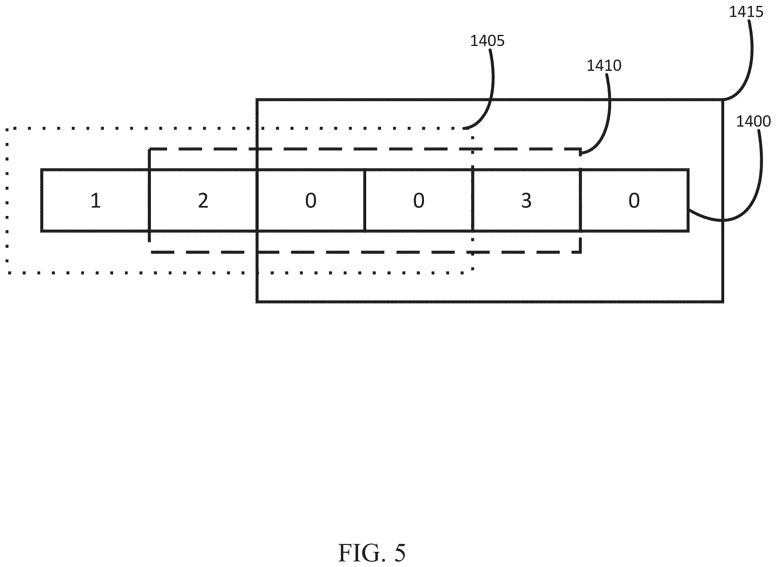

FIG. 5 illustrates an example segment 1400 and three partially overlapping windows 1405, 1410, and 1415 for emulating a target sparsity factor. From left-to-right, segment 1400 includes the values 1, 2, 0, 0, 3, and 0. Windows 1405, 1410, and 1415 illustrate the above-described property of each segment with a 3:6 sparsity factor. Window 1405 is shown as a dotted line box and includes the values 1, 2, 0, and 0. Window 1410 is shown as a dashed line box and includes the values 2, 0, 0, and 3. Window 1415 is shown as a solid line box and includes the values 0, 0, 3, and 0.

A processing cell performs multiple passes of operations to multiply elements in the received segment with the correct gains matrix values. The processing cell receives input from an input matrix compressed according to a target sparsity factor. For example, the compressed matrix may be compressed according to a sparsity factor of 3:6. The processing cell can be implemented like the processing cell 400A as shown and described with reference to FIG. 4A and configured to perform the operations described presently. In this example, the sparsity factor of 3:6 is emulated, because the processing cell does not natively implement 3:6 sparsity but does implement processing input compressed with a sparsity factor of 1:4. For example, the processing cell can receive input with indexes of the non-zero elements already sorted, or the processing cell can be configured to sort the elements.

The processing cell, e.g., processing cell 400A, can be programmed or configured to operate in an emulation mode, for emulating different sparsity factors. For example, the processing cell can receive one or more control signals or executable instructions, causing the processing cell to divide segments of a gains matrix into partially overlapping windows, and to perform multiplications on inputs within each window before combining and outputting the results. The combination can be performed, for example, by an appropriately configured circuit for receiving, combining, and storing the results until each pass is performed. In some examples, a program is executed by the hardware accelerator 105 or another device configured to send instructions or control signals to the hardware accelerator 105, such as for operating in different modes described herein.

In a first pass, the processing cell processes segments of six elements each in the gains matrix loaded in registers for the processing cell. For each group of six values, the processing cell loads the first window 1405 of four elements into corresponding registers and processes the elements through a 1:4 multiplexor to select a non-zero element with the smallest index to multiply with the first input element streamed to the processing cell. Non-zero elements are assigned to the first window from left-to-right, e.g., starting with a first value in a segment of the length specified in the target sparsity factor, e.g., a length of six from the target sparsity factor of 3:6.

In a second pass, the processing cell loads the middle four elements, e.g., of the second window 1410, processing the elements through the 1:4 multiplexor to select a non-zero element with the second-smallest indexed element of the segment, e.g., the group of six in the present example, to multiply with the second input element streamed to the processing cell. The second-smallest index is selected to account for cases in which the first non-zero element selected is also present in the second window, which can occur if the first non-zero element is not the first element of the first window. The processing cell accumulates the results of this pass with the product computed in the first pass.

In a third pass, the processing cell loads the last four elements, e.g., of the third window 1415, processing the elements through the 1:4 multiplexor to select a non-zero element with the third-smallest index to multiply with the second third input element streamed to the processing cell. The third-smallest indexed element of the segment, e.g., the group of six in this example, is selected to account for cases in which both the first and the second non-zero element selected are also present in the third window, which can occur if the first and second non-zero elements are not the first elements of the first and second windows, respectively. The processing cell 400A can accumulate the results of this pass with the products computed and accumulated in the first and second passes, and outputs the final result. The process described can be repeated for multiple streamed input values to the hardware accelerator, until the final result matrix is generated.

This approach requires three matrix multiplications, each on 2/3 of the weights (windows of length four in a segment of length six, or 4/6 = 2/3) and 1/6 of the total possible positions of the streamed input. The speed is 2x over a dense multiplication, when the weights are stored and loaded in the manner described herein, and when the non-zero elements are sorted prior to processing by the processing cell.

Support for other sparsity factors can be emulated. For example, matrices of a 2:5 sparsity factor can be implemented using two passes of the MXU configured for processing input with a 1:4 sparsity factor. Two windows of four elements each can be created in a segment of length five. Using half-open notation, e.g., with ranges inclusive of the first element but not the last element of the range, one window covers a range of positions zero through four, while the second window covers a range of positions one through five.

If the first element in the first window is a non-zero element, that element is selected by the multiplexor. The other element in the second window is selected as the second element. If the first element of the first window is zero, one of the middle elements is non-zero, because either the last element in the segment is zero and therefore two of the middle elements are zero, or the last element in the segment is non-zero and the other non-zero element is somewhere in the middle three elements. In that case, the multiplexors of the processing cell select a non-zero element in the first window within the middle three elements and uses the second window to select a non-zero element in the second window not already selected, e.g., the second non-zero element appearing in the second window.

3:6 sparsity applies a similar logic to the description above with reference to 2:5 sparsity. Three windows cover three sets of positions, zero through four in the first window, one through five in the second window, and two through six in the third window. If there is a non-zero element at position zero, the element is put in the first window and uses the 2:5 approach described above for handling the remaining windows and non-zero elements. Otherwise, if there is a non-zero element at position five, the element is placed in the third window and the 2:5 approach described above can be used on the first two non-zero elements and the first two windows. If neither of these cases are true, all elements are in the range of one through five. At least one of the elements will be in position one or two, and that one can use the first window. The 2:5 approach can be used for the non-zero elements. The processing cell can be configured in hardware to implement this approach for selecting non-zero elements according to 2:5 sparsity.

$k$ passes of a 1:4 sparsity factor implementation can be used to implement $k$:($k$ + 3) sparsity, by sorting the positions of the non-zero elements and assigning non-zero elements to windows at corresponding indices. $k$ matrix multiplication passes with 1:n sparsity can be used to implement $k$:($k$ + $n$ - 1) sparsity. In some examples, the windows passing over a segment may be totally overlapping. For example, totally overlapping windows may be used, consistent with the description above with reference to FIG. 5, to emulate 2:4 sparsity when 1:4 sparsity is implemented in hardware. In some examples, the windows can be traversed with a predetermined stride, e.g., a stride of 2, to further emulate other factors, such as 2:6 sparsity with 1:4 sparsity implemented in hardware.

FIG. 6 is a block diagram of an example systolic array 500 implementing the example processing cell of FIG. 4. The systolic array 500 can include $N$ rows, each row including $M$ systolic cells, e.g., systolic cell 00 through 0$M$, cell 10 through 1$M$, all the way to cell $N$0 through cell $NM$. Processing cells, e.g., the systolic cells of the array 500 can be configured to communicate information between neighboring cells and to other components of the MXU 100 implementing the systolic array 500.

The systolic array 500 can be weight-stationary. Weight-stationary can refer to an architectural characteristic of the systolic array 500, in which some input is streamed, e.g., input matrix 505, and some input remains fixed for number of cycles within the processing cells, e.g., a gains matrix. The gains matrix can be loaded across different columns and rows of processing cells, such that each processing cell is given a portion of the gains matrix. The gains matrix can be loaded across registers of the systolic cells, indicated as gains matrix (GM) 00 through NM. The output of multiplying the input matrix 505 and the gains matrix is streamed out of the systolic array 500 as result matrix 510.

FIG. 7 is a block diagram of a processing cell 605 configured for matrix multiplication when matrices have a 1 : ($s \times s$) sparsity factor, according to aspects of the disclosure. In examples where the compression is along a common dimension of the input matrix and gains matrix, sparsity is exploited to accelerate computations. Sparsity along other dimensions can also accelerate matrix multiplications in the MXU 100. For example, sparsity can exist in a 1 : ($s \times s$) pattern, in which the max element of a ($s \times s$) shaped section of a matrix is selected to form part of a compressed matrix.

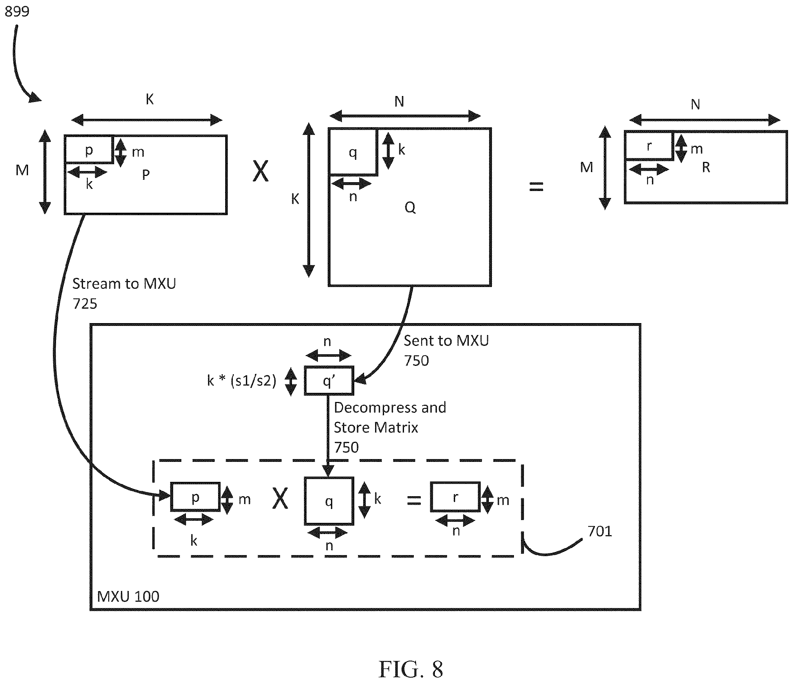

Compressed gains matrix 601 is compressed according to a 1 : ($2 \times 2$) sparsity factor and can be stored in register 610. The register 610 can be configured to store a compressed matrix of size $j \times j$, where $j$ is a positive integer. The compressed gains matrix 601 is sent through dot product unit 600, which may be one of multiple dot product units, up to dot product unit 600J. Although 1 : (2 $\times$ 2) is the sparsity factor used in the example described with reference to FIG. 8, it is understood that the dot product unit can be configured for other sparsity factors, e.g., 1 : (2 $\times$ 2), 1 : (3 $\times$ 3), 1 : (4 $\times$ 4), etc.

The dot product unit 600 can include a circuit repeated $\frac{j}{2}$ times. Two copies of the circuit are shown in FIG. 8 as circuits 650A and 650B. The $\frac{j}{2}$ circuits form part of an adder tree, producing two outputs from adder circuits 690A and 690B. Through j dot product units, each producing two results, a result vector of size 2j is produced, with two values in the vector from each dot product unit.

Circuit 650A includes multiplication circuits 630A and 630B, adder circuit 640A, and multiplexor circuits 660A and 660B. Similarly, circuit 650B includes multiplication circuit 630C and 630D, adder circuit 640B, and multiplexor circuits 660C and 660D. A multiplication circuit can be any configuration of circuitry configured to receive input values and generate a product of multiplying the input values. An adder circuit can be any circuitry configured to receive input values and generate a sum of adding the input values. Multiplexor circuits 660A, 660B, 660C, and 660D are configured to receive index array 608 and select one of two input values based on values in the index array.

The inputs to the circuits 630A through 630D can be element pairs taken from the input matrix and the compressed gains matrix 601. The dot product unit 600 can receive elements from both the input matrix 606 and the compressed gains matrix 601. For each pair of products, e.g., products from circuits 630A and 630B, or circuits 630C and 630D, the dot product unit 600 determines whether to pass the elements or the sum of the elements through multiplexors 650A through 650D.

Adder circuits 640A and 640B can receive and add pairs of products generated by the multiplication circuits. The multiplexors 660A through 660D are configured to pass through either the products or the sums of the products, based on the indices in the index array 608 corresponding to the compressed gains matrix 601. For example, if the indexes of two compressed elements correspond to the same column, the sum of the products is passed through a multiplexor. Otherwise, the products are passed through to the next iteration of circuit processing. Collectively, whether the sum of the products or the products themselves are passed through is determined by multiplexors 660A, 660B, 660C, and 660D.

FIG. 8 is a block diagram 899 illustrating an example of accelerator gains matrix loading for the MXU 100, according to aspects of the disclosure. As described earlier, the loading of the gains matrix to the MXU 100 poses a bottleneck to the overall computation of a matrix product. For example, loading a gains matrix may take more time in processing cycles than performing the multiplication and accumulation of elements in the matrices being multiplied, thereby causing a bottleneck.

In FIG. 8, input matrix $P$ is of shape $M \times K$, gains matrix $Q$ is of shape $K \times N$, and result matrix C is of shape $M \times N$. The portion $p$ is of shape $m \times k$, while the portion $q$ is of shape $n \times k$, where n < $N$, k < $K$, and $m$ < $M$. As shown in dashed box 701, the MXU 100 multiplies the portion $p$ and the portion $q$ generates portion $r$ of the gains matrix $R$, having shape $m \times n$.

The MXU 100 can be configured to support faster gains matrix loading for sparse matrices. The MXU compresses the gains matrix $Q$ along the $K$ dimension based on a sparsity factor. The sparsity factor can be $s1 : s2$, in which the top s1 elements are selected from chunks of size $s2$ in the matrix $Q$, to generate the compressed matrix. A portion $p$ of the matrix $P$ is multiplied with a portion $q$ of the gains matrix $Q$. As shown by arrow 725, the portion $p$ is streamed into the MXU 100. As shown by arrow 750, the matrix $q'$ is sent to the MXU 100.

As indicated by arrow 776, the MXU 100 decompresses the matrix q' back into a ($k \times n$) shaped matrix $q$ when stored in the MXU 100. In other words, the MXU 100 now only needs to load the compressed gains matrix $q'$, instead of the original matrix q. As described with reference to FIG. 9, multiplexors in the MXU are configured to receive an index array and re-create the original gains matrix prior to compression. As a result, the MXU has a $\frac{s2}{s1}$ times speed up as compared with loading an uncompressed gains matrix. The hardware accelerator 105 can be configured to compress the gains matrix, prior to loading into the MXU 100. In some examples, the hardware accelerator 105 receives compress input, such as a compressed input matrix and/or compressed gains matrix, from another computing device, processor, or system.

FIG. 9 is a block diagram of a processing cell 800 of the MXU 100 supporting sparse gains matrix loading, according to aspects of the disclosure. The gains matrix loading bandwidth into the processing cell 800 can be considered to be data of shape ($r \times n'$) per processing cycle. For example, per processing cycle, $r$ rows and $n'$ columns of data are loaded into the processing cell 800. For reference, in this example, it would take $\frac{k}{r}$ processing cycles to load a dense gains matrix of shape ($k \times n$).

The processing cell 800 receives a gains matrix of shape ($k \times n$) that is compressed in a factor of $s1:s2$ such that the received gains matrix is of shape ( $\left(\left(k \times \frac{s1}{s2}\right) \times n\right)$ . For each of the n'columns, the processing cell receives r rows of data per cycle. Out of the r rows, the cell selects data in the shape of ( $k' \times \frac{s1}{s2}$ ) using a multiplexor 810, based on the current cell row being processed. The multiplexor 810 is a $r : \left( k' \times \frac{s1}{s2} \right)$ multiplexor, where $k' < k$. The multiplexor 810 outputs data in the shape of ( $k' \times \frac{s1}{s2}$ ) based on indices in index array 850 received with the compressed gains matrix. As described with reference to FIGs. 2 and 3, the index array maps locations of elements from a compressed matrix to the locations of the elements in the original, uncompressed, matrix.

The de-multiplexing by the cell densifies the $\left( \left( k \times \frac{s1}{s2} \right) \times n \right)$ matrix back to a ($k \times n$) gains matrix when stored in the gains register. The demultiplexor 820 expands the input data from the multiplexor 810 using the index array 850. Effectively, this hardware can allow loading sparse matrices with an internal densification. To load a ($k \times n$) sparse matrix with $s1$: $s2$ compression, it takes $\frac{k*sp}{r}$ cycles, where $sp = \frac{s1}{s2}$. The speedup to gains matrix loading for sparse matrices is increased by a factor of $\frac{s1}{s2}$ .

FIG. 10 is a block diagram of compression hardware 900 for performing top-k compression on the hardware accelerator implementing the MXU, according to aspects of the disclosure. In some examples, the compression hardware 900 can be implemented as part of the VPU 195, for example as described with reference to FIG. 1. The compression hardware 900 includes a comparator tree circuit 905, a data register 910, and an index register 915. The comparator tree circuit 905 is configured to receive input value 922 and input value 924 from an input data structure, such as a matrix, to be compressed. The comparator tree circuit 900 compares the input values 922, 924 against a current top value 926 stored in data register 910. In examples in which $k$ is greater than one, the comparator tree circuit 900 can be configured to compare multiple values stored in the data register 910 against received input values and store the top $k$ elements and their corresponding indices. The largest value is passed to the data register 910 as the next top value 928.

The current top index 932 and the next top index 934 correspond to the indices of the current top value 926 and the next top value 928, respectively. The index registers 915 stores indices corresponding to the top k data values identified by the comparator tree circuit 905. For example, the compression hardware 900 can determine and store the top 1 value, the top 2 values, the top 3 values, all the way up to the size of a received segment. The top value can be the largest numerical value, the largest numerical values after computing absolute values of each element, and so on.

The compression hardware 900 in some examples selects top values in a manner that does not directly compare the values in a given segment. The values instead may be selected based on a predetermined or calculated mask over values to select from the segment. The mask may be determined based on a model prediction of which weights can be removed from processing without impacting the output of the model whose input is being compressed by the hardware 900. Remaining weights may be adjusted to compensate for the removed weights, for example by the compression hardware 900 or another component or device in the data path. After a segment of an input matrix is processed, e.g., four element segments, the contents of the data register 910 and the index register 915 are stored in an input array accumulator 935 and an index array accumulator 940, for storing the compressed input matrix and corresponding index array of the input matrix. The input array accumulator 935 can also store a scaling factor corresponding to blocks in the compressed input matrix.

As described above, in some examples input data may include more zero values than what is indicated by the sparsity pattern. For example, a segment in which elements are selected according to a 2:4 sparsity factor may only have one non-zero value. In those examples, the compression hardware 900 selects a zero value from the segment as one of the two values representing the segment in the output compressed matrix.

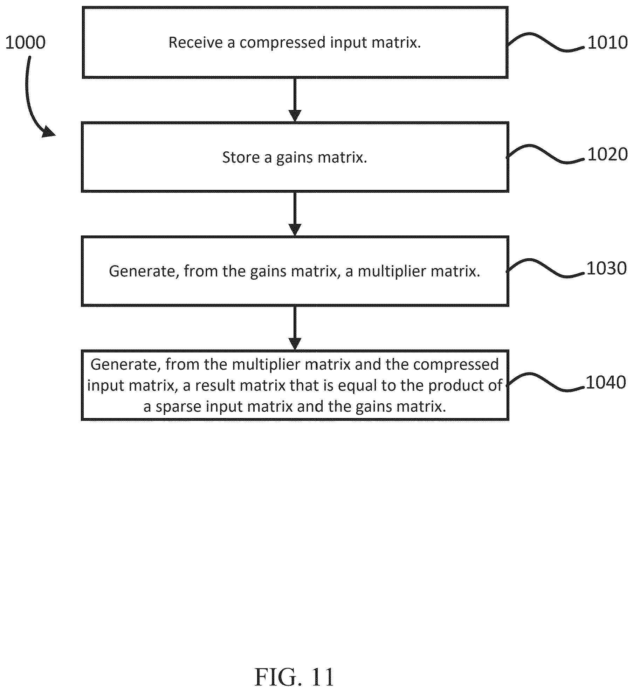

FIG. 11 is a flow diagram of an example process 1000 for matrix multiplication acceleration with structured fine-grained sparsity compression on a hardware accelerator, according to aspects of the disclosure. A processor or processing device, such as a hardware accelerator implementing an MXU, e.g., the hardware accelerator 105 implementing the MXU 100, can perform the process 1000. Operations described may be performed in parallel or sequentially, and the MXU 100 can perform multiple instances of the example process 1000 for different received inputs. In some examples, the process can be performed by an appropriately configured processor, including a CPU, a GPU, FPGA, or ASIC.

The hardware accelerator receives a compressed input matrix, according to block 1010. The compressed input matrix is compressed from a sparse input matrix in accordance with a sparsity factor of non-zero-valued to zero-valued elements in the sparse input matrix. The hardware accelerator or another device can be configured to compress the sparse input matrix. The hardware accelerator can receive the compressed input matrix directly, e.g., without also receiving the uncompressed version of the input matrix.

The hardware accelerator can be configured to generate the compressed input matrix in accordance with the structured sparsity factor. For example, the structured sparsity factor can be $k$: m, where $k$ and m are positive integers and m is greater than $k$. As part of generating the compressed input matrix, the hardware accelerator can perform top-$k$ comparisons in segments of an uncompressed input matrix of length m to generate elements of the input matrix. The compressed input matrix may also be block-scaled. The hardware accelerator, for example, the VPU 135, can be configured to generate a block-scaled version of incoming data, e.g., incoming floating-point values of a matrix sharing a common scaling factor.

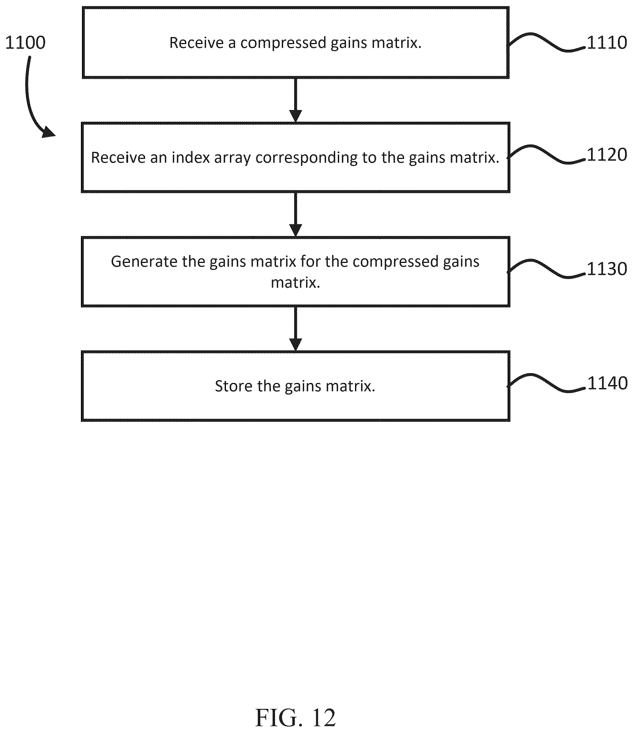

The hardware accelerator stores a gains matrix, according to block 1020. The gains matrix can be stored across an array of processing cells. The gains matrix can be loaded, for example, according to the process 1100 described herein and with reference to FIG. 12.

The hardware accelerator generates, from the gains matrix, a multiplier matrix, according to block 1030. The quantity of elements in the multiplier matrix is lower than the quantity of elements in the gains matrix in accordance with the structured sparsity factor. The multiplier matrix includes elements from the gains matrix that are multiplied with elements in the sparse input matrix when the sparse input matrix and the gains matrix are multiplied.

In generating the multiplier matrix, the hardware accelerator can receive an index matrix including elements corresponding to the locations of elements of the compressed input matrix in the sparse input matrix. The hardware accelerator can generate the multiplier matrix using a multiplexor configured to select elements from the gains matrix as elements of the multiplier matrix in accordance with elements in the index matrix.

In some examples, the structured sparsity factor is 1:$k$, where $k$ is an integer greater than one. Multiplexors implemented by the MXU 100 can include a $k$:1 multiplexor configured to multiplex sets of $k$ inputs in accordance with values of the index matrix. In other examples, where the input is compressed in the result matrix, the structured sparsity factor is 1 : ($s \times s$), where s is a positive integer greater than one.

The hardware accelerator generates, from the multiplier matrix and the compressed input matrix, a result matrix that is equal to the product of the sparse input matrix and the gains matrix, according to block 1040. The process 1000 allows for more efficient multiplication with a compressed input matrix and multiplier matrix generated from the index array, while maintaining the accuracy of the product of multiplying the original matrix with the gains matrix.

Each processing cell of the MXU 100 can be configured to perform the process 1000 and communicate output from each cell to generate an aggregate output for the MXU 100. For example, each processing cell can receive a respective compressed input matrix that is a portion of an aggregate input matrix; store a respective gains matrix that is a portion of an aggregate gains matrix; and generate a respective result matrix that is a portion of an aggregate result matrix. The aggregate result matrix is the product of multiplying the aggregate input matrix and the aggregate gains matrix. The processing cells can be further configured to perform dense matrix multiplication on a dense input matrix and the portion of the gains matrix, in addition to accelerating sparse matrix multiplication.

The process 1000 can be performed over multiple processing cycles. During those cycles, the gains matrix can be stationary in the plurality of processing cells and is multiplied with a plurality of input matrices that are streamed into the plurality of processing cells.

FIG. 12 is a flow diagram of an example process 1100 for accelerating gains matrix loading for sparse matrices on the hardware accelerator, according to aspects of the disclosure. For example, the process 1100 may be performed as part of storing the gains matrix, according to block 1020. In other examples, the process 1100 can be performed before matrix multiplication using the hardware accelerator.

The hardware accelerator receives a compressed gains matrix, according to block 1110. The compressed gains matrix can be provided in addition to an input matrix for multiplying with the gains matrix. For example, the gains matrix can be weight values, activation function values, etc., for multiplying with input matrices streamed into the hardware accelerator. The compressed gains matrix may or may not also be block-scaled.

The hardware accelerator receives an index array, according to block 1120. The index array elements correspond to the locations of elements of the compressed gains matrix in the gains matrix. In some examples, the hardware accelerator generates the index array. In some examples, the hardware accelerator receives the index array in addition to the gains matrix. A compiler or other engine can be configured to generate the gains matrix, in addition to determining the structured sparsity factor of the gains matrix prior to loading.

The hardware accelerator generates the gains matrix from the compressed gains matrix, according to block 1130. Processing cells implemented as part of the MXU can include multiplexors configured to match elements from the compressed gains matrix to corresponding locations in the gains matrix, in accordance with the index array.

The hardware accelerator stores the gains matrix, according to block 1140. For example, the hardware accelerator stores the gains matrix according to registers of processing cells in the MXU. The hardware accelerator has access in memory to the original gains matrix, while only occupying bandwidth enough to receive the compressed matrix. Processing cells can be arranged in a systolic array including one or more rows and one or more columns. Each of the processing cells is configured to receive a respective portion of an aggregate gains matrix based on the respective row and respective column the processing cell is located in the systolic array.

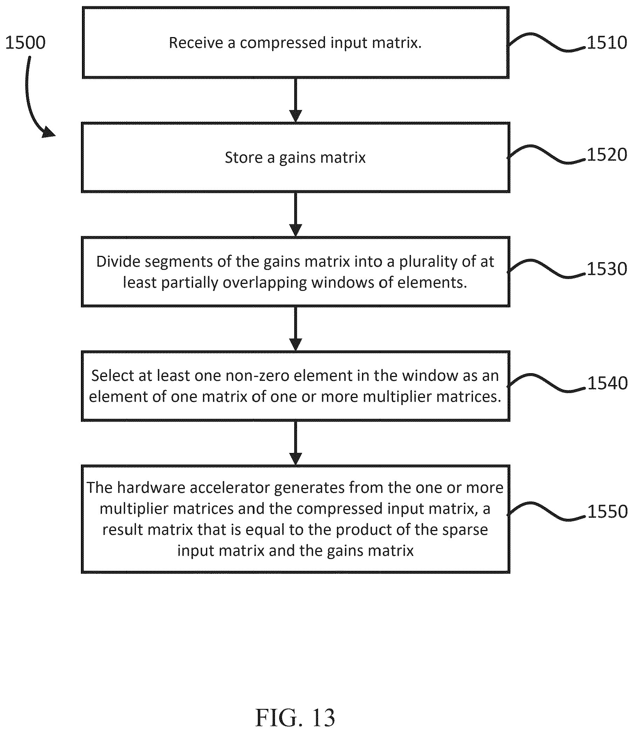

FIG. 13 is a flow diagram of an example process 1500 for structured sparse matrix multiplication with sparsity factor emulation, according to aspects of the disclosure. A processor or processing device, such as a hardware accelerator implementing an MXU, e.g., the hardware accelerator 105 implementing the MXU 100, can perform the process 1500. Operations described may be performed in parallel or sequentially, and the MXU 100 can perform multiple instances of the example process 1500 for different received inputs. In some examples, the process can be performed by an appropriately configured processor, including a CPU, a GPU, FPGA, or ASIC.

For example, the hardware accelerator may be configured to process input matrices compressed according to a 1:4 sparsity factor, e.g., with 4:1 multiplexors. The hardware accelerator can be further configured to perform the process 1300 for emulating support to multiply matrices compressed, for example, according to 3:6 or 2:5 sparsity factors.

The hardware accelerator receives a compressed input matrix, according to block 1510. The compressed input matrix can be compressed from a sparse input matrix in accordance with a target sparsity factor of non-zero-valued to zero-valued elements in the sparse input matrix.

The hardware accelerator stores a gains matrix or a portion of a gains matrix, according to block 1520. The hardware accelerator can be based on a weight-stationary systolic array architecture, in which gains matrices or portions of gains matrices are stored in the accelerator and input to multiply with the gains matrices are streamed into the accelerator.

The hardware accelerator processes the gains matrix to generate one or more multiplier matrices. In processing the gains matrix, the hardware accelerator operates on segments of the stored matrix, each segment of a size corresponding to a target sparsity factor. For example, the hardware accelerator may perform the process 1500 to emulate support for 3: 6 sparsity, when natively the accelerator is configured to support matrix multiplication with matrices compressed according to a 1:4 sparsity factor.

As part of processing the gains matrix, the hardware accelerator divides segments of the gains matrix into a plurality of at least partially overlapping windows of elements, according to block 1530. The length of the window can vary with the number of elements the hardware accelerator is configured to multiplex, for example through a multiplexor. For example, the window length of each overlapping window can be n, where the hardware accelerator is configured to perform an n:1 multiplex operation, e.g., process input through a 4: 1 multiplexor. The target sparsity factor being emulated for multiplication can be $k: (k + n - 1)$, where k is a positive integer.

The hardware accelerator, for each window, selects at least one non-zero element in the window as an element of one matrix of one or more multiplier matrices, according to block 1640. The hardware accelerator can select the non-zero element with the smallest index relative to other elements in the window. As part of the selection, the hardware accelerator can sort elements of the gains matrix and selects the smallest index of a non-zero element from a first window of one of the overlapping windows. The hardware accelerator can iteratively select the next smallest index of a respective non-zero element from subsequent windows and in the segment. The elements corresponding to selected indices are multiplexed from the segment and multiplied with corresponding portions of the input matrix streamed into the accelerator. A multiplier matrix generated from the elements forms an operand to multiply with the input matrix for each window.

The hardware accelerator generates from the one or more multiplier matrices and the compressed input matrix, a result matrix that is equal to the product of the sparse input matrix and the gains matrix, according to block 1550.

FIG. 14 is a flow diagram of an example process 3200 for matrix multiplication acceleration with structured fine-grained sparsity compression on a hardware accelerator, according to aspects of the disclosure. A processor or processing device, such as a hardware accelerator implementing an MXU, e.g., the hardware accelerator 105 implementing the MXU 100, can perform the process 3200. The hardware accelerator 105 can implement a number of processing cells, each processing cell configured to perform the process 3200.

The hardware accelerator receives a compressed and block-scaled input matrix, according to block 3210. The compressed input matrix is compressed from a sparse input matrix in accordance with a sparsity factor of non-zero-valued to zero-valued elements in the sparse input matrix. The hardware accelerator or another device can be configured to compress the sparse input matrix. The hardware accelerator can receive the compressed input matrix directly, e.g., without also receiving the uncompressed version of the input matrix. The matrix can also be block-scaled, for example, using a VPU 195 as shown and described with reference to FIG. 1.

The hardware accelerator generates, from the gains matrix, a multiplier matrix, according to block 3220. The quantity of elements in the multiplier matrix is lower than the quantity of elements in the gains matrix in accordance with the structured sparsity factor. The multiplier matrix includes elements from the gains matrix that are multiplied with elements in the sparse input matrix when the sparse input matrix and the gains matrix are multiplied. The hardware accelerator stores a gains matrix, according to block 3220. The gains matrix can be stored across an array of processing cells.

The gains matrix can be loaded, for example, according to the process 1100 described herein and with reference to FIG. 12. The hardware accelerator can store the gains matrices, e.g., as portions in respective processing cells of a weight-stationary systolic array architecture. In storing the gains matrix, the hardware accelerator can store a scaling factor shared among block-scaled elements of the gains matrix.

In generating the multiplier matrix, the hardware accelerator can receive an index matrix including elements corresponding to the locations of elements of the compressed input matrix in the sparse input matrix. The hardware accelerator can generate the multiplier matrix using a multiplexor configured to select elements from the gains matrix as elements of the multiplier matrix in accordance with elements in the index matrix. In generating the result matrix, the hardware accelerator is configured to scale the selected element elements of the multiplier matrix in accordance with the shared scaling factor, e.g., by casting or shifting elements before the result matrix is output by a processing cell of the hardware accelerator.

The hardware accelerator generates, from the multiplier matrix and the compressed input matrix, a result matrix that is equal to the product of the sparse input matrix and the gains matrix, according to block 3230. The process 3200 allows for more efficient multiplication with a compressed input matrix and multiplier matrix generated from the index array, while maintaining the accuracy of the product of multiplying the original matrix with the gains matrix.

Each processing cell of the MXU 100 can be configured to perform the process 3200 and communicate output from each cell to generate an aggregate output for the MXU 100. For example, each processing cell can receive a respective compressed input matrix that is a portion of an aggregate input matrix; store a respective gains matrix that is a portion of an aggregate gains matrix; and generate a respective result matrix that is a portion of an aggregate result matrix. The aggregate result matrix is the product of multiplying the aggregate input matrix and the aggregate gains matrix. The processing cells can be further configured to perform dense matrix multiplication on a dense input matrix and the portion of the gains matrix, in addition to accelerating sparse matrix multiplication. The process 3200 can be performed over multiple processing cycles. During those cycles, the gains matrix can be stationary in the plurality of processing cells and is multiplied with a plurality of input matrices that are streamed into the plurality of processing cells.

FIG. 15 is a flow diagram of an example process 1700 for generating a scaled value of a result matrix at a processing cell, according to aspects of the disclosure. For example, the process 1700 can be performed by a processing cell as part of generating the result matrix as shown and described, for example, with reference to FIG. 14.

The processing cell receives one or more elements from the input matrix and one or more elements from the gains matrix, according to block 1710. For example, the elements can be from inputs 406C and 408C as shown and described with reference to FIG. 4C.

The processing cell performs a dot product operation on the elements from the input matrix and the gains matrix, according to block 1720. For example, the processing cell can implement dot product 415C for generating an output value representing an element of a result matrix generated from multiplying the input matrix and the gains matrix.

The processing cell generates a combined scaling factor from the shared scaling factor for elements in the input matrix and the gains matrix, according to block 1730. For example, and as shown and described in FIG. 4C, the processing cell can receive scaling factors 490C and 492C at a combiner circuit 488C for generating a combined scaling factor 480C.

The processing cell converts the output value to a scaled output value in accordance with the combined scaling factor, according to block 1740. For example, the processing cell can cast or scale the output from the dot product unit 415C using caster/shifter unit 496C.

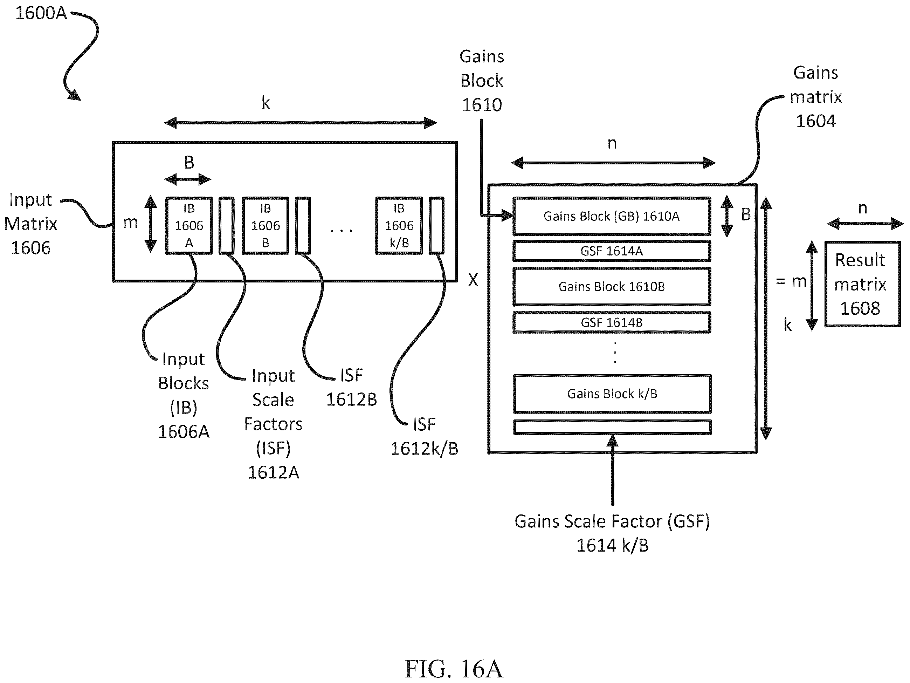

FIG. 16A is a block diagram 1600A of block-scaled matrix multiplication of input block operands with a contraction dimension that is larger than the block size of the input block operands, according to aspects of disclosure. A matrix-multiply unit (MXU) can perform a matrix multiplication between two operands, an $m \times k$ input matrix 1606 streamed into the MXU, and a $k \times n$ gains matrix 1604, loaded in the MXU. The result of the multiplication is an $m \times n$ result matrix 1608.

The contraction dimension of the MXU can be $k$, while the input matrix 1606 can be divided into $\frac{k}{B}$ blocks, e.g., input blocks (IBs) 1606A, 1606B, and 1606k/B, where $B$ is the block size and $k$ is the number of blocks. Each block has dimension $m \times B$, and is associated with respective input scaling factors, e.g., input scaling factors (ISFs) 1612A through 1612k/B. The scaling factors can be arranged in a vector, with the various scaling factors corresponding to a respective collection of $B$ elements in an input block. For example, each input block includes m collections of $B$ elements, each with a corresponding scaling factor. Because an input block is a matrix of dimension $m \times B$, the corresponding input scaling factors for the block can be represented in a vector m elements long. The gains matrix is also divided into blocks of size $B$, e.g., gains blocks (GBs) 1610A, 1610B, and 1610k/B, with each block having dimension $B \times n$.

Gains blocks 1610A through 1610k/B also have respective gains scaling factors (GSFs), e.g., GSFs 1614A, GSFs 1614B, and GSFs 1614k/B. GSFs correspond to collections of $B$ gains matrix elements, of which there are $n$ collections in each block. Accordingly, GSFs for each gains block is $n$ elements long. Grouping collections in this manner allows for a single input or gain block to represent multiple collections of block-scaled elements, for parallelized computation. Each row of an input block corresponds to a respective input scaling factor, and each column of a gains block corresponds to a respective gains scaling factor, as shown in FIG. 16A. When streaming or loaded into an MXU, the blocks may be transposed, flipping columns/rows and their corresponding scaling factors. Although FIG. 16A shows some input blocks, input scaling factors, gains blocks, and gains scaling factors, it is understood that the MXU implementing the block-scaled matrix multiplication as described herein can process more blocks and scaling factors than shown.

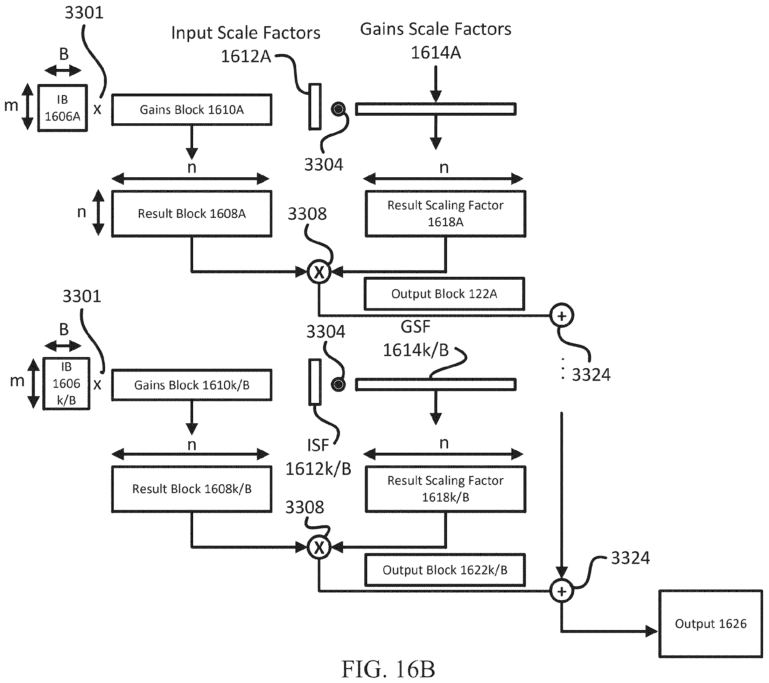

FIG. 16B is a block diagram of an example circuit 1600B for performing block-scaled matrix multiplication with a contraction dimension that is larger than the block size of the input block operands, according to aspects of the disclosure.

The circuit 1600B multiplies input blocks and gains blocks and aggregates result blocks to generate an overall output 1626 of dimension $m \times n$.

For example, input block 1606A and gains block 1610A are multiplied according to matrix multiplication operation 3301 to generate result block 3302. The operation 3301 can be performed, for example, by a processing cell in a systolic array of processing cells, as described herein. A processing cell can multiply the input block 1606A by the gains block 1610A to generate result block 1608A. Another processing cell can multiply the input block 1606k/B by the gains block 1610k/B to generate result block 108k/B. Multiple processing cells can each perform the operation 3301 for multiplying respective blocks, the streaming of which into the systolic array of an MXU is described in more detail here.

The circuit 1600B also performs an outer product multiplication of the scaling factors of each block multiplied. For example, the circuit 1600B performs an outer product multiplication operation 3304 of input scaling factor 1612A and gains scaling factor 1614 to generate result scaling factor 1618A. Input scaling factor 1612k/B and gains scaling factor 1614k/B are also multiplied to generate result scaling factor 1618k/B, as shown in FIG. 16B, and it is understood that similar multiplication operations are performed between input/gains blocks and input/gains scaling factors that are not shown.

The circuit 1600B scales the result blocks that are the products of gains blocks and input blocks, with result scaling factors that are the products of gains scaling factors and input scaling factors. Scaling operation 3308 can include shifting or casting elements in a result block according to the corresponding result scaling factor. The output of the scaling operation 208 is an un-scaled result block, e.g., un-scaled result block 3310 from result block 3302 and result scaling factor 3306. For example, the circuit 1600B performs scaling operation 3308 for scaling the result block 1608A by the result scaling factor 1618A, to generate output block 1622A. As another example, result block 1608k/B is scaled by result scaling factor 1618k/B to generate output block 1622k/B.

The circuit 1600B aggregates the output blocks to generate an overall output 1626 from multiplying the input matrix 1606 and the gains matrix 1610. Aggregation operation 3324 can include adding, concatenating, or any other operation that when executed causes the output 1626 to be generated from the individual output blocks 1622A, 1622k/B, and other output blocks not shown in FIG. 16B for brevity. The hardware circuit 1600B can be implemented as a systolic array of processing cells. Each processing cell generates both the resulting matrix of multiplying two blocks together, as well as the resulting scaling factor from multiplying the scaling factors of the operand blocks. The operations described with reference to FIG. 16B can be repeated for each of the $\frac{k}{B}$ input blocks and gains blocks to generate the output 1626.

FIG. 17 is a block diagram of an example hardware accelerator 1700 implementing processing cores for block-scaled matrix multiplication, according to aspects of the disclosure. Hardware accelerator 1700 can include on-chip interconnect 305, high bandwidth memory 310, and processing core 315. The hardware accelerator 1700 can include multiple processing cores, e.g., processing core 315 and processing core 315B. If the hardware accelerator 1700 includes multiple processing cores, then the processing cores may be implemented the same or different from one another. Processing core 315, for example, can include vector processing unit (VPU) 1795, scaling factor generator 325, and matrix multiply unit (MXU) 330. VPU 1795 may include components and functionality described herein with reference to VPU 195 in FIG. 1. VPU 1795 can include scaling factor orchestrator 322 and serializer 340. VPU 1795, scaling factor generator 325, and MXU 330 can be connected through processing lanes 335. The exact position and configuration of the various components shown with reference to FIG. 17 and elsewhere in the drawings can vary from example-to-example, as described further herein.

In some examples, the hardware accelerator 1700 may implement components and/or functionalities described above, e.g., structured sparse workload acceleration with or without block-scaled input or gains matrices. For example, the MXU 1730 may extend functionalities and configurations described with reference to the MXU 100 of FIG. 8, or vice versa. In other examples, the systolic array 332 may implement processing cells as described with reference to FIGs. 7-9. As another example, the hardware accelerator 1700 may implement compression hardware 900, for example as shown and described with reference to FIG. 10.

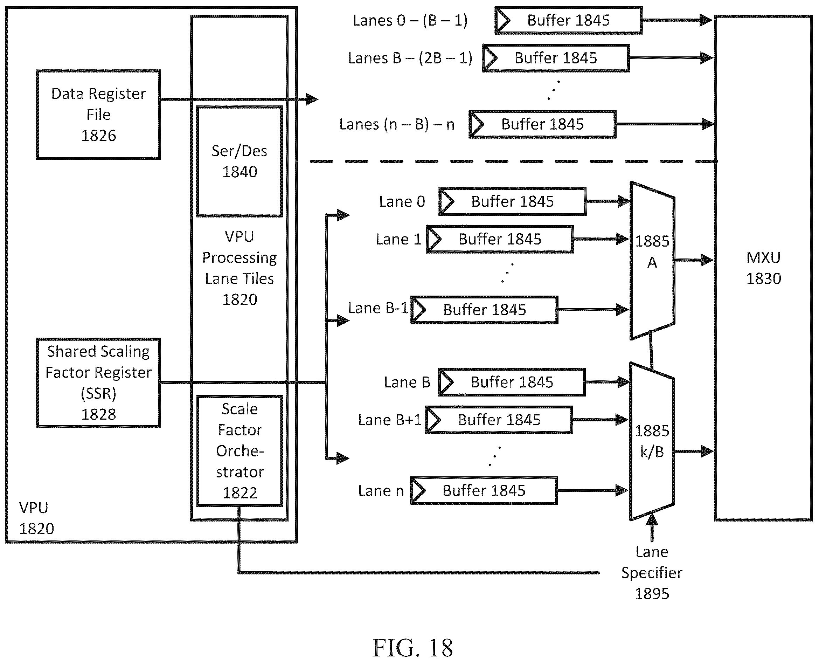

Vector processing unit (VPU) 1795 can be configured for performing arithmetic operations associated with vectorized computations. For example, the VPU 1795 can be configured for performing element-wise operations on incoming data elements, such as division by a scaling factor, transposition, multiplication by a common factor, and so on. As shown in more detail with reference to FIG. 4, the VPU 1795 can include data register file 326 and shared scaling factor register 328, for example for storing input blocks and scaling factors streamed into the MXU 330. As also shown in FIG. 18, the VPU 1795 can include processing lane tiles 320 corresponding to processing lanes of the processing lanes 335.

The scaling factor orchestrator 322 is an engine configured to orchestrate the transmission of scaling factors along the processing lanes 335, to provide for the correct scaling factors being transmitted with corresponding data from input blocks. Operations the scaling factor orchestrator 322 is configured to perform are described in more detail with reference to FIG. 18.

The serializer/de-serializer (ser/des) 340 is a component of the VPU 1795 configured to serialize and de-serialize data along the processing lanes 335. For example, data representing a matrix can be received from the processing lanes 335, which the ser/des 340 can serialize to combine into a complete matrix, before further communicating or storing the data elsewhere in the hardware accelerator 1700 or another component. As another example, the VPU 1795 can receive data, for example a matrix, from high bandwidth memory (HBM) 310, and de-serialize the matrix into rows of data across multiple processing lanes 335.

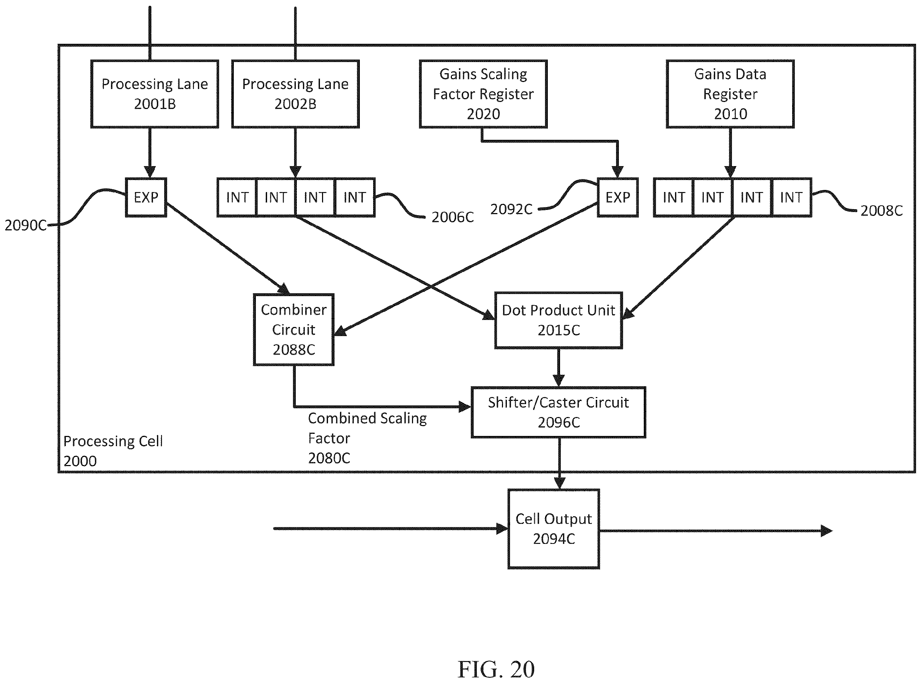

MXU 330 can be a component of the hardware accelerator 1700 configured for accelerating matrix multiplication and other operations in which matrices are inputs. The VPU 1795 and the MXU 330 can communicate along the processing lanes 335. Input data, such as the input matrix 1706 can be streamed into the MXU 330 as input blocks and their respective scaling factors, the orchestration of which can be managed by the scaling factor orchestrator 322 and is described in more detail with respect to FIG. 18. The MXU 330 can implement a systolic array 332, which can include individual processing units, referred to as processing cells. Processing cells, for example as described herein with reference to FIG. 20, can be configured to implement the hardware circuit 100B described with reference to FIG. 16B.

The scaling factor generator 325 is an engine configured to generate scaling factors for input streamed into the MXU 330. As described herein, streamed input, such as activation outputs from a neural network layer, cannot be pre-quantized, unlike trained weights in gains matrices, which may be stored in registers of systolic array 332. In some examples, the scaling factor generator 325 is a cross-lane processing unit, for example as shown with reference to FIG. 21A. In some examples, the scaling factor generator 325 is part of the VPU 1795, although as described herein the various components depicted can be physically or logically arranged consistent with aspects of the disclosure. These physical or logical arrangements can include splitting the operations described herein into more components, and/or combining some operations performed into fewer components of the hardware accelerator 300.

On-chip interconnect 305 can be any type of interconnection technology for communicating data across components of the same or different chips or substrates. For example, the on-chip interconnect 305 can include wire interconnects embedded in the substrate housing the components of the hardware accelerator 300. The on-chip interconnect 305 can also include interfaces for connecting the hardware accelerator 300 to other hardware accelerators or devices, e.g., optical circuit switch interfaces, wired interfaces, and/or wireless interfaces.

High bandwidth memory 310 can be any type of memory and corresponding interface for communicating input, intermediate, or output data to and from the processing cores 315, 315B. Intermediate data can refer to any data generated by the processing cores 315, 315B, which may be generated as part of executing a workload and generating output data. Example high bandwidth memory technologies include 3D-stacked memory. It is understood that in other examples other types of memory technologies may be used, including different forms of random-access memory (RAM).

FIG. 18 is a block diagram of data flow through the processing lanes 335 between the VPU 1795 and the MXU 330 of the processing core 315 of FIG. 17. The scaling factor orchestrator 322 is configured to store and orchestrate the movement of shared scaling factors for block sizes smaller than the total number of processing lanes of the processing lanes 335. The orchestration allows for higher throughput of block-quantized matrix multiplication, by fully utilizing all available processing lanes. Data register file 326 stores input data, which is streamed across the processing lanes 335. Shared scaling factor register (SSR) 328 is configured to store scaling factors corresponding to blocks of streamed input data. The contents of both register files 326, 328 are streamed into the MXU 330 during matrix multiplication. The contraction dimension of the data register file 326 is mapped along the number of processing lanes 335. For ease of explanation, the processing lanes 335 are represented twice in FIG. 18, once above and once below the dashed line.

Above the dashed line, the processing lanes 335 are labeled in groups of size $B$. Every cycle, the ser/des 340 streams in m data elements from each lane. For example, across $B$ processing lanes, a total of $m \times B$ data elements are streamed to the MXU 330. Buffers 345 can be memory buffers used by the ser/des 340 for collecting the $m$ data elements per processing lane before streaming to the MXU 330. For example, lane 0 to lane $(B - 1)$ can transmit m data elements times $B$ lanes for an input block of dimension $m \times B$. Similarly, lane $B$ to lane $(2B - 1)$ can transmit $m$ data elements times $B$ lanes for another input block, and so on with lanes $(n - B)$ to lane $n$, the last lane of the processing lanes 335. To that end, a group of $B$ lanes produces $m \times B$ data elements per cycle and share $m$ scaling factor elements produced by any one of the $B$ lanes.

Below the dashed line is a re-labeling of processing lanes 0 through $n$, but each processing lane is labeled individually, e.g., lane 0 through lane $B - 1$, then lane $B$ through lane $(2B - 1)$ (not shown), up to lane n. Per cycle, one processing lane of every $B$ lanes can send input scaling factors corresponding to a respective set of m data elements transmitted of the $m \times B$ data elements transferred across the $B$ lanes, as shown and described with reference to the portion of FIG. 18 above the dashed line.

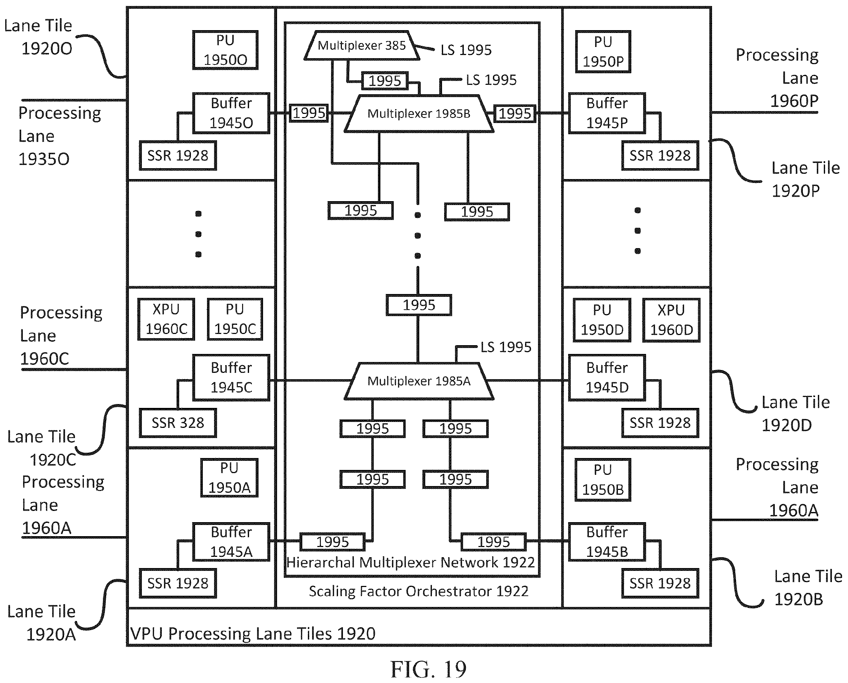

Which of the $B$ lanes in a group transmits the corresponding scaling factor from the SSR 328 depends on a lane specifier 395 generated by the scaling factor orchestrator 322. Multiplexers 385A, 385k/B are examples of multiplexers that can be implemented as part of a multiplexer network of the scaling factor orchestrator 322, described in more detail with reference to FIG. 19.

The lane specifier 395 can be a value from 0 to $B$, indicating which lane scaling factors for a given matrix multiplication should be sent to the MXU 330. The lane specifier 395 is received by the multiplexers 385, which receive the scaling factors from the corresponding lane indicated by the lane specifier 395.

For example, suppose there are three sets of input blocks being streamed into the MXU 330, each set corresponding to a respective operand in a different matrix multiplication operation. The scaling factor orchestrator 322 can receive a signal indicating three different input operands are being received and assign a lane specifier to the scaling factors for each operand. For example, scaling factors for the first operand can be assigned lane specifier 0, scaling factors for the second operand can be assigned lane specifier 1, and scaling factors for the third operand can be assigned lane specifier 2. The lane specifier 395 indicates which processing lanes are to stream which scaling factors to ensure that the MXU 330 receives the correct scaling factors for each input block.

Continuing the example, lane specifier 0 can indicate that scaling factors for the first input operand be streamed through lanes 0, $B$ - 1, $2B$ - 1, and so on. Lane specifier 1 can indicate that scaling factors for the second input operand be streamed through lanes 1, $B$, $2B$, and so on. Lane specifier 2 can indicate that scaling factors for the third input operand be streamed through lanes 3, $B$ + 1, $2B$ + 1, and so on.

By streaming scaling factors for different input operands, the VPU 1795 can more effectively utilize the processing lanes for streaming scaling factors, by packing each processing lane with scaling factors instead of only streaming scaling factors from one of the processing lanes. scaling factors can be stored in the buffers 345 until the corresponding m data elements for the scaling factor are streamed through the group of $B$ processing lanes. Interleaving the scaling factors of multiple input operands enables parallelizing the streaming of scaling factors across groups of $B$ processing lanes, while still keeping the $m$ data elements streamed with corresponding scaling factors in the same group of processing lanes, e.g., $m \times B$ data elements streamed across $B$ lanes that also streams the $m$ scaling factors corresponding to the data elements.

As described herein, the scaling factor generator 328 can generate and store the scaling factors in a dense format and a replicated format. The dense format can be a single copy of scaling factors for each $m \times B$ input block representing an input matrix. A single copy is sent to each group of $B$ processing lanes, as described above. The replicated format can include $B$ copies of each scaling factor, sent to each of the $B$ processing lanes. The replicated scaling factors are used by processing lane tiles of each processing lane to divide incoming input data, for generating the block-scaled data elements.

For example, processing lane tiles for each processing lane are configured to perform element-wise division of incoming data, by the corresponding scaling factor received. Each processing lane has to divide incoming data to generate the block-scaled elements, therefore the replicated scaling factors are provided to each lane. The scaling factor orchestrator 322 can assign lane specifiers as incoming data is received for performing matrix multiplication. For example, the lane specifiers can be assigned in a round-robin fashion, modulo the number of processing lanes of length $B$.

FIG. 19 is a block diagram of the example scaling factor orchestrator 322 of FIG. 17, according to aspects of the disclosure. scaling factor orchestrator 322 can be at least partially implemented by processing lane tiles 320A through 320P, which may be part of the VPU processing lane tiles 320, e.g., as shown in FIG. 18. The VPU processing lane tiles 320 can include more tiles than what is shown in FIG. 19. Lane tiles 320A, 320B, 320C, 320D, 3200, and 320P can include buffers 345A, 345B, 345C, 345D, 3450, and 345P; processing units ("PUs") 450A, 450B, 450C, 450D, 4500, and 450P. A processing lane tile can include registers, such as access to SSR 328, as well as access to lane-specific registers, common registers, lane-specific sources of memory, and/or common sources of memory, such as cache memory, volatile memory, and/or persistent storage devices.

A processing unit of a lane tile can be any type of processing unit, e.g., a central processing unit or specialized hardware for performing various operations on data streamed through the corresponding processing lane for the lane tile. Each lane tile can be associated with a processing lane, and each processing lane may be in communication with one or more lane tiles. For example, the lane tiles 320A-320P can be communicatively coupled to processing lanes 335A, 335B, 335C, 335D, 3350, and 335P, for example as shown in FIG. 19.

Buffers 345A, 345B, 345C, 345D, 3450, and 345P can be examples of buffers 345. The buffers stream into multiplexers, such as multiplexers 485A and 485B. The multiplexers 485A, 485B, receive lane specifiers 395 indicating from processing lane to receive the scaling factors for data streamed across $B$ processing lanes. The lane specifier 395 can be a control signal or a packet of data a multiplexer is configured to receive for determining from which input lane to pass data through as output. Delay elements 495 can be added along each connection from the lane tiles 320A-320P to delay the transmission of data for syncing receipt by a downstream multiplexer. The number and arrangement of delay elements 495 can vary from example to example. Delay elements can be, for example, any type of circuit configured to delay the transmission of data along a wire or lead by one or more cycles.

The hierarchical multiplexer network 422 can include multiple multiplexers that receive input from other multiplexers, enabling scaling factors from any specified lane to be output by the scaling factor orchestrator 322. For example, multiplexer 385 can receive the lane specifier 395 and forward, as output, scaling factors from the lane specified. The network 422 can receive multiple lane specifiers for coordinating the sending of multiple different scaling factors.

FIG. 20 is a block diagram of an example processing cell 2000, according to aspects of the disclosure. The example processing cell 2000 can be part of a systolic array, for example as shown and described with reference to FIG. 21. For example, block input 2006C can be block-scaled data elements of input matrix 1606 of FIGs. 16A-16B. In this example, block input 2006C includes four integer elements, indicated as boxes in FIG. 20 marked as "INT." For example, the block size can be 4 for purposes of the example computation shown in FIG. 20, but is understood that the elements may be of varying bit-widths, formats, and collectively be of different block sizes. Input 2006C also includes a scaling factor 2090C, denoted by a box marked as "EXP." The scaling factor 2090C may be represented, for example, as a floating-point value or as a power-of-two.

The scaling factors 2090C include multiple scaling factors, e.g., represented as a vector, corresponding to scaling factors of blocks of size 4 elements from an input block, such as input block 1606A of FIGs. 16A-16B. scaling factors 2090C can be received from a processing lane 501B, and the input block 406C can be received from a processing lane 502B. The processing lanes 501B and 502B may be the same lanes or come from the same group of $B$ lanes transmitting block-scaled data elements of the input matrix 106.

Gains block 2008C can be a portion of the gains matrix 1604 as shown in FIGS. 16A-16B. The gains block 2008C may also be block-scaled with a scaling factor 2092C. The gains block 2008C can be loaded into the processing cell 2000 and stored in gains data register 2010. The gains block 2008C is multiplied with different streamed input over a number of cycles, e.g., remaining stationary while input is streamed into a systolic array, e.g., the systolic array 500 of FIG. 6, and each processing cell of the array. The scaling factors 2092C corresponding to the gains block 408C can also be loaded and stored in a gains scaling factor register 520.

Combiner circuit 2088C is configured to add or multiply input scaling factors together to generate a combined scaling factor 2080C. For example, combiner circuit 488C can implement the operation 3204 shown and described with reference to FIG. 16B. For example, if the scaling factors are a power-of-two, the scaling factors are added by the combiner circuit 2088C. Otherwise, the combiner circuit 2088C can multiply the input scaling factors to generate combined scaling factor 2080C. In some examples, the combiner circuit 2088C can receive a signal or determine whether the input scaling factors are power-of-two or not, and perform the corresponding combination operation, e.g., addition or multiplication. The combined scaling factor 2080C of the combiner circuit 2088C is sent to shifter/caster unit 496C, for shifting or casting the output of the dot product unit 2015C, depending on whether the scaling factors are, for example, represented as floating-point values or as powers-of-two. Dot product unit 2015B can be a circuit configured to compute a dot product between inputs 2006C and 2008C. The output of the dot product unit 2015C can be passed to a caster/shifter circuit 2096C. For example, the dot product unit 2015B can be configured to perform the operation 201 shown and described with reference to FIG. 16B.

The shifter/caster unit 2096C is configured to shift or cast the output of the dot product unit 2015C to revert the output from the block-scaled format, e.g., to elements each having a respective significand and exponent. If the combined scaling factor 2080C from the combiner circuit 2088C is a floating-point value, the output from the dot product unit 2015C is cast to the format corresponding to the scaling factor sum, e.g., floating point values in the example in which the scaling factors are represented as floating-point values. For example, the shifter/caster unit 2096C can be configured to perform the operation 3308 as shown and described with reference to FIG. 16B. If the output of the combiner circuit 2088C is a power-of-two, then the shifter/caster unit 496C can bit-shift the elements output from the dot product unit 2015C in accordance with the scaling factor sum. For example, if the output of the combiner circuit 2088C is $2^4$, the shifter/caster unit 2096C can bit shift output elements of the dot product unit 2015C by four. Output from the processing cell 2000C can be represented as cell output 2094C. The cell outputs of different processing cells, e.g., the processing cells of a systolic array of which the processing cell 2000C, can be accumulated by the MXU implementing the systolic array as part of generating a result matrix representing the product of multiplying the two inputs. For example, the cell output 2094C can be the output 1626 shown and described with reference to FIG. 16B.

FIG. 21A is a block diagram of an example scaling factor generator 2100A, according to aspects of the disclosure. The scaling factor generator 2100A can receive input from multiple processing lanes, e.g., processing lanes 2110 and 2120. Processing lanes 2110 and 2120 may be compared with the processing lanes described with reference to FIGs. 2 and 3. For ease of explanation, two processing lanes are shown in FIG. 21A, streaming data elements a1 and a2. The data elements can be, for example, the output of applying activation functions is part of processing a neural network layer. The scaling factor generator 2100A can receive these and other types of dynamic data elements, which can be generally any type of data which can vary from operation-to-operation. Data elements in gains blocks, for example, can be static data, which generally does not vary from operation to operation, remaining stationary in the systolic array of an MXU. scaling factors for static data elements may be pre-computed, e.g., outside of the hardware accelerator implementing the scaling factor generators described herein, although in some examples, scaling factors for static data elements may be generated for example as described herein with reference to FIGs. 21A and 21B.

The scaling factor generator 2100A can implement a transpose engine 2125, configured to transpose input along a lane dimension to a sub-lane dimension. For example, the transpose engine 2125 can receive data elements a1 and a2 streamed along the processing lane a1 and the processing lane a2, respectively. The transpose lane can transpose the elements, such that the elements are now streamed along one processing lane, e.g., processing lane 2110. Processing lanes can include sub-lanes for streaming data elements along, e.g., sub-lane 2115A and sub-lane 2115B. Although only two sub-lanes are shown for the processing lane 2110, it is understood that processing lanes can include more sub-lanes configured for cross-lane operations amongst each of the sub-lanes.

Each processing lane can be configured with multiple sub-lanes for performing cross-lane operations more efficiently, e.g., fewer cycles to read and write data, versus operations on elements across different lanes. Transposing the elements along the sub-lane dimension improves the throughput of the scaling factor generator 2100A in generating a common scaling factor, at least because fewer cycles are spent reading and writing to processing lanes along a dimension different than the dimension intended for SIMD operations, e.g., the lane dimension.

Max value engine 2130 can be configured to determine the maximum value of elements streamed along the sub-lanes of the processing lane 2110. If the data elements can have negative values, then the max value engine 2130 can be configured to determine the maximum absolute value of the streamed data elements. To determine the maximum (absolute) value, the engine 2130 can scan the elements along the sub-lanes 2115A, 2115B, and determine the largest (absolute) value from the scanned elements.

Reduction engine 2140 can be configured to reduce the max value identified by the max value engine 2130 by a factor, which when used as a divisor of all the elements of a block, captures the dynamic range of the block in the lower-precision target format. The reduction engine 2140 can be pre-configured with or receive a target format for determining the range to cause streamed data elements to divide into when divided by a common scaling factor. The reduction engine 2140 receives the max value of the data elements received to determine the largest value that fits the target format, as all elements with smaller values will inherently also fit in the target format when divided by the same scaling factor.

The reduction engine 2140 can store dense scaling factors 2150 in a shared scaling factor register, e.g., the SSR 328. As described herein with reference to FIGs. 17 and 18, using the separate formats for the scaling factors reduces data transmission for sending scaling factors along one per *B* processing lanes for the dense format, while providing the scaling factors for block scaling input data elements in the replicated format. Replicated scaling factors 21210 can be generated from dense scaling factors 2150 stored in the SSR 328, e.g., by replicating each scaling factor of the dense scaling factors 2150 as needed.

FIG. 21B is a block diagram of another example scaling factor generator 2100B, according to aspects of the disclosure. In some examples, the scaling factor generator may be a type of cross-lane processing unit, configured to perform operations between processing lanes of a SIMD-configured device. The generator 2100B can be configured to execute instructions or primitive operations defined in an instruction set architecture (ISA) for the device implementing the scaling factor generator 2100B. For example, the ISA can include operations for transposing data, determining a maximum value from the transposed data, and reducing the data by a common scaling factor. In some examples, the ISA can define a reduction operation for performing all of these instructions as a single operation. These instructions can be coded as control signals sent to components of the scaling factor generator 2100B, for configuring the generator 2100B to determine a scaling factor.

Processing lanes 2110 and 2120 stream in data elements b1 and b2 into crossbar 2170. Crossbar 2170 can be any type of circuit configured to route data processing units (PUs) 2180A and 2180B. Processing units 2180A and 2180B can be configured to receive and perform operations to reduce the incoming data elements by a common scaling factor, e.g., by determining the largest-valued element received, and dividing that element by a scaling factor to return a block-scaled element in a target format, e.g., a 4 bit value. Multiple iterations of crossbars and processing units can be layered in the scaling factor generator 2100B, terminating in a final crossbar 2190. The combination of crossbar and processing units allow for data to be compared and manipulated across the lane dimension, e.g., across the processing lanes 2110, 2120. The scaling factor generator 2100B may be configured to generally perform different types of cross-lane operations. The number of crossbars and processing units to determine a common scaling factor may be fewer than what is implemented by the generator 2100B. The generator 2100B can output and store dense scaling factors 2150 and replicated scaling factors 21210 in the SSR 328.

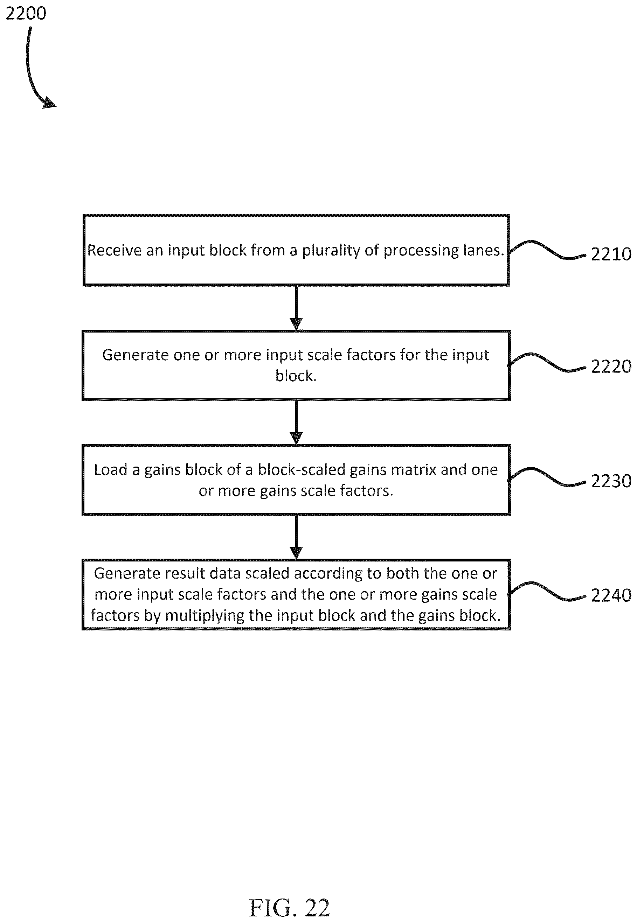

FIG. 22 is a flow diagram of an example process 2200 for performing block-scaled multiplication with scaling factor orchestration, according to aspects of the disclosure. For example, a processing device, such as the hardware accelerator 300 of FIG. 17 can perform the processes described herein.

The processing device receives an input block from a plurality of processing lanes, according to block 710. The number of processing lanes is greater than a block size for an input block of a block-scaled input matrix. The input block can be, for example, the input block 1606A of FIGs. 16A-16B. For example, the input block can include output activations of a neural network layer, or any other input that may be streamed into a matrix-multiply unit of the processing device.

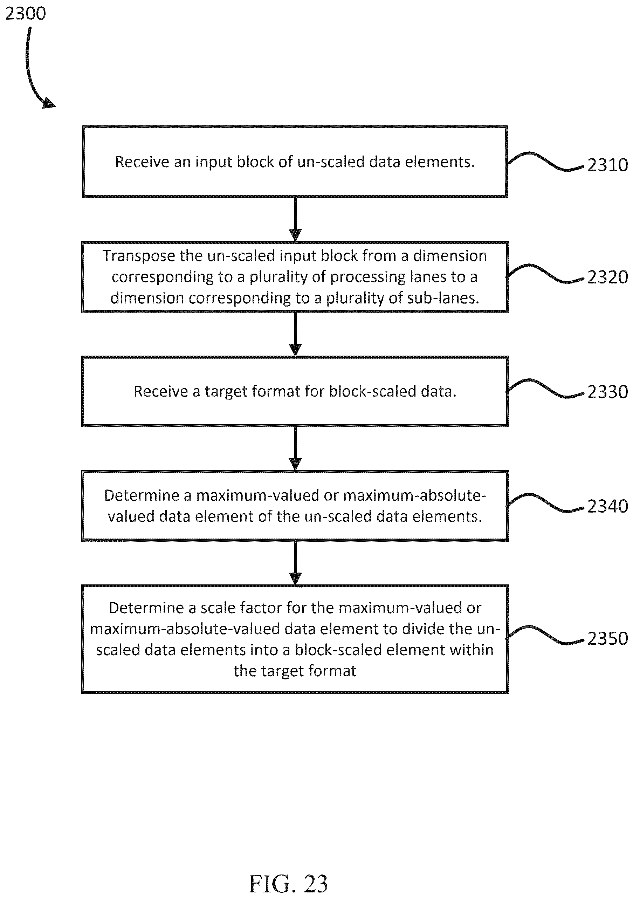

The processing device generates one or more input block scaling factors for the input block, according to block 720. The one or more input block scaling factors can be a vector of scaling factors corresponding to the input block. For example, the one or more scaling factors can be the input scaling factors 1612A, 1612B, 1612k/B, and so on, of FIGs. 16A-16B. The generation can be performed by a scaling factor generator, e.g., the scaling factor generators 325, 2100A, and/or 2100B as described herein. Example processes for generating input block scaling factors include the process 2300 of FIG. 23.

The one or more input scaling factors can be generated according to a dense scaling factor format and a replicated scaling factor format. The dense scaling factor format can include a copy of the one or more input scaling factors for each *B* processing lanes of the plurality of processing lanes, where *B* is equal to the block size of the input block. The replicated scaling factor format can include a copy of the one or more input scaling factors for each processing lane of a group of *B* processing lanes.

The processing device loads a gains block of a block-scaled gains matrix and one or more gains scaling factors, according to block 2230. For example, the gains block can be gains block 1610A and the one or more gains scaling factors can be the gains scaling factors 1614A of FIGs. 16A-16B. The gains block and scaling factors can be loaded, for example as described herein with reference to FIG. 20.

The system generates result data scaled according to at least both the one or more input scaling factors and the one or more gains scaling factors by multiplying the input block and the gains block, according to block 2240. For example, the processing device can perform the operations 3301, 3304, 3308, and 3324 as described with reference to FIGs. 16A-16B, for multiplying the blocks and scaling factors, and scaling the output of multiplying the blocks by the product of multiplying the scaling factors.

The process 2200 can be repeated for a plurality of input blocks and scaling factors, e.g., the input blocks 1606A-1606k/B, the input scaling factors 1612A-1612k/B, the gains blocks 1610A-1610k/B, and the gains scaling factors 1614A-1614k/B.

FIG. 23 is a flow diagram of an example process 2300 for generating block scaling factors for dynamically streamed data, according to aspects of the disclosure. The process can be performed, for example, by a processing device implementing a scaling factor generator as described in either FIG. 21A or FIG. 21B. For example, the generator can be a series of engines performing different operations, e.g., transposition, scanning and identifying max-valued elements, and so on.

A processing device receives an input block of un-scaled data elements, according to block 2310. The input block can include dynamic data, e.g., data that changes with each matrix multiplication performed by the processing device. The gains blocks loaded in a systolic array for the processing device may be examples of static data, which do not change from multiplication-to-multiplication. For example, the input data may be activations from a previous neural network layer, and the gains blocks may be weights for the current neural network layer being executed. The data elements of the blocks may be a combination of sparse data, e.g., containing one or more zero elements or zero-valued elements, and/or dense data, e.g., not containing one or more zero elements or zero-valued elements. Sparsity can depend on a predetermined threshold, e.g., with elements below the threshold considered "dense" data elements and elements at or above the threshold considered "sparse" data elements.

The processing device transposes the un-scaled input block from a dimension corresponding to a plurality of processing lanes to a dimension corresponding to a plurality of sub-lanes, according to block 2320. The processing lanes can be configured for accelerating SIMD operations along the lane dimension, e.g., data within the same lane, but may not be configured for accelerating operations across lanes. The processing device transposes the un-scale input block, for example to bring all the data elements of a block from a plurality of processing lanes to a plurality of processing sub-lanes within the same processing lane. To that end, cross-lane operations for sub-lanes within a processing lane can be performed more efficiently than cross-lane operations across SIMD-configured processing lanes.

The processing device receives a target format for block-scale data, according to block 2330. For example, the target format can be specified by a bit-width, e.g., 2 bits, 3, bits, 4, bits, and so on.

The processing device determines a maximum-value or maximum-absolute-valued data element of the un-scaled data elements, according to block 2340. For example, the processing device can scan the data elements and identify the largest (absolute)-valued element.

The processing device determines a scaling factor for the maximum-valued or maximum-absolute-valued data element to divide the un-scaled data elements into a block-scaled element within the target format, according to block 2350. For example, a scaling factor reduction can include determining a scaling factor which, when divided into the max-valued data element, generates a quotient that is within the target format.

Example Computing Environment

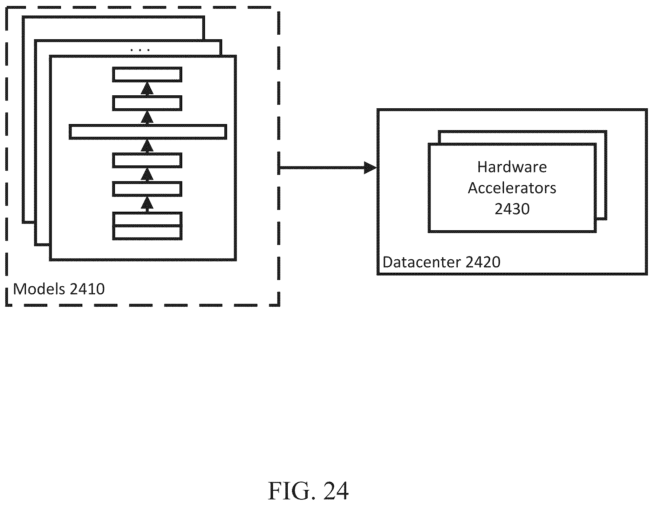

FIG. 24 is a block diagram illustrating one or more model architectures 1200, such as for deployment in a datacenter 1350 housing a hardware accelerator, e.g., hardware accelerator 105 but also hardware accelerator 300 in some examples, on which the deployed models will execute for matrix multiplication with structured sparse compression. The hardware accelerator can be any type of processor, such as a CPU, GPU, FPGA, or ASIC such as a TPU.

An architecture of a model can refer to characteristics defining the model, such as characteristics of layers for the model, how the layers process input, or how the layers interact with one another. For example, the model can be a convolutional neural network that includes a convolution layer that receives input data, followed by a pooling layer, followed by a fully connected layer that generates a result. The architecture of the model can also define types of operations performed within each layer. For example, the architecture of a convolutional neural network may define that rectified linear unit (ReLU) activation functions are used in the fully connected layer of the network. One or more model architectures can be generated that can output results of operations accelerated with the hardware accelerator implementing a matrix multiplication unit as described herein.

The machine learning models can be trained according to a variety of different learning techniques. Learning techniques for training the machine learning models can include supervised learning, unsupervised learning, semi-supervised learning, and reinforcement learning techniques. For example, training data can include multiple training examples that can be received as input by a model. The training examples can be labeled with a desired output for the model when processing the labeled training examples. The label and the model output can be evaluated through a loss function to determine an error, which can be backpropagated through the model to update weights for the model. For example, a supervised learning technique can be applied to calculate an error between outputs, with a ground-truth label of a training example processed by the model.

Any of a variety of loss or error functions appropriate for the type of the task the model is being trained for can be utilized, such as cross-entropy loss for classification tasks, or mean square error for regression tasks. The gradient of the error with respect to the different weights of the candidate model on candidate hardware can be calculated, for example using a backpropagation algorithm, and the weights for the model can be updated. The model can be trained until stopping criteria are met, such as a number of iterations for training, a maximum period of time, a convergence, or when a minimum accuracy threshold is met.

The model or policy can be modified or updated until stopping criteria are met, such as a number of iterations for training, a maximum period of time, a convergence of estimated rewards or value between actions, or when a minimum value threshold is met. A model can be a composite of multiple models or components of a processing or training pipeline. In some examples, the models or components are trained separately, while in other examples, the models or components are trained end-to-end.

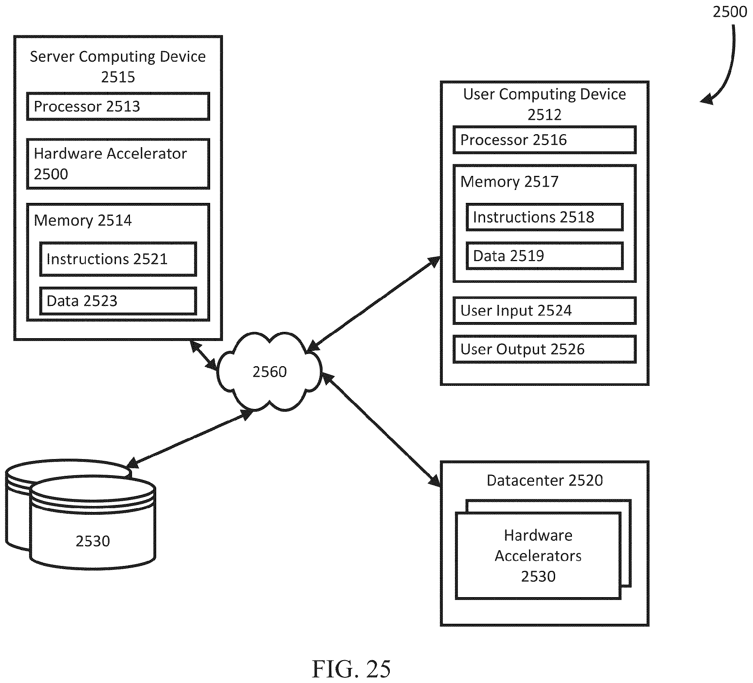

FIG. 25 is a block diagram of an example computing environment 1300 for implementing a system including a hardware accelerator 105 with the matrix multiplication unit 100. User computing device 1312 and the server computing device 1315 can be communicatively coupled to one or more storage devices 1330 over a network 1360. The storage device(s) 1330 can be a combination of volatile and non-volatile memory and can be at the same or different physical locations than the computing devices 1312, 1315. For example, the storage device(s) 1330 can include any type of non-transitory computer readable medium capable of storing information, such as a hard-drive, solid state drive, tape drive, optical storage, memory card, ROM, RAM, DVD, CD-ROM, write-capable, and read-only memories.

For example, the storage device(s) 1330 can store a database accessible by the server computing device 1315 and/or the user computing device 1312. The term "database" refers to any collection of data. The data can be unstructured or structured in any manner. The data can be stored on one or more storage devices in one or more locations. For example, an index database can include multiple collections of data, each of which may be organized and accessed differently.

The server computing device 1315 can include one or more processors 1313 and memory 1314. The memory 1314 can store information accessible by the processor(s) 1313, including instructions 1321 that can be executed by the processor(s) 1313. The memory 1314 can also include data 1323 that can be retrieved, manipulated, or stored by the processor(s) 1313. The memory 1314 can be a type of non-transitory computer readable medium capable of storing information accessible by the processor(s) 1313, such as volatile and non-volatile memory. The processor(s) 1313 can include one or more central processing units (CPUs), graphic processing units (GPUs), field-programmable gate arrays (FPGAs), and/or application-specific integrated circuits (ASICs), such as tensor processing units (TPUs).

The instructions 1321 can include one or more instructions that when executed by the processor(s) 1313, causes the one or more processors to perform actions defined by the instructions. The instructions 1321 can be stored in object code format for direct processing by the processor(s) 1313, or in other formats including interpretable scripts or collections of independent source code modules that are interpreted on demand or compiled in advance. The instructions 1321 can include instructions for implementing the hardware accelerator 105 and the MXU 100, consistent with aspects of this disclosure. For example, the instructions 1321 can include instructions for implementing a compiler, the compiler configured to generate instructions for programming the hardware accelerator 105. The compiler may also be configured to estimate or identify a sparsity factor for input matrices to the hardware accelerator 105.

The data 1323 can be retrieved, stored, or modified by the processor(s) 1313 in accordance with the instructions 1321. The data 1323 can be stored in computer registers, in a relational or non-relational database as a table having a plurality of different fields and records, or as JSON, YAML, proto, or XML documents. The data 1323 can also be formatted in a computer-readable format such as, but not limited to, binary values, ASCII, or Unicode. Moreover, the data 1323 can include information sufficient to identify relevant information, such as numbers, descriptive text, proprietary codes, pointers, references to data stored in other memories, including other network locations, or information that is used by a function to calculate relevant data.

The user computing device 1312 can also be configured as the server computing device 1315, with one or more processors 1316, memory 1317, instructions 1318, and data 1319. The user computing device 1312 can also include a user output 1326, and a user input 1324. The user input 1324 can include any appropriate mechanism or technique for receiving input from a user, such as keyboard, mouse, mechanical actuators, soft actuators, touchscreens, microphones, and sensors.

The server computing device 1315 can be configured to transmit data to the user computing device 1312, and the user computing device 1312 can be configured to display at least a portion of the received data on a display implemented as part of the user output 1326. The user output 1326 can also be used for displaying an interface between the user computing device 1312 and the server computing device 1315. The user output 1326 can alternatively or additionally include one or more speakers, transducers or other audio outputs, a haptic interface or other tactile feedback that provides non-visual and non-audible information to the platform user of the user computing device 1312.

Although FIG. 25 illustrates the processors 1313, 1316 and the memories 1314, 1317 as being within the computing devices 1315, 1312, components described in this specification, including the processors 1313, 1316 and the memories 1314, 1317 can include multiple processors and memories that can operate in different physical locations and not within the same computing device. For example, some of the instructions 1321, 1318 and the data 1323, 1319 can be stored on a removable SD card and others within a read-only computer chip. Some or all of the instructions and data can be stored in a location physically remote from, yet still accessible by, the processors 1313, 1316. Similarly, the processors 1313, 1316 can include a collection of processors that can perform concurrent and/or sequential operation. The computing devices 1315, 1312 can each include one or more internal clocks providing timing information, which can be used for time measurement for operations and programs run by the computing devices 1315, 1312.

The server computing device 1315 can be configured to receive requests to process data from the user computing device 1312. For example, the environment 1300 can be part of a computing platform configured to provide a variety of services to users, through various user interfaces and/or application programming interfaces (APIs) exposing the platform services. One or more services can be a machine learning framework or a set of tools for generating neural networks or other machine learning models according to a specified task and training data. The user computing device 1312 may receive and transmit data specifying target computing resources to be allocated for executing a neural network trained to perform a particular neural network task.

The devices 1312, 1315 can be capable of direct and indirect communication over the network 1360. The devices 1315, 1312 can set up listening sockets that may accept an initiating connection for sending and receiving information. The network 1360 itself can include various configurations and protocols including the Internet, World Wide Web, intranets, virtual private networks, wide area networks, local networks, and private networks using communication protocols proprietary to one or more companies. The network 1360 can support a variety of short- and long-range connections. The short- and long-range connections may be made over different bandwidths, such as 2.402 GHz to 2.480 GHz (commonly associated with the Bluetooth® standard), 2.4 GHz and 5 GHz (commonly associated with the Wi-Fi® communication protocol); or with a variety of communication standards, such as the LTE® standard for wireless broadband communication. The network 1360, in addition or alternatively, can also support wired connections between the devices 1312, 1315, including over diverse types of Ethernet connection.

The datacenter 1350 can house different processing devices and/or storage devices, such as the hardware accelerator 105 and additional hardware accelerators, such as hardware accelerator 105N. In some examples, the hardware accelerators can be like hardware accelerator 300, or in other examples combine various functionalities and components between hardware accelerators 105, 300 or other hardware accelerators described herein. The datacenter 1350 can be logically and/or physically divided into multiple datacenters, which can be implemented using one or more devices across one or more physical locations.

Although a single server computing device 1315, user computing device 1312, and datacenter 1350 are shown in FIG. 25, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

Aspects of the disclosed technology may take the form of a device, method, and/or system. Examples of such devices, methods, and systems may include the following numbered paragraphs (1) - (74), which include combinations of features and sub-features as specified below:

(1) A processing device for accelerating matrix multiplication, including: a processing cell configured to: receive a compressed input matrix, wherein the compressed input matrix is compressed from a sparse input matrix in accordance with a sparsity factor of non-zero-valued to zero-valued elements in the sparse input matrix; store a gains matrix; generate, from the gains matrix, a multiplier matrix, wherein the multiplier matrix includes elements from the gains matrix that are multiplied with elements in the sparse input matrix, when the sparse input matrix is multiplied with the gains matrix; and generate, from the multiplier matrix and the compressed input matrix, a result matrix that is equal to the product of the sparse input matrix and the gains matrix.

(2) The processing device of (1), wherein, in generating the multiplier matrix, the processing cell is configured to: receive an index matrix including elements corresponding to locations of elements of the compressed input matrix in the sparse input matrix; and generate the multiplier matrix using one or more multiplexors configured to select elements from the gains matrix as elements of the multiplier matrix in accordance with elements in the index matrix.

(3) The processing device of (2), wherein: the sparsity factor is 1:$k$, at least one of the one or more multiplexors is a $k$:1 multiplexor configured to multiplex sets of inputs in accordance with values of the index matrix, and $k$ is an integer greater than one.

(4) The processing device of any one of (1) through (3), wherein the sparsity factor is *1:(s x s),* where *s* is a positive integer greater than one.

(5) The processing device of any one of (1) through (4), wherein: the sparsity factor is *k:m,* where *m* and *k* are positive integers and *m* is greater than *k,* and in receiving the compressed input matrix, the processing cell is configured to perform top-*k* comparisons in segments of an uncompressed input matrix of length m to generate the compressed input matrix.

(6) The processing device of any one of (1) through (5), wherein the processing cell is one of a plurality of processing cells and each processing cell is configured to: receive a respective compressed input matrix that is a portion of an aggregate input matrix; store a respective gains matrix that is a portion of an aggregate gains matrix; and generate a respective result matrix that is a portion of an aggregate result matrix, the aggregate result matrix the product of multiplying the aggregate input matrix and the aggregate gains matrix.

(7) The processing device of (6), wherein, for a plurality of processing cycles, the respective gains matrix stored in each processing cell is stationary and is multiplied with a plurality of input matrices that are respectively streamed into each processing cell.

(8) The processing device of any one of (1) through (7), wherein, in storing the gains matrix, the processing cell is configured to: receive a compressed gains matrix; receive an index array including elements corresponding to locations of elements of the compressed gains matrix in the gains matrix; generate, using a multiplexor, the gains matrix from the compressed gains matrix, the multiplexor configured to match elements from the compressed gains matrix to corresponding locations in the gains matrix in accordance with the index array; and store the gains matrix in one or more registers of the processing cell.

(9) The processing device of (8), wherein: the processing cell is one of a plurality of processing cells arranged in a systolic array including one or more rows and one or more columns, and each of the processing cells is configured to receive a respective portion of an aggregate gains matrix based on the row and column the processing cell is located in the systolic array.

(10) The processing device of any one of (1) through (9), wherein the processing cell is further configured to perform dense matrix multiplication on a dense input matrix and the gains matrix.

(11) A method, including: receiving, by one or more processors, a compressed input matrix, wherein the compressed input matrix is compressed from a sparse input matrix in accordance with a structured sparsity factor of non-zero-valued to zero-valued elements in the sparse input matrix; storing, by the one or more processors, a gains matrix; generating, by the one or more processors and from the gains matrix, a multiplier matrix including elements from the gains matrix that are multiplied with elements in the sparse input matrix, when the sparse input matrix and the gains matrix are multiplied; and generating, by the one or more processors and from the multiplier matrix and the compressed input matrix, a result matrix that is equal to the product of the sparse input matrix and the gains matrix.

(12) The method of (11), wherein generating the multiplier matrix includes: receiving an index matrix including elements corresponding to locations of elements of the compressed input matrix in the sparse input matrix; and generating the multiplier matrix using one or more multiplexors configured to select elements from the gains matrix as elements of the multiplier matrix in accordance with elements in the index matrix.

(13) The method of (12), wherein: the sparsity factor is 1:*k,* at least one of the one or more multiplexors is a *k:*1 multiplexor configured to multiplex sets of inputs in accordance with values of the index matrix, and is an integer greater than one.

(14) The method of any one of (11) through (13), wherein the sparsity factor is 1:*(s x s),* where s is a positive integer greater than one.

(15) The method of any one of (11) through (14), wherein: the sparsity factor is *k:m*, where *k* and *m* are positive integers and m is greater than *k,* and receiving the compressed input matrix includes performing top-*k* comparisons in segments of an uncompressed input matrix of length *m* to generate the compressed input matrix.

(16) The method of any one of (11) through (15), further including: receiving, by the one or more processors, a respective compressed input matrix that is a portion of an aggregate input matrix; storing, by the one or more processors, a respective gains matrix that is a portion of an aggregate gains matrix; and generating, by the one or more processors, a respective result matrix that is a portion of an aggregate result matrix, the aggregate result matrix the product of multiplying the aggregate input matrix and the aggregate gains matrix.

(17) The method of any one of (11) through (16), wherein storing the gains matrix includes: receiving a compressed gains matrix; receiving an index array including elements corresponding to locations of elements of the compressed gains matrix in the gains matrix; generating, using a multiplexor, the gains matrix from the compressed gains matrix, the multiplexor configured to match elements from the compressed gains matrix to corresponding locations in the gains matrix in accordance with the index array; and storing the gains matrix in one or more registers.

(18) The method of any one of (11) through (17), the method further includes performing, by the one or more processors, dense matrix multiplication on a dense input matrix and the gains matrix.

(19) One or more non-transitory storage media, storing instructions that are operable, when executed by one or more processing cells of a matrix multiplication unit, cause the matrix multiplication unit to perform operations including: receiving a compressed input matrix, wherein the compressed input matrix is compressed from a sparse input matrix in accordance with a structured sparsity factor of non-zero-valued to zero-valued elements in the sparse input matrix; storing a gains matrix; generating, from the gains matrix, a multiplier matrix including elements from the gains matrix that are multiplied with elements in the sparse input matrix, when the sparse input matrix and the gains matrix are multiplied; and generating, from the multiplier matrix and the compressed input matrix, a result matrix that is equal to the product of the sparse input matrix and the gains matrix.

(20) The non-transitory computer-readable storage media of (19), further including the steps as in the methods of any one of (11) through (17).

(21) A method of performing matrix multiplication, including: receiving a compressed input matrix, wherein the compressed input matrix is compressed from a sparse input matrix in accordance with a target sparsity factor of non-zero-valued to zero-valued elements in the sparse input matrix; storing, by the one or more processors, a gains matrix; processing, by the one or more processors, the gains matrix to generate one or more multiplier matrices, wherein the processing includes performing includes: dividing the gains matrix into a plurality of at least partially overlapping windows of elements, for each window, selecting a non-zero element in the window as an element of one matrix of one or more multiplier matrices; and generating, using the one or more processors and from the one or more multiplier matrices and the compressed input matrix, a result matrix that is equal to the product of the sparse input matrix and the gains matrix.

(22) The method of (21), further including sorting elements of the compressed input matrix; and wherein processing the gains matrix further includes: selecting a smallest index of a non-zero element from a first window of the plurality of windows; and iteratively selecting the next smallest index of a respective non-zero element from subsequent windows of the plurality of windows.

(23) The method of either (21) or (22), wherein selecting the non-zero element includes processing respective elements of the window through a multiplexor, wherein n corresponds to the length of each of the plurality of windows.

(24) The method of (23), wherein the target sparsity factor is 1:(s x s), where s is a positive integer.

(25) The method of (24), wherein the multiplexor is a 1:4 multiplexor, and the target sparsity factor is 3:6 or 2:5.

(26) The method of any one of (21) through (25), further including the method of any one of (12) through (18).

(27) A system including one or more processors configured to perform the steps as in the methods of any one of (21) through (26).

(28) One or more computer-readable storage media, storing instructions that are operable, when performed by one or more processors, to perform the steps as in the method of any one of (21) through (26).

(29) A processing device for accelerating matrix multiplication, including: a processing cell configured to: receive a compressed and block-scaled input matrix, wherein the input matrix is compressed from a sparse input matrix in accordance with a sparsity factor of non-zero-valued to zero-valued elements in the sparse input matrix and block-scaled in accordance with a shared scaling factor for elements in the input matrix; generate, from a gains matrix, a multiplier matrix, wherein the multiplier matrix includes elements from the gains matrix that are multiplied with elements from the sparse input matrix; and generate, from the multiplier matrix and the compressed input matrix, a result matrix that is equal to the product of the sparse input matrix and the gains matrix.

(30) The processing device of (29), wherein, in generating the multiplier matrix, the processing cell is configured to: receive a bitmask including elements corresponding to locations of elements of the compressed input matrix in the sparse input matrix; and generate the multiplier matrix using one or more multiplexors configured to select elements from the gains matrix as elements of the multiplier matrix in accordance with elements in the bitmask.

(31) The processing device of (30), wherein: the processing cell is further configured to store the gains matrix; and in generating the multiplier matrix, the processing cell is configured to select elements from the gains matrix using the bitmask.

(32) The processing device of either (30) or (31), wherein: in storing the gains matrix, the processing cell is configured to store a shared scaling factor for block-scaled elements of the gains matrix; and in generating the result matrix, the processing cell is configured to scale the selected elements in accordance with the shared scaling factor for block-scaled elements in the gains matrix.

(33) The processing device of (32), wherein the processing is configured to: receive one or more elements from the input matrix and one or more elements from the gains matrix; perform a dot product operation on the one or more elements from the input matrix and one or more elements from the gains matrix to generate an output matrix; generate a combined scaling factor from the shared scaling factor for elements in the input matrix and the shared scaling factor for elements in the gains matrix; and convert the output value to a scaled output value in accordance with the combined scaling factor.

(34) The processing device of (33), wherein: the combined scaling factor is represented by a quantity of bits; and in converting the output value to the scaled output value, the processing cell is configured to bit-shift the output value by the quantity of bits in the combined scaling factor.

(35) The processing device of (33) or (34), wherein: the combined scaling factor is represented by a data type; and in converting the output value to the scaled output value, the processing cell is configured to cast the output value to be represented by the data type.

(36) The processing device of any one of (29) through (35), wherein the block-scaled and compressed input matrix includes blocks of elements of data type INT4, each block including sixteen non-zero valued elements.

(37) The processing device of any one of (29) through (36), wherein the sparsity factor is $k{:}m$, where $k$ and $m$ are positive integers and $m$ is greater than $k$.

(38) The processing device of any one of (29) through (37), wherein the processing cell is one of a plurality of processing cells and each processing cell is configured to: receive a respective compressed and block-scaled input matrix that is a portion of an aggregate input matrix; store a respective gains matrix that is a portion of an aggregate gains matrix; and generate a respective result matrix that is a portion of an aggregate result matrix that is the product of multiplying the aggregate input matrix and the aggregate gains matrix.

(39) The processing device of (38), wherein, for a plurality of processing cycles, the respective gains matrix stored in each processing cell is stationary and is multiplied with a plurality of input matrices that are streamed into the processing cell.

(40) The processing device of either (38) or (39), wherein: the processing cell is one of a plurality of processing cells arranged in a systolic array including one or more rows and one or more columns, and each of the processing cells is configured to receive a respective portion of an aggregate gains matrix based on the row and column where the processing cell is located in the systolic array.

(41) A system including: a processing device including a plurality of processing cells, wherein a processing cell of the plurality of processing cells is configured to: receive a compressed and block-scaled input matrix, wherein the input matrix is compressed from a sparse input matrix in accordance with a sparsity factor of non-zero-valued to zero-valued elements in the sparse input matrix and block-scaled in accordance with a shared scaling factor for elements in the input matrix; generate, from a gains matrix, a multiplier matrix, wherein the multiplier matrix includes elements from the gains matrix that are multiplied with elements from the sparse input matrix; and generate, from the multiplier matrix and the compressed input matrix, a result matrix that is equal to the product of the sparse input matrix and the gains matrix.

(42) The system of (41), wherein, in generating the multiplier matrix, the processing cell is configured to: receive a bitmask including elements corresponding to locations of elements of the compressed input matrix in the sparse input matrix; and generate the multiplier matrix using one or more multiplexors configured to select elements from the gains matrix as elements of the multiplier matrix in accordance with elements in the bitmask.

(43) The system of (42), wherein: the processing cell is further configured to store the gains matrix; and in generating the multiplier matrix, the processing cell is configured select elements from the gains matrix using the bitmask.

(44) The processing device of either (42) or (43), wherein: in storing the gains matrix, the processing cell is configured to store a shared scaling factor for block-scaled elements of the gains matrix; and in generating the result matrix, the processing cell is configured to scale the selected elements in accordance with the shared scaling factor for block-scaled elements in the gains matrix.

(45) The processing device of (44), wherein the processing cell is further configured to: receive one or more elements from the input matrix and one or more elements from the gains matrix; perform a dot product operation on the one or more elements from the input matrix and one or more elements from the gains matrix to generate an output value; generate a combined scaling factor from the shared scaling factor for elements in the input matrix and the shared scaling factor for elements in the gains matrix; and convert the output value to a scaled output value in accordance with the combined scaling factor.

(46) The processing device of (45), wherein: the combined scaling factor is represented by a quantity of bits; and in converting the output value to the scaled output value, the processing cell is configured to bit-shift the output value by the quantity of bits in the combined scaling factor.

(47) The processing device of (45) or (46), wherein: the combined scaling factor is represented by a data type; and in converting the output matrix to the result matrix, the processing cell is configured to cast the output matrix to be represented by the data type.

(48) A method, including: receiving, by one or more processors, a compressed and block-scaled input matrix, wherein the input matrix is compressed from a sparse input matrix in accordance with a sparsity factor of non-zero-valued to zero-valued elements in the sparse input matrix and block-scaled in accordance with a shared scaling factor for elements in the input matrix; generating, by the one or more processors and from a gains matrix, one or more multiplier matrices, wherein the multiplier matrix includes elements from the gains matrix that are multiplied with elements from the sparse input matrix; and generating, by the one or more processors and from the one or more multiplier matrices and the compressed input matrix, a result matrix that is equal to the product of the sparse input matrix and the gains matrix.

(49) The method of (48), wherein the one or more processors include a processing cell, and wherein generating the multiplier matrix further includes receiving a bitmask including elements corresponding to locations of elements of the compressed input matrix in the sparse input matrix; and generating the multiplier matrix using one or more multiplexors configured to select elements from the gains matrix as elements of the multiplier matrix in accordance with elements in the bitmask.

(50) The method of (49), further including storing, by the processing cell, the gains matrix; and wherein generating the multiplier matrix includes selecting, by the one or more processors, elements from the gains matrix using the bitmask.

(51) The method of (50), wherein storing the gains matrix includes storing, by the one or more processors, a shared scaling factor for block-scaled elements of the gains matrix; and generating the result matrix includes scaling, by the one or more processors, the selected elements in accordance with the shared scaling factor for block-scaled elements in the gains matrix.

(52) The method of (51), further including receiving one or more elements from the input matrix and one or more elements from the gains matrix; perform a dot product operation on the one or more elements from the input matrix and one or more elements from the gains matrix to generate an output matrix; generate a combined scaling factor from the shared scaling factor for elements in the input matrix and the shared scaling factor for elements in the gains matrix; and convert the output value to a scaled output value in accordance with the combined scaling factor.

(53) The method of (52), wherein the combined scaling factor is represented by a quantity of bits; and converting the output value to the scaled output value includes bit-shifting the output value by the quantity of bits in the combined scaling factor.

(54) The method of (52) or (53), wherein the combined scaling factor is represented by a data type; and converting the output value to the scaled output value includes casting, by the one or more processors, the output value to be represented by the data type.

(55) The method of any one of (48) through (54), wherein the block-scaled and compressed input matrix includes blocks of elements of data type INT4, each block including sixteen non-zero valued elements.

(56) The method of any one of (48) through (55), wherein the sparsity factor is , where and are positive integers and is greater than .

(57) The method of any one of (48) through (56) wherein the one or more processors include a plurality of processing cells, and where the method further includes: receiving a respective compressed and block-scaled input matrix that is a portion of an aggregate input matrix; storing a respective gains matrix that is a portion of an aggregate gains matrix; and generating a respective result matrix that is a portion of an aggregate result matrix that is the product of multiplying the aggregate input matrix and the aggregate gains matrix.

(58) The method of (57), wherein, for a plurality of processing cycles, the respective gains matrix stored in each processing cell is stationary and is multiplied with a plurality of input matrices that are streamed into the processing cell.

(59) The method of either (57) or (58), wherein the processing cell is one of the plurality of processing cells arranged in a systolic array including one or more rows and one or more columns, and wherein the method further includes receiving a respective portion of an aggregate gains matrix based on the row and column where the processing cell is located in the systolic array.

(60) The method of any one of (48) through (59), further including the operations as in any one of (1) through (28).

(61) One or more computer-readable storage media storing instructions that are operable, when executed by one or more processors, to cause the one or more processors to perform operations as in any one of (1) - (60).

(62) The one or more computer-readable storage media of (61), wherein the storage media is non-transitory.

(63) A method, including: receiving, by a processing device, an input block from a plurality of processing lanes of the processing device, the number of processing lanes being greater than a block size for an input block of a block-scaled input matrix; generating, by the processing device, one or more input scale factors for the input block; load a gains block of a block-scaled gains matrix and one or more gains scale factors; and generate result data scaled according to at least both the one or more input scale factors and the one or more gains scale factors by multiplying the input block and the gains block.

(64) The method of (63), further including: receiving, by the processing device, a plurality of input blocks and a plurality of input scale factors; loading, by the processing device, a plurality of gains blocks and a plurality of gains scale factors; generating, by the processing device, a plurality of result data blocks by multiplying respective input blocks of the plurality of input blocks and gains blocks of the plurality of gains blocks; and generating, by the processing device, result data from the plurality of result data blocks.

(65) The method of (63) or (64), further including: generating, by the processing device, the one or more input scale factors in an dense format and a replicated format, the dense format including a copy of the one or more input scale factors for each $B$ processing lanes of the plurality of processing lanes, where $B$ is equal to the block size of the input block, and the replicated format including a copy of the one or more input scale factors for each processing lane of a group of $B$ processing lanes.

(66) The method of any one of (63) through (65), further including receiving, by the processing device, block-scaled data elements of the input block across multiple processing lanes and the scale factor for the input block from one of the multiple processing lanes.

(67) The method of any one of (63) through (66), further including: receiving, by the processing device, an un-scaled input block of un-scaled data elements; generating, by the processing device, the input scale factor by performing a scale factor reduction on the un-scaled input block in a dimension corresponding to a plurality of sub-lanes at least one processing lane of the plurality of processing lanes.

(68) The method of (67), wherein the un-scaled data elements include dynamic data and the loaded gains block includes static data.

(69) The method of (67) or (68), further including: receiving, by the processing device, un-scaled data elements; receiving, by the processing device, a target format for block-scaled data; transposing, by the processing device, the un-scaled data elements from a dimension corresponding to the plurality of lanes to a dimension corresponding to the plurality of sub-lanes; determining, by the processing device, a maximum-valued or maximum-absolute-valued data element of the un-scaled data elements; and determining, by the processing device, a scale factor for the maximum-valued or maximum-absolute-valued data element to divide the un-scaled data elements into a block-scaled element within the target format.

(70) The method of (69), wherein the un-scaled data elements are output activations of a neural network layer.

(71) A processing device, having a plurality of processing lanes, the number of processing lanes being greater than a block size for an input block of a block-scaled input matrix, the processing device configured to perform operations of the method of any one of (62) through (70).

(72) The processing device of (71), further including a matrix-multiply unit (MXU) including a weight-stationary systolic array of processing cells, wherein a processing cell of the systolic array includes a data register for storing the gains block and a scale factor register for storing the gains scale factor.

(73) The processing device of (71) or (72) further configured to perform the operations as in any one of (1) through (70)

(74) A system of one or more processing devices including at least one processing device as in any one of (71) through (73).

Example Use Cases:

As described herein, aspects of the disclosure provide for accelerating matrix multiplication for executing machine learning workloads. Machine learning workloads can include data and instructions for performing a machine learning task. Examples of machine learning tasks performed by a machine learning model follow.

As an example, the input to the machine learning model can be in the form of images, videos. A machine learning model can be configured to extract, identify, and generate features as part of processing a given input, for example as part of a computer vision task. A machine learning model trained to perform this type of machine learning task can be trained to generate an output classification from a set of different potential classifications. In addition, or alternatively, the machine learning model can be trained to output a score corresponding to an estimated probability that an identified subject in the image or video belongs to a certain class.

As another example, the input to the machine learning model can be data files corresponding to a particular format, e.g., HTML files, word processing documents, or formatted metadata obtained from other types of data, such as metadata for image files. A machine learning task in this context can be to classify, score, or otherwise predict some characteristic about the received input. For example, a machine learning model can be trained to predict the probability received input includes text relating to a particular subject. Also, as part of performing a particular task, the machine learning model can be trained to generate text predictions, for example as part of a tool for auto-completion of text in a document as the document is being composed. A machine learning model can also be trained for predicting a translation of text in an input document to a target language, for example as a message is being composed.

Other types of input documents can be data relating to characteristics of a network of interconnected devices. These input documents can include activity logs, as well as records concerning access privileges for different computing devices to access diverse sources of potentially sensitive data. A machine learning model can be trained for processing these and other types of documents for predicting on-going and future security breaches to the network. For example, the machine learning model can be trained to predict intrusion into the network by a malicious actor.

As another example, the input to a machine learning model can be audio input, including streamed audio, pre-recorded audio, and audio as part of a video or other source or media. A machine learning task in the audio context can include speech recognition, including isolating speech from other identified sources of audio and/or enhancing characteristics of identified speech to be easier to hear. A machine learning model can be trained to predict an accurate translation of input speech to a target language, for example in real-time as part of a translation tool.

In addition to data input, including the several types of data described herein, a machine learning model can also be trained to process features corresponding to given input. Features are values, e.g., numerical, or categorical, which relate to some characteristic of the input. For example, in the context of an image, a feature of the image can relate to the RGB value for each pixel in the image. A machine learning task in the image/video context can be to classify contents of an image or video, for example for the presence of different people, places, or things. Machine learning models can be trained to extract and select relevant features for processing to generate an output for a given input and can also be trained to generate new features based on learned relationships between various characteristics of input data.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus. A computer program may, but need not, correspond to a file in a file system. A computer program can be stored in a portion of a file that holds other programs or data, e.g., one or more scripts, in a single file, or in multiple coordinated files, e.g., files that store one or more engines, modules, sub-programs, or portions of code.

The term "configured" is used herein in connection with systems and computer program components. For a system of one or more computers to be configured to perform particular operations or actions means that the system has installed software, firmware, hardware, or a combination thereof that cause the system to perform the operations or actions. For one or more computer programs to be configured to perform operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC), such as a Tensor Processing Unit (TPU). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as static or dynamic computational graph frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

While operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all examples, and it should be understood that the described program components and systems can be integrated together in one or more software or hardware-based devices or computer-readable media.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back-end component, e.g., as a data server, a middleware component, e.g., an application server, or a front-end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including," and the like, should not be interpreted as limiting the subject matter of the claims to the specific examples; rather, the examples are intended to illustrate only one of many possible embodiments. Further, the same reference numbers in different drawings can identify the same or similar elements.

Further examples of the invention are given below.

Example 1. A processing device for accelerating matrix multiplication, comprising:
a processing cell configured to:

receive a compressed input matrix, wherein the compressed input matrix is compressed from a sparse input matrix in accordance with a sparsity factor of non-zero-valued to zero-valued elements in the sparse input matrix;
store a gains matrix;
generate, from the gains matrix, a multiplier matrix, wherein the multiplier matrix comprises first elements from the gains matrix that are multiplied with second elements in the sparse input matrix, when the sparse input matrix is multiplied with the gains matrix; and
generate, from the multiplier matrix and the compressed input matrix, a result matrix based on a product of the sparse input matrix and the gains matrix.

Example 2. The processing device of example 1, wherein, to generate the multiplier matrix, the processing cell is configured to:

receive an index matrix comprising third elements corresponding to locations of elements of the compressed input matrix in the sparse input matrix; and
generate the multiplier matrix using one or more multiplexors configured to select one or more first elements from the gains matrix as elements of the multiplier matrix in accordance with one or more third elements in the index matrix.

Example 3. The processing device of example 2, wherein:

the sparsity factor is 1:$k$,
at least one of the one or more multiplexors is a $k$:1 multiplexor configured to multiplex sets of $k$ inputs in accordance with values of the index matrix, and
$k$ is an integer greater than one.

Example 4. The processing device of one of examples 1 to 3,

wherein the sparsity factor is 1 : ($s \times s$), where $s$ is a positive integer greater than one; and/or
wherein:

the sparsity factor is $k:$ m, where $k$ and $m$ are positive integers and $m$ is greater than $k$, and
in receiving the compressed input matrix, the processing cell is configured to perform top-$k$ comparisons in
segments of an uncompressed input matrix of length $m$ to generate the compressed input matrix.

Example 5. The processing device of one of examples 1 to 4, wherein the processing cell is one of a plurality of
processing cells and each processing cell is configured to:

receive a respective compressed input matrix that is a portion of an aggregate input matrix;
store a respective gains matrix that is a portion of an aggregate gains matrix; and
generate a respective result matrix that is a portion of an aggregate result matrix, the aggregate result matrix the
product of multiplying the aggregate input matrix and the aggregate gains matrix.

Example 6. The processing device of example 5, wherein, for a plurality of processing cycles, the respective gains
matrix stored in each processing cell is stationary and is multiplied with a plurality of input matrices that are respectively
streamed into each processing cell.

Example 7. The processing device of one of examples 1 to 6,
wherein, in storing the gains matrix, the processing cell is configured to:

receive a compressed gains matrix;
receive an index array comprising third elements corresponding to locations of elements of the compressed gains
matrix in the gains matrix;
generate, using a multiplexor, the gains matrix from the compressed gains matrix, the multiplexor configured to
match elements from the compressed gains matrix to corresponding locations in the gains matrix in accordance
with the index array; and
store the gains matrix in one or more registers of the processing cell.

Example 8. The processing device of example 7, wherein:

the processing cell is one of a plurality of processing cells arranged in a systolic array comprising one or more rows
and one or more columns, and
each of the processing cells is configured to receive a respective portion of an aggregate gains matrix based on
the row and column the processing cell is located in the systolic array.

Example 9. The processing device of one of examples 1 to 8, wherein the processing cell is further configured to:
perform dense matrix multiplication on a dense input matrix and the gains matrix.

Example 10. A method, comprising:

receiving, by one or more processors, a compressed input matrix, wherein the compressed input matrix is
compressed from a sparse input matrix in accordance with a structured sparsity factor of non-zero-valued to zero-
valued elements in the sparse input matrix;
storing, by the one or more processors, a gains matrix;
generating, by the one or more processors and from the gains matrix, a multiplier matrix comprising elements from
the gains matrix that are multiplied with elements in the sparse input matrix, when the sparse input matrix and the
gains matrix are multiplied; and
generating, by the one or more processors and from the multiplier matrix and the compressed input matrix, a result
matrix that is equal to the product of the sparse input matrix and the gains matrix.

Example 11. The method of example 10, wherein generating the multiplier matrix comprises:

receiving an index matrix comprising elements corresponding to locations of elements of the compressed input matrix in the sparse input matrix; and

generating the multiplier matrix using one or more multiplexors configured to select elements from the gains matrix as elements of the multiplier matrix in accordance with elements in the index matrix.

Example 12. The method of example 11, wherein:

the sparsity factor is 1:$k$,

at least one of the one or more multiplexors is a $k$:1 multiplexor configured to multiplex sets of $k$ inputs in accordance with values of the index matrix, and

$k$ is an integer greater than one.

Example 13. The method of one of examples 10 to 12,

wherein the sparsity factor is 1 : ($s \times s$), where s is a positive integer greater than one; and/or wherein:

the sparsity factor is $k$: $m$, where $k$ and m are positive integers and m is greater than $k$, and

receiving the compressed input matrix comprises performing top-$k$ comparisons in segments of an uncompressed input matrix of length $m$ to generate the compressed input matrix.

Example 14. The method of one of examples 10 to 13,

further comprising:

receiving, by the one or more processors, a respective compressed input matrix that is a portion of an aggregate input matrix;

storing, by the one or more processors, a respective gains matrix that is a portion of an aggregate gains matrix; and

generating, by the one or more processors, a respective result matrix that is a portion of an aggregate result matrix, the aggregate result matrix the product of multiplying the aggregate input matrix and the aggregate gains matrix; and/or wherein storing the gains matrix comprises:

receiving a compressed gains matrix;

receiving an index array comprising elements corresponding to locations of elements of the compressed gains matrix in the gains matrix;

generating, using a multiplexor, the gains matrix from the compressed gains matrix, the multiplexor configured to match elements from the compressed gains matrix to corresponding locations in the gains matrix in accordance with the index array; and

storing the gains matrix in one or more registers; and/or

wherein the method further comprises performing, by the one or more processors, dense matrix multiplication on a dense input matrix and the gains matrix.

Example 15. One or more non-transitory storage media, storing instructions that are operable, when executed by one or more processing cells of a matrix multiplication unit, cause the matrix multiplication unit to perform the method according to one of examples 10 to 14.

## Claims

1. A processing device having a plurality of processing lanes, the number of processing lanes being greater than a block size for an input block of a block-scaled input matrix, the processing device configured to:

receive an input block from the plurality of processing lanes;

generate one or more input scale factors for the input block;

load a gains block of a block-scaled gains matrix and one or more gains scale factors; and

generate result data scaled according to at least both the one or more input scale factors and the one or more gains scale factors by multiplying the input block and the gains block.

2. The processing device of claim 1, wherein the processing device is further configured to:

   receive a plurality of input blocks and a plurality of input scale factors;
   load a plurality of gains blocks and a plurality of gains scale factors;
   generate a plurality of result data blocks by multiplying respective input blocks of the plurality of input blocks and gains blocks of the plurality of gains blocks; and
   generate result data from the plurality of result data blocks.

3. The processing device of claim 1, wherein:

   the processing device is further configured to generate the one or more input scale factors in an dense format and a replicated format,
   the dense format comprises a copy of the one or more input scale factors for each $B$ processing lanes of the plurality of processing lanes, where $B$ is equal to the block size of the input block, and
   the replicated format comprises a copy of the one or more input scale factors for each processing lane of a group of $B$ processing lanes.

4. The processing device of claim 1, wherein the processing device is further configured to receive block-scaled data elements of the input block across multiple processing lanes and the scale factor for the input block from one of the multiple processing lanes.

5. The processing device of claim 1, wherein:

   at least one processing lane comprises a plurality of sub-lanes, and
   in generating the input scale factor, the processing device is configured to:

   receive an un-scaled input block of un-scaled data elements; and
   generate the input scale factor by performing a scale factor reduction on the un-scaled input block in a dimension corresponding to the plurality of sub-lanes, and optionally

   wherein the un-scaled data elements comprise dynamic data and the loaded gains block comprises static data.

6. The processing device of claim 1, wherein:

   at least one processing lane comprises a plurality of sub-lanes, and
   the processing device is further configured to:

   receive un-scaled data elements;
   receive a target format for block-scaled data;
   transpose the un-scaled data elements from a dimension corresponding to the plurality of lanes to a dimension corresponding to the plurality of sub-lanes;
   determine a maximum-valued or maximum-absolute-valued data element of the un-scaled data elements; and
   determine a scale factor for the maximum-valued or maximum-absolute-valued data element to divide the un-scaled data elements into a block-scaled element within the target format, and optionally

   wherein the un-scaled data elements are output activations of a neural network layer.

7. The processing device of claim 1, further comprising:
   a matrix-multiply unit (MXU) comprising a weight-stationary systolic array of processing cells, wherein a processing cell of the systolic array comprises a data register for storing the gains block and a scale factor register for storing the gains scale factor.

8. A method, comprising:

   receiving, by a processing device, an input block from a plurality of processing lanes of the processing device, the number of processing lanes being greater than a block size for an input block of a block-scaled input matrix;
generating, by the processing device, one or more input scale factors for the input block;
load a gains block of a block-scaled gains matrix and one or more gains scale factors; and
generate result data scaled according to at least both the one or more input scale factors and the one or more gains scale factors by multiplying the input block and the gains block.

9. The method of claim 8, further comprising:

receiving, by the processing device, a plurality of input blocks and a plurality of input scale factors;
loading, by the processing device, a plurality of gains blocks and a plurality of gains scale factors;
generating, by the processing device, a plurality of result data blocks by multiplying respective input blocks of the plurality of input blocks and gains blocks of the plurality of gains blocks; and
generating, by the processing device, result data from the plurality of result data blocks.

10. The method of claim 8, further comprising:

generating, by the processing device, the one or more input scale factors in an dense format and a replicated format,
the dense format comprising a copy of the one or more input scale factors for each $B$ processing lanes of the plurality of processing lanes, where $B$ is equal to the block size of the input block, and
the replicated format comprising a copy of the one or more input scale factors for each processing lane of a group of $B$ processing lanes.

11. The method of claim 8, further comprising receiving, by the processing device, block-scaled data elements of the input block across multiple processing lanes and the scale factor for the input block from one of the multiple processing lanes.

12. The method of claim 8, further comprising:

receiving, by the processing device, an un-scaled input block of un-scaled data elements;
generating, by the processing device, the input scale factor by performing a scale factor reduction on the un-scaled input block in a dimension corresponding to a plurality of sub-lanes at least one processing lane of the plurality of processing lanes, and optionally
wherein the un-scaled data elements comprise dynamic data and the loaded gains block comprises static data.

13. The method of claim 12, further comprising:

receiving, by the processing device, un-scaled data elements;
receiving, by the processing device, a target format for block-scaled data;
transposing, by the processing device, the un-scaled data elements from a dimension corresponding to the plurality of lanes to a dimension corresponding to the plurality of sub-lanes;
determining, by the processing device, a maximum-valued or maximum-absolute-valued data element of the un-scaled data elements; and
determining, by the processing device, a scale factor for the maximum-valued or maximum-absolute-valued data element to divide the un-scaled data elements into a block-scaled element within the target format, and optionally
wherein the un-scaled data elements are output activations of a neural network layer.

14. A system comprising:
one or more processing devices configured to:

receive an input block from the plurality of processing lanes;
generate one or more input scale factors for the input block;
load a gains block of a block-scaled gains matrix and one or more gains scale factors; and
generate result data scaled according to at least both the one or more input scale factors and the one or more gains scale factors by multiplying the input block and the gains block.

15. The system of claim 14, wherein the system is further configured to:

receive a plurality of input blocks and a plurality of input scale factors;
load a plurality of gains blocks and a plurality of gains scale factors;
generate a plurality of result data blocks by multiplying respective input blocks of the plurality of input blocks and gains blocks of the plurality of gains blocks; and
generate result data from the plurality of result data blocks, and/or wherein:

the system is further configured to generate the one or more input scale factors in an dense format and a replicated format,
the dense format comprises a copy of the one or more input scale factors for each $B$ processing lanes of the plurality of processing lanes, where $B$ is equal to the block size of the input block, and
the replicated format comprises a copy of the one or more input scale factors for each processing lane of a group of $B$ processing lanes.

FIG. 1

FIG. 2A

K

| | | | | | |
|---|---|---|---|---|---|
| s2 | s2 | s2 | | | |

| segment 0 | segment 1 | segment 2 | · · · | segment k/s2-1 |
|---|---|---|---|---|

K * (s1/s2)

| s1 | s1 | s1 | | s1 |
|---|---|---|---|---|

| cs 0 | cs 1 | cs 2 | · · · | cs k/(s2-1) |
|---|---|---|---|---|

FIG. 2B

FIG. 3

FIG. 4A

Index Array
404B

402B

408B

INT INT INT INT INT INT INT INT INT

410B

410B

INT INT INT INT

INT INT INT INT

498B

INT 0 INT 0 0 INT INT 0

406B

INT INT INT INT

Dot Product Unit
415B

Caster Circuit
496B

Cell Output
494B

Processing Cell
400B

FIG. 4B

FIG. 4C

FIG. 5

EP 4 745 804 A2

Input Matrix
505

Systolic Array
500

Result Matrix
510

FIG. 6

FIG. 7

FIG. 8

FIG. 9

FIG. 10

| | |
|---|---|
| 1000 | Receive a compressed input matrix. — 1010 |
| | Store a gains matrix. — 1020 |
| | Generate, from the gains matrix, a multiplier matrix. — 1030 |
| | Generate, from the multiplier matrix and the compressed input matrix, a result matrix that is equal to the product of a sparse input matrix and the gains matrix. — 1040 |

FIG. 11

1100

Receive a compressed gains matrix. ⎯1110

Receive an index array corresponding to the gains matrix. ⎯1120

Generate the gains matrix for the compressed gains matrix. ⎯1130

Store the gains matrix. ⎯1140

FIG. 12

Receive a compressed input matrix. — 1510

1500

Store a gains matrix — 1520

Divide segments of the gains matrix into a plurality of at least partially overlapping windows of elements. — 1530

Select at least one non-zero element in the window as an element of one matrix of one or more multiplier matrices. — 1540

The hardware accelerator generates from the one or more multiplier matrices and the compressed input matrix, a result matrix that is equal to the product of the sparse input matrix and the gains matrix — 1550

FIG. 13

3200

Receive a compressed and block-scaled input matrix. — 3210

Generate, from the gains matrix, a multiplier matrix. — 3220

Generate, from the multiplier matrix and the compressed input matrix, a result matrix that is equal to the product of a sparse input matrix and the gains matrix. — 3230

FIG. 14

1700

Receive one or more elements from the input matrix and one or more elements from the gains matrix. — 1710

Perform a dot product operation on the elements from the input matrix and the gains matrix. — 1720

Generate a combined scaling factor. — 1730

Convert the output matrix to the result matrix in accordance with the combined scaling factor. — 1740

FIG. 15

FIG. 16A

FIG. 16B

On-Chip Interconnect 1705

High Bandwidth Memory 1710

Scale Factor Orchestrator 1722

Serializer/ Deserializer 1740

VPU 1795

Scale Factor Generator 1725

Systolic Array 1732

MXU 1730

1715

1735

Processing Core 1715

Hardware Accelerator 1200

FIG. 17

FIG. 18

EP 4 745 804 A2

FIG. 19

FIG. 20

FIG. 21A

FIG. 21B

EP 4 745 804 A2

2200

Receive an input block from a plurality of processing lanes. — 2210

Generate one or more input scale factors for the input block. — 2220

Load a gains block of a block-scaled gains matrix and one or more gains scale factors. — 2230

Generate result data scaled according to both the one or more input scale factors and the one or more gains scale factors by multiplying the input block and the gains block. — 2240

FIG. 22

2300

| Receive an input block of un-scaled data elements. | 2310 |

| Transpose the un-scaled input block from a dimension corresponding to a plurality of processing lanes to a dimension corresponding to a plurality of sub-lanes. | 2320 |

| Receive a target format for block-scaled data. | 2330 |

| Determine a maximum-valued or maximum-absolute-valued data element of the un-scaled data elements. | 2340 |

| Determine a scale factor for the maximum-valued or maximum-absolute-valued data element to divide the un-scaled data elements into a block-scaled element within the target format | 2350 |

FIG. 23

FIG. 24

EP 4 745 804 A2

**Server Computing Device 2515**

Processor 2513

Hardware Accelerator 2500

Memory 2514

Instructions 2521

Data 2523

**User Computing Device 2512**

Processor 2516

Memory 2517

Instructions 2518

Data 2519

User Input 2524

User Output 2526

2560

2530

**Datacenter 2520**

Hardware Accelerators 2530

2500

FIG. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63573148
- US 63659047
- US 63698670